(19) Europäisches Patentamt European Patent Office Office européen des brevets

(11) **EP 4 195 712 A1**

(12) **EUROPEAN PATENT APPLICATION**
published in accordance with Art. 153(4) EPC

(43) Date of publication:
**14.06.2023 Bulletin 2023/24**

(21) Application number: **21852656.4**

(22) Date of filing: **04.08.2021**

(51) International Patent Classification (IPC):
***H04W 4/06*** *(2009.01)*

(52) Cooperative Patent Classification (CPC):
**H04W 4/06; H04W 72/00; H04W 72/04**

(86) International application number:
**PCT/CN2021/110546**

(87) International publication number:
**WO 2022/028481 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2020 CN 202010785850**

(71) Applicants:
• **CHINA MOBILE COMMUNICATION CO., LTD. RESEARCH INSTITUTE**
**Beijing 100053 (CN)**

• **CHINA MOBILE COMMUNICATIONS GROUP CO., LTD.**
**Beijing 100032 (CN)**

(72) Inventor: **CHAI, Li**
**Beijing 100053 (CN)**

(74) Representative: **GPI Brevets**
**1330, rue Guillibert de la Lauzière**
**EuroParc de Pichaury**
**Bât B2**
**13856 Aix en Provence Cedex 3 (FR)**

(54) **INFORMATION COMMUNICATION, RECEPTION, CONFIGURATION, AND TRANSMISSION METHODS, RESOURCE CONFIGURATION METHOD, AND DEVICE**

(57) An information communication, receiving, configuration and sending method, a resource configuration method and device are provided, which belong to the field of wireless communication technology. The information communication method is applied to a network side and includes: sending a first DIC scrambled by a first RNTI to a terminal, the first DCI is used to indicate whether the control information of a Multicast service and/or broadcast service is changed or related information is changed; or, sending a second DCI scrambled by a second RNTI; the second DCI is used to indicate whether the control information of a Multicast service and/or broadcast service set is changed or related information is changed; the control information includes configuration information of the Multicast service and/or broadcast service. The embodiments of the present disclosure can accelerate the terminal to obtain MCCH modification information, obtain accurate Multicast and/or broadcast data more quickly, and meet the requirement of low delay, which is applied to 5G multi-application scenarios.

Sending a first DCI scrambled by a first RNTI to a terminal, the first DCI being used to indicate whether control information of a Multicast service and/or broadcast service is changed or related information is changed ⎯ 21

FIG. 2

**Description**

**CROSS-REFERENCE TO RELATED APPLICATION**

This application claims priorities of the Chinese patent application No. 202010785850.2 filed on August 6, 2020, which are incorporated herein by reference in their entireties.

**TECHNICAL FIELD**

The present disclosure relates to the field of wireless communication technology, in particular to an information communication, receiving, configuration and sending method, a resource configuration method and device.

**BACKGROUND**

Related technical requirements: specifying the basic functions of the radio access network (RAN) for broadcast/Multicast for terminals in the connected state (RRC CONNECTED).

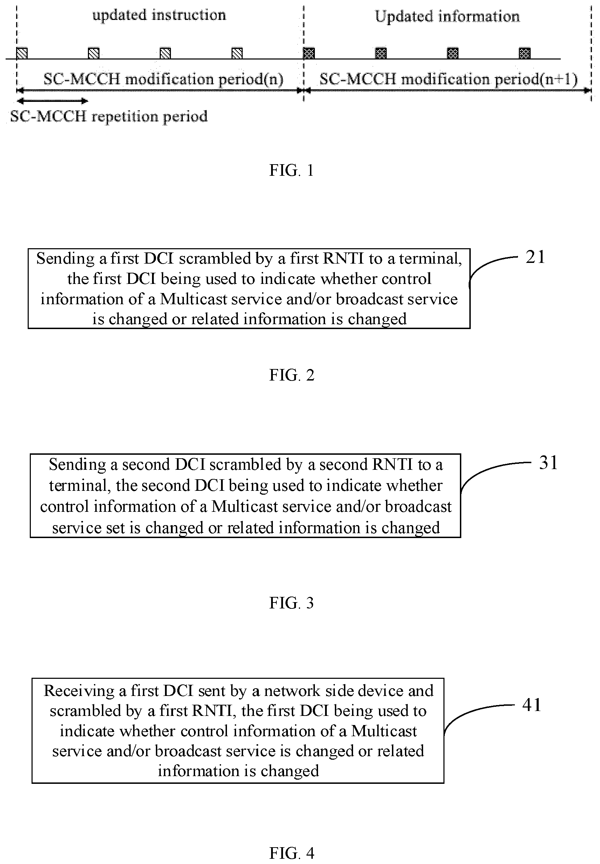

Referring to FIG. 1, the modification scheme of the Single Cell-Multicast Control Channel (SC-MCCH) in the related art is that, the entire MCCH information is periodically transmitted based on a "repetition period". "Modification period" is defined as an integer multiple of "repetition period". The terminal (UE) receives the MCCH update indication (Change notification) in the nth modification period, and then waits until the next modification period to read the change of MCCH information. This method of updating SC-MCCH information by utilizing the high-level RRC signaling notification period and modification period (tens of milliseconds) takes a long time, and the terminal obtains MCCH modification information slowly.

**SUMMARY**

An object of the present disclosure is to provide an information communication, receiving, configuration and sending method, a resource configuration method and device, so as to solve the problem that the method of updating SC-MCCH information by utilizing the high-level RRC signaling notification period and modification period (tens of milliseconds) takes a long time, and the terminal obtains MCCH modification information slowly.

In order to solve the above technical problem, in one aspect, the present disclosure provides in some embodiments an information communication method, applied to a network side device, including: sending a first downlink control information (DCI) scrambled by a first radio network temporary identifier (RNTI) to a terminal, the first DCI being used to indicate whether control information of a Multicast service and/or broadcast service is changed or related information is changed; or sending a second DCI scrambled by a second RNTI to the terminal, the second DCI being used to indicate whether the control information of a Multicast service and/or broadcast service set is changed or related information is changed; wherein the control information includes configuration information of the Multicast service and/or broadcast service.

In an embodiment of the present disclosure, the configuration information of the Multicast service and/or broadcast service includes at least one of the following: a Temporary Mobile Group Identity (TMGI) list; session ID corresponding to TMGI in the TMGI list; group RNTI corresponding to the TMGI in the TMGI list; bandwidth Part (BWP) corresponding to the TMGI in the TMGI list; subcarrier spacing corresponding to the TMGI in the TMGI list; a logical channel and/or logical channel group corresponding to the TMGI in the TMGI list; discontinuous Reception (DRX) configuration corresponding to the TMGI in the TMGI list; uplink resource configuration fed back by Hybrid Automatic Repeat reQuest (HARQ) corresponding to the TMGI in the TMGI list; uplink resource configuration reported by channel state information (CSI) corresponding to the TMGI in the TMGI list.

In an embodiment of the present disclosure, the first DCI is used to indicate at least one of the following: the control information of the Multicast service and/or broadcast service having been changed; whether the control information of the Multicast service and/or broadcast service has been changed; changed control information of the Multicast service and/or broadcast service; a type of the changed control information of the Multicast service and/or broadcast service; resource information of acquiring the changed control information of the Multicast service and/or broadcast service.

In an embodiment of the present disclosure, when the first DCI is used to indicate that the control information of the Multicast service and/or broadcast service has been changed, the first DCI is also used to indicate at least one of the following: the configuration information of the Multicast service and/or broadcast service having being changed; a transmission mode of the Multicast service and/or broadcast service being changed from a single cell point-to-multipoint transmission mode to a multi cell point-to-multipoint transmission mode; the transmission mode of the Multicast service and/or broadcast service being changed from the multi cell point-to-multipoint transmission mode to the single cell point-to-multipoint transmission mode; the transmission mode of the Multicast service and/or broadcast service being changed from a point-to-multipoint transmission mode to a point-to-point transmission mode; the transmission mode of the Multicast service and/or broadcast service being changed from the point-to-point transmission mode to the point-to-multipoint transmission mode; a Multicast or broadcast service whose control information have been changed; adding a new set of Multicast service and/or broadcast services; removing a set of existing Multicast service and/or broadcast services; modification of a set of existing Multicast service and/or broadcast services; turning Off or On HARQ feedback of the Multicast service and/or broadcast service; turning On or Off CSI feedback of the Multicast service and/or broadcast service.

In an embodiment of the present disclosure, the first DCI is used to indicate at least one of the following: the configuration information of the Multicast service and/or broadcast service having being changed; a transmission mode of the Multicast service and/or broadcast service being changed from a single cell point-to-multipoint transmission mode to a multi cell point-to-multipoint transmission mode; the transmission mode of the Multicast service and/or broadcast service being changed from the multi cell point-to-multipoint transmission mode to the single cell point-to-multipoint transmission mode; the transmission mode of the Multicast service and/or broadcast service being changed from a point-to-multipoint transmission mode to a point-to-point transmission mode; the transmission mode of the Multicast service and/or broadcast service being changed from the point-to-point transmission mode to the point-to-multipoint transmission mode; a Multicast or broadcast service whose control information have been changed; adding a new set of Multicast service and/or broadcast services; removing a set of existing Multicast service and/or broadcast services; modification of a set of existing Multicast service and/or broadcast services; turning Off or On HARQ feedback of the Multicast service and/or broadcast service; turning On or Off CSI feedback of the Multicast service and/or broadcast service.

In an embodiment of the present disclosure, the Multicast service and/or broadcast service set is a set of some or all Multicast services and/or broadcast services in a cell; and/or, the Multicast service and/or broadcast service set is a set of some or all Multicast services and/or broadcast services in a Multicast area and/or broadcast area.

In an embodiment of the present disclosure, the second DCI is used to indicate at least one of the following: the control information of theMulticast service and/or broadcast service set having been changed; whether the control information of the Multicast service and/or broadcast service set has been changed; changed control information of the Multicast service and/or broadcast service set; a type of the changed control information of the Multicast service and/or broadcast service set; resource information of acquiring the changed control information of the Multicast service and/or broadcast service set.

In an embodiment of the present disclosure, when the second DCI is used to indicate that the control information of the Multicast service and/or broadcast service set has been changed, the second DCI is also used to indicate at least one of the following: the configuration information of the Multicast service and/or broadcast service set having being changed; a transmission mode of the Multicast service and/or broadcast service set being changed from a single cell point-to-multipoint transmission mode to a multi cell point-to-multipoint transmission mode; the transmission mode of the Multicast service and/or broadcast service set being changed from the multi cell point-to-multipoint transmission mode to the single cell point-to-multipoint transmission mode; the transmission mode of the Multicast service and/or broadcast service set being changed from a point-to-multipoint transmission mode to a point-to-point transmission mode; the transmission mode of the Multicast service and/or broadcast service set being changed from the point-to-point transmission mode to the point-to-multipoint transmission mode; Multicast or broadcast services where the control information of the Multicast service and/or broadcast service set has been changed; adding a new set of Multicast service and/or broadcast services; removing a set of existing Multicast service and/or broadcast services; modification of a set of existing Multicast service and/or broadcast services; turning Off or On HARQ feedback of the Multicast service and/or broadcast service set; turning On or Off CSI feedback of the Multicast service and/or broadcast service set.

In an embodiment of the present disclosure, the second DCI is used to indicate at least one of the following: the configuration information of the Multicast service and/or broadcast service set having being changed; a transmission mode of the Multicast service and/or broadcast service set being changed from a single cell point-to-multipoint transmission mode to a multi cell point-to-multipoint transmission mode; the transmission mode of the Multicast service and/or broadcast service set being changed from the multi cell point-to-multipoint transmission mode to the single cell point-to-multipoint transmission mode; the transmission mode of the Multicast service and/or broadcast service set being changed from a point-to-multipoint transmission mode to a point-to-point transmission mode; the transmission mode of the Multicast service and/or broadcast service set being changed from the point-to-point transmission mode to the point-to-multipoint transmission mode; Multicast or broadcast services where the control information of the Multicast service and/or broadcast service set has been changed; adding a new set of Multicast service and/or broadcast services; removing a set of existing Multicast service and/or broadcast services; modification of a set of existing Multicast service and/or broadcast services; turning Off or On HARQ feedback of the Multicast service and/or broadcast service set; turning On or Off CSI feedback of the Multicast service and/or broadcast service set; identification information of changed Multicast services and/or broadcast services in the Multicast service and/or broadcast service set.

In an embodiment of the present disclosure, after sending a first DCI scrambled by a first RNTI to a terminal, the method further comprises: the first DCI including information for indicating that the control information of the Multicast service and/or the broadcast service has been changed, and/or in a case that a control information resource for indicating the Multicast service and/or broadcast service carries change information, sending the change information of the control information of the Multicast service and/or broadcast service.

In an embodiment of the present disclosure, the method further includes: broadcasting control information of each Multicast service and/or broadcast service among control information of a plurality of Multicast services and/or broadcast services; or, broadcasting control information of a first Multicast service and/or broadcast service among the control information of the plurality of Multicast services and/or broadcast services, and control information of other Multicast services and/or broadcast services among the control information of the plurality of Multicast services and/or broadcast services being the same as the control information of the first Multicast service and/or broadcast service; wherein, the control information includes at least one of a repetition period, an offset, an initial subframe or a modification period.

An embodiment of the present disclosure provides an information communication method, which is applied to a terminal and includes: receiving a first DCI sent by a network side device and scrambled by a first RNTI, the first DCI being used to indicate whether the control information of one Multicast service and/or broadcast service is changed or related information is changed; or receiving a second DCI sent by the network side device and scrambled by a second RNTI, the second DCI is used to indicate whether the control information of a Multicast service and/or broadcast service set is changed or related information is changed; wherein the control information includes configuration information of the Multicast service and/or broadcast service.

In an embodiment of the present disclosure, the configuration information of the Multicast service and/or broadcast service includes at least one of the following: a TMGI list; session ID corresponding to TMGI in the TMGI list; group RNTI corresponding to the TMGI in the TMGI list; bandwidth Part (BWP) corresponding to the TMGI in the TMGI list; subcarrier spacing corresponding to the TMGI in the TMGI list; a logical channel and/or logical channel group corresponding to the TMGI in the TMGI list; discontinuous Reception (DRX) configuration corresponding to the TMGI in the TMGI list; uplink resource configuration fed back by Hybrid Automatic Repeat reQuest (HARQ) corresponding to the TMGI in the TMGI list; uplink resource configuration reported by channel state information (CSI) corresponding to the TMGI in the TMGI list.

In an embodiment of the present disclosure, the first DCI is used to indicate at least one of the following: the control information of the Multicast service and/or broadcast service having been changed; whether the control information of the Multicast service and/or broadcast service has been changed; changed control information of the Multicast service and/or broadcast service; a type of the changed control information of the Multicast service and/or broadcast service; resource information of acquiring the changed control information of the Multicast service and/or broadcast service.

In an embodiment of the present disclosure, when the first DCI is used to indicate that the control information of the Multicast service and/or broadcast service has been changed, the first DCI is also used to indicate at least one of the following: the configuration information of the Multicast service and/or broadcast service having being changed; a transmission mode of the Multicast service and/or broadcast service being changed from a single cell point-to-multipoint transmission mode to a multi cell point-to-multipoint transmission mode; the transmission mode of the Multicast service and/or broadcast service being changed from the multi cell point-to-multipoint transmission mode to the single cell point-to-multipoint transmission mode; the transmission mode of the Multicast service and/or broadcast service being changed from a point-to-multipoint transmission mode to a point-to-point transmission mode; the transmission mode of the Multicast service and/or broadcast service being changed from the point-to-point transmission mode to the point-to-multipoint transmission mode; a Multicast or broadcast service whose control information have been changed; adding a new set of Multicast service and/or broadcast services; removing a set of existing Multicast service and/or broadcast services; modification of a set of existing Multicast service and/or broadcast services; turning Off or On HARQ feedback of the Multicast service and/or broadcast service; turning On or Off CSI feedback of the Multicast service and/or broadcast service.

In an embodiment of the present disclosure, the first DCI is used to indicate at least one of the following: the configuration information of the Multicast service and/or broadcast service having being changed; a transmission mode of the Multicast service and/or broadcast service being changed from a single cell point-to-multipoint transmission mode to a multi cell point-to-multipoint transmission mode; the transmission mode of the Multicast service and/or broadcast service being changed from the multi cell point-to-multipoint transmission mode to the single cell point-to-multipoint transmission mode; the transmission mode of the Multicast service and/or broadcast service being changed from a point-to-multipoint transmission mode to a point-to-point transmission mode; the transmission mode of the Multicast service and/or broadcast service being changed from the point-to-point transmission mode to the point-to-multipoint transmission mode; a Multicast or broadcast service whose control information have been changed; adding a new set of Multicast service and/or broadcast services; removing a set of existing Multicast service and/or broadcast services; modification of a set of existing Multicast service and/or broadcast services; turning Off or On HARQ feedback of the Multicast service and/or broadcast service; turning On or Off CSI feedback of the Multicast service and/or broadcast service.

In an embodiment of the present disclosure, the Multicast service and/or broadcast service set is a set of part or all Multicast services and/or broadcast services in a cell; and/or, the Multicast service and/or broadcast service set is a set of part or all Multicast services and/or broadcast services in one Multicast area and/or broadcast area.

In an embodiment of the present disclosure, the second DCI is used to indicate at least one of the following: the control information of the Multicast service and/or broadcast service set having been changed; whether the control information of the Multicast service and/or broadcast service set has been changed; changed control information of the Multicast service and/or broadcast service set; a type of the changed control information of the Multicast service and/or broadcast service set; resource information of acquiring the changed control information of the Multicast service and/or broadcast service set.

In an embodiment of the present disclosure, when the second DCI is used to indicate that the control information of the Multicast service and/or broadcast service set has been changed, the second DCI is also used to indicate at least one of the following: the configuration information of the Multicast service and/or broadcast service set having being changed; a transmission mode of the Multicast service and/or broadcast service set being changed from a single cell point-to-multipoint transmission mode to a multi cell point-to-multipoint transmission mode; the transmission mode of the Multicast service and/or broadcast service set being changed from the multi cell point-to-multipoint transmission mode to the single cell point-to-multipoint transmission mode; the transmission mode of the Multicast service and/or broadcast service set being changed from a point-to-multipoint transmission mode to a point-to-point transmission mode; the transmission mode of the Multicast service and/or broadcast service set being changed from the point-to-point transmission mode to the point-to-multipoint transmission mode; Multicast or broadcast services where the control information of the Multicast service and/or broadcast service set has been changed; adding a new set of Multicast service and/or broadcast services; removing a set of existing Multicast service and/or broadcast services; modification of a set of existing Multicast service and/or broadcast services; turning Off or On HARQ feedback of the Multicast service and/or broadcast service set; turning On or Off CSI feedback of the Multicast service and/or broadcast service set.

In an embodiment of the present disclosure, the second DCI is used to indicate at least one of the following: the configuration information of the Multicast service and/or broadcast service set having being changed; a transmission mode of the Multicast service and/or broadcast service set being changed from a single cell point-to-multipoint transmission mode to a multi cell point-to-multipoint transmission mode; the transmission mode of the Multicast service and/or broadcast service set being changed from the multi cell point-to-multipoint transmission mode to the single cell point-to-multipoint transmission mode; the transmission mode of the Multicast service and/or broadcast service set being changed from a point-to-multipoint transmission mode to a point-to-point transmission mode; the transmission mode of the Multicast service and/or broadcast service set being changed from the point-to-point transmission mode to the point-to-multipoint transmission mode; Multicast or broadcast services where the control information of the Multicast service and/or broadcast service set has been changed; adding a new set of Multicast service and/or broadcast services; removing a set of existing Multicast service and/or broadcast services; modification of a set of existing Multicast service and/or broadcast services; turning Off or On HARQ feedback of the Multicast service and/or broadcast service set; turning On or Off CSI feedback of the Multicast service and/or broadcast service set; identification information of changed Multicast services and/or broadcast services in the Multicast service and/or broadcast service set.

In an embodiment of the present disclosure, after receiving a first DCI scrambled by a first RNTI sent by a network side device, the further comprises: the first DCI including information for indicating that the control information of the Multicast service and/or the broadcast service has been changed, and/or: in a case that the control information resource for indicating the Multicast service and/or broadcast service carries change information, receiving the change information of the control information of the Multicast service and/or broadcast service.

An embodiment of the present disclosure provides an information configuration method, which is applied to a network side device and includes: configuring control information of a set of Multicast services and/or broadcast services for m Multicast services and/or broadcast services; in a cell where the m Multicast services and/or broadcast services are located, n Multicast services and/or broadcast services being in a Multicast area and/or broadcast area; the n Multicast services and/or broadcast services being configured with control information of k sets of Multicast services and/or broadcast services; wherein m, n, k are natural numbers greater than or equal to 1, m is less than or equal to n, and k is less than or equal to n.

In an embodiment of the present disclosure, the method further includes: configuring at least one of a repetition period, a modification period, and an initial offset for the sending of the control information of the k sets of Multicast services and/or broadcast services; at least one of the repetition period, the modification period, and the initial offset of the control information of the k sets of Multicast services and/or broadcast services being the same or different.

In an embodiment of the present disclosure, the method further includes: in the repetition period of the control information of the Multicast service and/or broadcast service, sending control information of n Multicast services and/or broadcast services to the terminal at intervals of t time domain units, wherein n and t are positive integers.

In an embodiment of the present disclosure, in the repetition period of the control information of the Multicast service and/or broadcast service, the sending control information of n Multicast services and/or broadcast services to the terminal at intervals of t time domain units further includes: sending first information to the terminal, wherein the first information is used to indicate a first sending time, the first sending time is sending time of the control information of the n Multicast services and/or broadcast services in a corresponding time domain unit.

In an embodiment of the present disclosure, the first information includes at least one of the following: information for indicating a start time of the first sending time; information for indicating a duration of the first sending time; information for indicating a first offset, wherein the first offset is an offset between the first sending time and a position of RMSI of SSB.

An embodiment of the present disclosure provides an information receiving method, which is applied to a terminal and includes: determining monitoring occasion of physical downlink control channel (PDCCH) of one or more Multicast messages; and receiving Multicast information at the monitoring occasion of the PDCCH of the one or more Multicast messages; wherein, the monitoring occasion of the PDCCH of one Multicast message includes at least one slot; wherein, each slot included in the monitoring occasion of the PDCCH of one Multicast message includes at least one time symbol; wherein, the Multicast information includes at least one of the following: DCI of a network scheduling Multicast service; DCI of configuration information of the network scheduling Multicast service; DCI of information of a control channel of the Multicast service; DCI of information of a control channel of the network scheduling Multicast service; DCI of scheduling information of the information of the control channel of the Multicast service; DCI of modification information of the control channel of the network scheduling Multicast service; DCI of the modification information of the control channel of the Multicast service; DCI of scheduling information of the modification information of the control channel of the Multicast service.

In an embodiment of the present disclosure, the determining monitoring occasion of PDCCH of one or more Multicast messages comprises: determining the monitoring occasion of the PDCCH of the Multicast message according to a search space of the Multicast message or a search space set of the Multicast message; determining the search space of the Multicast message by at least one of the following methods: a LTE reading information of a common search space set of an Nth type of PDCCH configured by the search space used for the Multicast message in PDCCH common configuration configured by a network through an RRC message; wherein, the common search space is used for a DCI format scrambled by a Multicast-RNTI with Cyclic redundancy check (CRC) on a primary cell; the UE reading a search space identified as a common type in PDCCH dedicated configuration configured in the RRC message, and the search space being used for the DCI format scrambling by the Multicast-RNTI with CRC on the primary cell; if the UE does not find that the RRC message is configured with the information of the common search space set of the Nth type of PDCCH used for the search space configuration of the Multicast message, an association relationship between the PDCCH monitoring occasion for the Nth type of PDCCH common search space set and an SSB block index being the same as an association relationship between the PDCCH monitoring occasion for the Nth type of PDCCH common search space set and the PDCCH monitoring occasion of the PDCCH common search space of type 0; finding out a CCE aggregation level in the common search space set of the Nth type of PDCCH and a number of PDCCH candidates in each CCE aggregation level by a look-up table; wherein, the information of the common search space set of the Nth type of PDCCH, and/or the information of the search space identified as the common type, includes at least one of the following information: a search space label; first indication information for indicating a first time symbol in a control resource set in one slot of a PDCCH monitoring occasion for the Multicast message; second indication information for indicating a monitoring period and a time offset at the PDCCH monitoring occasion for the Multicast message; third indication information for indicating an initial symbol and/or duration in a monitoring period of the PDCCH monitoring occasion for the Multicast message; fourth indication information for indicating a monitoring slot and/or monitoring time symbol of the PDCCH monitoring occasion for the Multicast message in a bitmap form; fifth indication information for indicating a monitoring time symbol in one slot of the PDCCH monitoring occasion for the Multicast message in the bitmap form; sixth indication information for indicating the initial symbol and/or duration of one slot at the PDCCH monitoring occasion for the Multicast message; seventh indication information for indicating an index of a control resource set associated with the search space.

In an embodiment of the present disclosure, the monitoring occasion of PDCCH of one or more Multicast messages constitutes one Multicast message occasion.

In an embodiment of the present disclosure, the method further includes: determining a Multicast scheduling radio frame (MF), wherein MF is a system frame that includes MOs or a starting point of MOs of one or more Multicast services.

In an embodiment of the present disclosure, the method includes: selecting one or more beams for receiving Multicast scheduling information.

In an embodiment of the present disclosure, the occasion of one Multicast message is monitoring occasion of PDCCH of Y Multicast messages, wherein Y is determined according to a number of SSBs actually transmitted in a cell.

In an embodiment of the present disclosure, the occasion of one Multicast message being the monitoring occasion of the PDCCH of a group of Multicast messages, including: a Z-th PDCCH monitoring occasion used in occasions of the Multicast message corresponding to a Z-th transmitted SSB, wherein Z is a positive integer.

An embodiment of the present disclosure provides an information sending method, which applied to a network side device, and includes: sending Multicast information at monitoring occasion of PDCCH of one or more Multicast messages; wherein the monitoring occasion of the PDCCH of one Multicast message includes at least one slot; wherein, each slot included in the monitoring occasion of the PDCCH of one Multicast message includes at least one time symbol; wherein, the Multicast information includes at least one of the following: DCI of a network scheduling Multicast service; DCI of configuration information of the network scheduling Multicast service; DCI of information of a control channel of the Multicast service; DCI of information of a control channel of the network scheduling Multicast service; DCI of scheduling information of the information of the control channel of the Multicast service; DCI of modification information of the control channel of the network scheduling Multicast service; DCI of the modification information of the control channel of the Multicast service; DCI of scheduling information of the modification information of the control channel of the Multicast service.

In an embodiment of the present disclosure, the sending Multicast information at monitoring occasion of PDCCH of one or more Multicast messages comprises: associating the monitoring occasion of the PDCCH of the Multicast message with a search space of a corresponding Multicast message or a search space set of the Multicast message; configuring the search space for Multicast messages by at least one of the following methods: information of a common search space set of an Nth type of PDCCH configured by the search space used for the Multicast message in PDCCH common configuration configured through an RRC message; wherein the common search space is used for a DCI format scrambled by a Multicast-RNTI with Cyclic redundancy check (CRC) on a primary cell; a search space identified as a common type in PDCCH dedicated configuration configured through the RRC message, and the search space being used for the DCI format scrambling by the Multicast-RNTI with CRC on the primary cell; wherein, the information of the common search space set of the Nth type of PDCCH, and/or the information of the search space identified as the common type, includes at least one of the following information: a search space label; first indication information for indicating a first time symbol in a control resource set in one slot of a PDCCH monitoring occasion for the Multicast message; second indication information for indicating a monitoring period and a time offset at the PDCCH monitoring occasion for the Multicast message; third indication information for indicating an initial symbol and/or duration in a monitoring period of the PDCCH monitoring occasion for the Multicast message; fourth indication information for indicating a monitoring slot and/or monitoring time symbol of the PDCCH monitoring occasion for the Multicast message in a bitmap form; fifth indication information for indicating a monitoring time symbol in one slot of the PDCCH monitoring occasion for the Multicast message in the bitmap form; sixth indication information for indicating the initial symbol and/or duration of one slot at the PDCCH monitoring occasion for the Multicast message; seventh indication information for indicating an index of a control resource set associated with the search space.

In an embodiment of the present disclosure, the monitoring occasion of PDCCH of one or more Multicast messages constitutes one Multicast message occasion. In an embodiment of the present disclosure, the method further includes: determining a Multicast scheduling radio frame (MF), wherein MF is a system frame that includes MOs or a starting point of MOs of one or more Multicast services.

In an embodiment of the present disclosure, the method includes: selecting one or more beams for sending Multicast scheduling information.

In an embodiment of the present disclosure, the occasion of one Multicast message is monitoring occasion of PDCCHs of Y Multicast messages, wherein Y is determined according to a number of SSBs actually transmitted in a cell.

In an embodiment of the present disclosure, the occasion of one Multicast message being the monitoring occasion of the PDCCH of a group of Multicast messages, including: a Z-th PDCCH monitoring occasion used in occasion of the Multicast message corresponding to a Z-th transmitted SSB, wherein Z is a positive integer.

An embodiment of the present disclosure provides an information sending method, which is applied to a network side device and includes: in a repetition period of control information of a Multicast service and/or broadcast service, sending control information of n Multicast services and/or broadcast services to a terminal at intervals of t time domain units, wherein n and t are positive integers.

In an embodiment of the present disclosure, in a repetition period of control information of a Multicast service and/or broadcast service, before sending control information of n Multicast services and/or broadcast services to a terminal at intervals of t time domain units, the method further includes: sending first information to the terminal, wherein the first information is used to indicate a first sending time, the first sending time is a sending time of the control information of the n Multicast services and/or broadcast services in a corresponding time domain unit.

In an embodiment of the present disclosure, the first information includes at least one of the following: information for indicating an initial time of the first sending time; information for indicating a duration of the first sending time; information for indicating a first offset, wherein the first offset is an offset between the first sending time and a position of RMSI of SSB.

An embodiment of the present disclosure provides an information receiving method, which is applied to a terminal, and inclues: receiving control information of n Multicast services and/or broadcast services sent by a network side device at intervals of t time domain units in a repetition period of control information of a Multicast service and/or broadcast service, wherein n and t are positive integers.

In an embodiment of the present disclosure, the receiving control information of n Multicast services and/or broadcast services sent by a network side device at intervals of t time domain units in a repetition period of control information of a Multicast service and/or broadcast service includes: obtaining a time domain unit corresponding to the control information of the Multicast service and/or broadcast service within the repetition period; monitoring control information of a corresponding Multicast service and/or broadcast service in the time domain unit.

In an embodiment of the present disclosure, the time domain unit is calculated according to the following formula: SFN mod sc-mcch-RepetitionPeriod = sc-mcch-Offset + (sc-mcch-RepetitionPeriod) divided by

$$(M/n)*(\lceil Multicast\_ID /n \rceil - 1);$$ wherein SFN is a serial number of the time domain unit corresponding to the control information of the first Multicast service and/or broadcast service, sc-mcch-RepetitionPeriod is a size of the repetition period, and sc-mcch-Offset is an offset of an initial time domain unit of the first repetition period, M is a total number of the control information of the Multicast service and/or broadcast service sent within the repetition period, and the Multicast_ID is a serial number of the Multicast service and/or broadcast service, the Multicast_ID is determined according to a sending sequence of the control information of the Multicast service and/or broadcast service within the repetition period.

In an embodiment of the present disclosure, the receiving control information of n Multicast services and/or broadcast services sent by a network side device at intervals of t time domain units in a repetition period of control information of a Multicast service and/or broadcast service includes: receiving first information sent by the network side device, wherein the first information is used to indicate a second sending time, and the second sending time is a sending time of the control information of the n Multicast services and/or broadcast services in a corresponding time domain unit; receiving the control information of the n Multicast services and/or broadcast services at the second sending time.

In an embodiment of the present disclosure, the first information includes at least one of the following information: information for indicating a start time of the second sending time; information for indicating a duration of the second sending time; information for indicating a first offset, wherein the first offset is an offset between the second sending time and a position of RMSI of SSB.

An embodiment of the present disclosure provides a resource configuration method, which is applied to a network side device, and includes: sending configuration information to a terminal, wherein the configuration information is used to indicate first symbol information and/or second symbol information in one slot, a first symbol is a symbol used to send unicast information, and a second symbol is a symbol used to send Multicast information and/or broadcast information; the first symbol information includes a number of time symbols and/or a number of PRBs occupied by the first symbol; the second symbol information includes a number of time symbols and/or the number of PRBs occupied by the second symbol.

In an embodiment of the present disclosure, the configuration information is also used to indicate that a column of reference signals are inserted for every y symbols in the slot; and/or, the configuration information is also used to indicate that one reference signal is inserted for every x subcarriers in a frequency domain corresponding to the slot, wherein, x and y are positive integers, x is determined according to subcarrier spacing, and y is determined according to the subcarrier spacing; wherein the reference signal is a reference signal for Multicast and/or broadcast.

An embodiment of the present disclosure provides a resource allocation method, which is applied to a terminal, and includes: receiving configuration information sent by a network side device, wherein the configuration information is used to indicate first symbol information and/or second symbol information in one slot, a first symbol is a symbol used to send unicast information, and a second symbol is a symbol used to send Multicast information and/or broadcast information; the first symbol information includes a number of time symbols and/or a number of PRBs occupied by the first symbol; the second symbol information includes a number of time symbols and/or a number of PRBs occupied by the second symbol.

In an embodiment of the present disclosure, the configuration information is also used to indicate that a column of reference signals are inserted for every y symbols in the slot; and/or, the configuration information is also used to indicate that a reference signal is inserted for every x subcarriers in a frequency domain corresponding to the slot, x and y are positive integers, x is determined according to subcarrier spacing, and y is determined according to the subcarrier spacing.

An embodiment of the present disclosure provides an information measurement method, which is applied to a terminal, and includes: receiving resource configuration information sent by a network side device, wherein the resource configuration information is resource configuration information of a Multicast service and/or broadcast service of a neighboringcell; measuring or not measure a resource corresponding to the resource configuration information.

In an embodiment of the present disclosure, the measuring or not measuring a resource corresponding to the resource configuration information comprises: if the terminal only has a unicast service, not measuring the resource corresponding to the resource configuration information; if the terminal only has a Multicast service and/or broadcast service, measuring the resource corresponding to the resource configuration information; if the terminal has a unicast service and a Multicast service and/or a broadcast service, measuring the resource corresponding to the resource configuration information.

An embodiment of the present disclosure provides a network side device, includes: a first DCI sending module, configured to send a first downlink control information (DCI) scrambled by a first radio network temporary identifier (RNTI) to a terminal, the first DCI being used to indicate whether control information of a Multicast service and/or broadcast service is changed or related information is changed; or a second DCI sending module, configured to send a second DCI scrambled by a second RNTI to the terminal, the second DCI being used to indicate whether the control information of a Multicast service and/or broadcast service set is changed or related information is changed; wherein the control information includes configuration information of the Multicast service and/or broadcast service.

An embodiment of the present disclosure provides a terminal, includes: a first DCI receiving module, configured to receive a first DCI sent by a network side device and scrambled by a first RNTI, the first DCI being used to indicate whether the control information of one Multicast service and/or broadcast service is changed or related information is changed; or: a second DCI receiving module, configured to receive a second DCI sent by the network side device and scrambled by a second RNTI, the second DCI is used to indicate whether the control information of a Multicast service and/or broadcast service set is changed or related information is changed; wherein the control information includes configuration information of the Multicast service and/or broadcast service.

An embodiment of the present disclosure provides a network side device, including: a control information configuration module, configured to configure control information of a set of Multicast services and/or broadcast services for m Multicast services and/or broadcast services; in a cell where the m Multicast services and/or broadcast services are located, n Multicast services and/or broadcast services being in a Multicast area and/or broadcast area; the n Multicast services and/or broadcast services being configured with control information of k sets of Multicast services and/or broadcast services; wherein m, n, k are natural numbers greater than or equal to 1, m is less than or equal to n, and k is less than or equal to n.

An embodiment of the present disclosure provides a terminal, including: a receiving occasion determination module, configured to determine monitoring occasion of physical downlink control channel (PDCCH) of one or more Multicast messages; an information receiving module, configured to receive Multicast information at the monitoring occasion of the PDCCH of the one or more Multicast messages; wherein, the monitoring occasion of the PDCCH of one Multicast message includes at least one slot; wherein, each slot included in the monitoring occasion of the PDCCH of one Multicast message includes at least one time symbol; wherein, the Multicast information includes at least one of the following: DCI of a network scheduling Multicast service; DCI of configuration information of the network scheduling Multicast service; DCI of information of a control channel of the Multicast service; DCI of information of a control channel of the network scheduling Multicast service; DCI of scheduling information of the information of the control channel of the Multicast service; DCI of modification information of the control channel of the network scheduling Multicast service; DCI of the modification information of the control channel of the Multicast service; DCI of scheduling information of the modification information of the control channel of the Multicast service.

An embodiment of the present disclosure provides a network side device, including: a Multicast information sending module, configured to send Multicast information at monitoring occasion of PDCCH of one or more Multicast messages; wherein the monitoring occasion of the PDCCH of one Multicast message includes at least one slot; wherein, each slot included in the monitoring occasion of the PDCCH of one Multicast message includes at least one time symbol; wherein, the Multicast information includes at least one of the following: DCI of a network scheduling Multicast service; DCI of configuration information of the network scheduling Multicast service; DCI of information of a control channel of the Multicast service; DCI of information of a control channel of the network scheduling Multicast service; DCI of scheduling information of the information of the control channel of the Multicast service; DCI of modification information of the control channel of the network scheduling Multicast service; DCI of the modification information of the control channel of the Multicast service; DCI of scheduling information of the modification information of the control channel of the Multicast service.

An embodiment of the present disclosure provides a network side device, including: a control information sending module, configured to, in a repetition period of control information of a Multicast service and/or broadcast service, send control information of n Multicast services and/or broadcast services to a terminal at intervals of t time domain units, wherein n and t are positive integers.

An embodiment of the present disclosure provides a terminal, including: a control information receiving module, configured to receive control information of n Multicast services and/or broadcast services sent by a network side device at intervals of t time domain units in a repetition period of control information of a Multicast service and/or broadcast service, wherein n and t are positive integers.

An embodiment of the present disclosure provides a network side device, comprising: a configuration information sending module, configured to send configuration information to a terminal, wherein the configuration information is used to indicate first symbol information and/or second symbol information in one slot, a first symbol is a symbol used to send unicast information, and a second symbol is a symbol used to send Multicast information and/or broadcast information; the first symbol information includes a number of time symbols and/or a number of PRBs occupied by the first symbol; the second symbol information includes a number of time symbols and/or the number of PRBs occupied by the second symbol.

An embodiment of the present disclosure provides a terminal, including: a configuration information receiving module, configured to receive configuration information sent by a network side device, wherein the configuration information is used to indicate first symbol information and/or second symbol information in one slot, a first symbol is a symbol used to send unicast information, and a second symbol is a symbol used to send Multicast information and/or broadcast information; the first symbol information includes a number of time symbols and/or a number of PRBs occupied by the first symbol; the second symbol information includes a number of time symbols and/or a number of PRBs occupied by the second symbol.

An embodiment of the present disclosure provides a terminal, including: a resource configuration information receiving module, configured to receive resource configuration information sent by a network side device, wherein the resource configuration information is resource configuration information of a Multicast service and/or broadcast service of a neighboring cell; a measuring module, configured to measure or not measure a resource corresponding to the resource configuration information.

An embodiment of the present disclosure provides a network side device, comprising: a transceiver and a processor; the transceiver is configured to send a first downlink control information (DCI) scrambled by a first radio network temporary identifier (RNTI) to a terminal, the first DCI being used to indicate whether control information of a Multicast service and/or broadcast service is changed or related information is changed; or: the transceiver is configured to send a second DCI scrambled by a second RNTI to the terminal, the second DCI being used to indicate whether the control information of a Multicast service and/or broadcast service set is changed or related information is changed; wherein the control information includes configuration information of the Multicast service and/or broadcast service.

An embodiment of the present disclosure provides a terminal, comprising: a transceiver and a processor; the transceiver is configured to receive a first DCI sent by a network side device and scrambled by a first RNTI, the first DCI being used to indicate whether the control information of one Multicast service and/or broadcast service is changed or related information is changed;or: the transceiver is configured to receive a second DCI sent by the network side device and scrambled by a second RNTI, the second DCI is used to indicate whether the control information of a Multicast service and/or broadcast service set is changed or related information is changed; wherein the control information includes configuration information of the Multicast service and/or broadcast service.

An embodiment of the present disclosure provides a network side device, comprising: a transceiver and a processor; the processor is configured to configure control information of a set of Multicast services and/or broadcast services for m Multicast services and/or broadcast services; in a cell where the m Multicast services and/or broadcast services are located, n Multicast services and/or broadcast services being in a Multicast area and/or broadcast area; the n Multicast services and/or broadcast services being configured with control information of k sets of Multicast services and/or broadcast services; wherein m, n, k are natural numbers greater than or equal to 1, m is less than or equal to n, and k is less than or equal to n.

An embodiment of the present disclosure provides a terminal, comprising: a transceiver and a processor; the processor is configured to determine monitoring occasion of physical downlink control channel (PDCCH) of one or more Multicast messages; the transceiver is configured to receive Multicast information at the monitoring occasion of the PDCCH of the one or more Multicast messages; wherein, the monitoring occasion of the PDCCH of one Multicast message includes at least one slot; wherein, each slot included in the monitoring occasion of the PDCCH of one Multicast message includes at least one time symbol; wherein, the Multicast information includes at least one of the following: DCI of a network scheduling Multicast service; DCI of configuration information of the network scheduling Multicast service; DCI of information of a control channel of the Multicast service; DCI of information of a control channel of the network scheduling Multicast service; DCI of scheduling information of the information of the control channel of the Multicast service; DCI of modification information of the control channel of the network scheduling Multicast service; DCI of the modification information of the control channel of the Multicast service; DCI of scheduling information of the modification information of the control channel of the Multicast service.

An embodiment of the present disclosure provides a network side device, comprising: a transceiver and a processor; the transceiver is configured to send Multicast information at monitoring occasion of PDCCH of one or more Multicast messages; wherein the monitoring occasion of the PDCCH of one Multicast message includes at least one slot; wherein, each slot included in the monitoring occasion of the PDCCH of one Multicast message includes at least one time symbol; wherein, the Multicast information includes at least one of the following: DCI of a network scheduling Multicast service; DCI of configuration information of the network scheduling Multicast service; DCI of information of a control channel of the Multicast service; DCI of information of a control channel of the network scheduling Multicast service; DCI of scheduling information of the information of the control channel of the Multicast service; DCI of modification information of the control channel of the network scheduling Multicast service; DCI of the modification information of the control channel of the Multicast service; DCI of scheduling information of the modification information of the control channel of the Multicast service.

An embodiment of the present disclosure provides a network side device, comprising: a transceiver and a processor; the transceiver is configured to, in a repetition period of control information of a Multicast service and/or broadcast service, send control information of n Multicast services and/or broadcast services to a terminal at intervals of t time domain units, wherein n and t are positive integers.

An embodiment of the present disclosure provides a terminal, comprising: a transceiver and a processor; the transceiver is configured to receive control information of n Multicast services and/or broadcast services sent by a network side device at intervals of t time domain units in a repetition period of control information of a Multicast service and/or broadcast service, wherein n and t are positive integers.

An embodiment of the present disclosure provides a network side device, comprising: a transceiver and a processor; the transceiver is configured to send configuration information to a terminal, wherein the configuration information is used to indicate first symbol information and/or second symbol information in one slot, a first symbol is a symbol used to send unicast information, and a second symbol is a symbol used to send Multicast information and/or broadcast information; the first symbol information includes a number of time symbols and/or a number of PRBs occupied by the first symbol; the second symbol information includes a number of time symbols and/or the number of PRBs occupied by the second symbol. An embodiment of the present disclosure provides a terminal, comprising: a transceiver and a processor; the transceiver is configured to receive configuration information sent by a network side device, wherein the configuration information is used to indicate first symbol information and/or second symbol information in one slot, a first symbol is a symbol used to send unicast information, and a second symbol is a symbol used to send Multicast information and/or broadcast information; the first symbol information includes a number of time symbols and/or a number of PRBs occupied by the first symbol; the second symbol information includes a number of time symbols and/or a number of PRBs occupied by the second symbol.

An embodiment of the present disclosure provides a terminal, comprising: a transceiver and a processor; the transceiver is configured to receive resource configuration information sent by a network side device, wherein the resource configuration information is resource configuration information of a Multicast service and/or broadcast service of a neighboring cell; the transceiver is configured to measure or not measure a resource corresponding to the resource configuration information.

In an embodiment of the present disclosure, the transceiver is configured to, if the terminal only has a unicast service, not measure the resource corresponding to the resource configuration information; if the terminal only has a Multicast service and/or broadcast service, measure the resource corresponding to the resource configuration information; if the terminal has a unicast service and a Multicast service and/or a broadcast service, measure the resource corresponding to the resource configuration information.

An embodiment of the present disclosure also provides a terminal, including a memory, a processor, and a program stored in the memory and executed by the processor; the processor executes the program to implement the steps of the method applied to the terminal.

An embodiment of the present disclosure also provides a network side device, including a memory, a processor, and a program stored in the memory and executed by the processor; the processor executes the program to implement the steps of the method applied to the network side device.

In a ninth aspect, the embodiments of the present disclosure further provide a readable storage medium on which a program is stored, and when the program is executed by a processor, the steps in any one of the above methods are implemented.

The beneficial effects of the technical solutions of the embodiments of the present disclosure are as follows:

In the embodiment of the present disclosure, by using DCI to indicate whether to update or not to update the control information of the Multicast service and/or broadcast service, it can accelerate the terminal to obtain MCCH modification information, and obtain accurate Multicast and/or broadcast data more quickly, and meet the requirement of low latency, which can be applied to 5G multi-application scenarios.

**BRIEF DESCRIPTION OF THE DRAWINGS**

FIG. 1 is a schematic diagram of a changing method of MCCH information in the related art;
FIG. 2 is a schematic flowchart of an information communication method in an embodiment of the present disclosure;
FIG. 3 is a schematic flowchart of an information communication method in an embodiment of the present disclosure;
FIG. 4 is a schematic flowchart of an information communication method in an embodiment of the present disclosure;
FIG. 5 is a schematic flowchart of an information communication method in an embodiment of the present disclosure;
FIG. 6 is a schematic flowchart of an information configuration method in an embodiment of the present disclosure;
FIG. 7 is a schematic flowchart of an information receiving method in an embodiment of the present disclosure;
FIG. 7a is a schematic flowchart of an information sending method in an embodiment of the present disclosure;
FIG. 7b is a schematic flowchart of an information receiving method in an embodiment of the present disclosure;
FIG. 8 is a schematic flowchart of an information sending method in an embodiment of the present disclosure;

FIG. 9 is a schematic flowchart of an information receiving method in an embodiment of the present disclosure;

FIG. 10 is a schematic flowchart of a resource configuration method in an embodiment of the present disclosure;

FIG. 11 is a schematic flowchart of a resource configuration method in an embodiment of the present disclosure;

FIG. 12 is a schematic flowchart of an information measurement method in an embodiment of the present disclosure;

FIG. 13 is a schematic structural diagram of a network side device in an embodiment of the present disclosure;

FIG. 14 is a schematic structural diagram of a network side device in an embodiment of the present disclosure;

FIG. 15 is a schematic structural diagram of a terminal in an embodiment of the present disclosure;

FIG. 16 is a schematic structural diagram of a terminal in an embodiment of the present disclosure;

FIG. 17 is a schematic structural diagram of a network side device in an embodiment of the present disclosure;

FIG. 18 is a schematic structural diagram of a terminal in an embodiment of the present disclosure;

FIG. 18a is a schematic structural diagram of a network side device in an embodiment of the present disclosure;

FIG. 19 is a schematic structural diagram of a network side device in an embodiment of the present disclosure;

FIG. 20 is a schematic structural diagram of a terminal in an embodiment of the present disclosure;

FIG. 21 is a schematic structural diagram of a network side device in an embodiment of the present disclosure;

FIG. 22 is a schematic structural diagram of a terminal in an embodiment of the present disclosure;

FIG. 23 is a schematic structural diagram of a network side device in an embodiment of the present disclosure;

FIG. 24 is a schematic structural diagram of a terminal in an embodiment of the present disclosure;

FIG. 25 is a schematic structural diagram of a network side device in an embodiment of the present disclosure;

FIG. 25a is a schematic structural diagram of a terminal in an embodiment of the present disclosure;

FIG. 25b is a schematic structural diagram of a network side device in an embodiment of the present disclosure;

FIG. 25c is a schematic structural diagram of a network side device in an embodiment of the present disclosure;

FIG. 26 is a schematic structural diagram of a terminal in an embodiment of the present disclosure;

FIG. 27 is a schematic structural diagram of a network side device in an embodiment of the present disclosure;

FIG. 28 is a schematic structural diagram of a terminal in an embodiment of the present disclosure;

FIG. 29 is a schematic structural diagram of a terminal in an embodiment of the present disclosure;

FIG. 30 is a schematic structural diagram of a network side device in an embodiment of the present disclosure;

FIG. 31 is a schematic structural diagram of a terminal in an embodiment of the present disclosure;

FIG. 32 is a schematic structural diagram of a network side device in an embodiment of the present disclosure;

FIG. 33 is a schematic structural diagram of a terminal in an embodiment of the present disclosure;

FIG. 34 is a schematic structural diagram of a network side device in an embodiment of the present disclosure;

FIG. 35 is a schematic structural diagram of a terminal in an embodiment of the present disclosure;

FIG. 36 is a schematic structural diagram of a network side device in an embodiment of the present disclosure;

FIG. 37 is a schematic structural diagram of a terminal in an embodiment of the present disclosure;

FIG. 38 is a schematic structural diagram of a terminal in an embodiment of the present disclosure.

## DETAILED DESCRIPTION

In order to make the purpose, technical solutions and advantages of the embodiments of the present disclosure clearer, the technical solutions of the embodiments of the present disclosure will be clearly and completely described below in conjunction with the accompanying drawings of the embodiments of the present disclosure. Apparently, the described embodiments are some of the embodiments of the present disclosure, not all of them. All other embodiments obtained by a person skilled in the art based on the described embodiments of the present disclosure belong to the protection scope of the present disclosure.

FIG. 2 is a schematic flowchart of an information communication method provided by an embodiment of the present disclosure. The method is applied to a network side device and includes the following steps:

Step 21: Sending a first downlink control information (DCI) scrambled by a first radio network temporary identifier (RNTI) to a terminal, the first DCI being used to indicate whether control information of a Multicast service and/or broadcast service is changed or related information is changed;

Wherein, the control information includes configuration information of Multicast service and/or broadcast service.

In the embodiment of the present disclosure, by using the DCI to indicate whether to update or not to update the control information of the Multicast service and/or broadcast service, it can accelerate the terminal to obtain the modification information of the Multicast control channel (MCCH), and obtain accurate Multicast and/or broadcast data more quickly, so as to meet low latency requirements. It can be applied to 5G multi-application scenarios.

Optionally, the configuration information of the Multicast service and/or broadcast service includes at least one of the following:

a Temporary Mobile Group Identity (TMGI) list;
session ID corresponding to TMGI in the TMGI list;

group RNTI (G-RNTI) corresponding to the TMGI in the TMGI list;
bandwidth Part (BWP) corresponding to the TMGI in the TMGI list;
subcarrier spacing corresponding to the TMGI in the TMGI list;
a logical channel and/or logical channel group corresponding to the TMGI in the TMGI list;
Discontinuous Reception (DRX) configuration corresponding to the TMGI in the TMGI list;
uplink resource configuration fed back by Hybrid Automatic Repeat reQuest (HARQ) corresponding to the TMGI in the TMGI list;
uplink resource configuration reported by channel state information (CSI) corresponding to the TMGI in the TMGI list.

Of course, in addition to at least one of the above items, the configuration information of the Multicast service and/or broadcast service on the MCCH may include at least one of the synchronization signal/physical broadcast channel signal block (or synchronization signal block) (SSB, also known as SS/PBCH Block, including Primary Synchronization Signal (PSS), Secondary Synchronization Signal (SSS) and Physical Broadcast Channel (PBCH), which can also be called Synchronization Signal/Broadcast Channel Block), Channel State Information Reference Signal (CSI-RS), Transmission Configuration Indicator (TCI), and a beam corresponding to the TMGI in the TMGI list.

Wherein, the PBCH is a Physical Broadcast Channel. The SSB is a synchronization signal and PBCH block (SSB for short).

Optionally, the first DCI is used to indicate at least one of the following:

control information of Multicast service and/or broadcast service having been changed;
Whether the control information of the Multicast service and/or broadcast service having been changed;
Changed control information of the Multicast service and/or broadcast service;
A Type of the changed control information of the Multicast service and/or broadcast service;
resource information of acquiring the changed control information of the Multicast service and/or broadcast service.

Optionally, when the first DCI is used to indicate that the control information of the Multicast service and/or broadcast service has been changed, the first DCI is also used to indicate at least one of the following:

configuration information of the Multicast service and/or broadcast service having being changed;
a transmission mode of the Multicast service and/or broadcast service being changed from a single cell point-to-multipoint (SC-PTM) transmission mode to the multi cell point-to-multipoint (MBMS) transmission mode;
The transmission mode of the Multicast service and/or broadcast service being changed from the multi cell point-to-multipoint transmission mode to the single cell point-to-multipoint transmission mode;
The transmission mode of the Multicast service and/or broadcast service being changed from a point-to-multipoint transmission mode to a point-to-point transmission mode;
The transmission mode of the Multicast service and/or broadcast service being changed from the point-to-point transmission mode to the point-to-multipoint transmission mode;
A Multicast or broadcast service whose control information have been changed;
Adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service;
Turning On or Off CSI feedback of the Multicast service and/or broadcast service.

In the embodiment of the present disclosure, one or more of the above information may be indicated in one scheduling unit (for example, one slot).

For example, when one cell has one Single Cell-Multicast Control Channel (SC-MCCH), the update of SC-MCCH information can be implemented in one PDCCH, without the notification period and the modification period in the related art to realize the update of the SC-MCCH information, the specific method is as follows.

One field in the DCI of the PDCCH is used to indicate an MCCH state, and the message can be scrambled by a new RNTI, or scrambled by the SC-RNTI.

MCCH state indicator - 2 bits are determined according to Table 1:

Table 1

| | |
|---|---|
| 01 | The configuration of MCCH has not changed |
| 10 | The configuration of MCCH has been changed |

(continued)

| 11 Optimization | Whether the MCCH resources indicated by the DCI carry change information |
|---|---|

Or: MCCH state Indicator-4 bits are determined according to Table 2

Table 2

| 0001 | the configuration of MCCH has not changed |
|---|---|
| 0010 | the configuration of MCCH has been changed |
| 0011-1110 | Identification information of the changed Multicast service |
| 1111 Optimization | Whether the MCCH resources indicated by the DCI carry change information |

If it is 11 in Table 1 or 1111 in Table 2, Messages-8. If it is 01 or 0001, the field is reserved and can be ignored by UE:

Table 3: MCCH state change Messages

| Bit | Short Message |
|---|---|
| 1 | transmission resource of MTCH have been changed |
| 2 | transmission of SC-PTM becomes the transmission of MBMS |
| 3 | transmission of SC-Ptm becomes the transmission of unicast |
| 4 | MTCH period change/offset change/MCS/TB change |
| 5 | Adding TMGI |
| 6 | Turning off/on HARQ feedback |
| 7 | Turning on CSI Feedback |

Table 4: MCCH State Change Messages

| Bit | Short Message |
|---|---|
| m-bit bitmap | identification information of the changed Multicast service |
| 1 | transmission resource of MTCH have been changed |
| 2 | transmission of SC-PTM becomes the transmission of MBMS |
| 3 | transmission of SC-Ptm becomes the transmission of unicast |
| 4 | MTCH period change/offset change/MCS/TB change |
| 5 | Adding TMGI |
| 6 | Turning off/on HARQ feedback |
| 7 | Turning on CSI Feedback |

MCS: Modulation and coding scheme; TB: Transport Block,

Then, the UE determines whether the SC-MCCH information has been changed according to the content in the DCI, and optionally, SC-MCCH information of which Multicast service has been changed, and/or the specific content of the change; and where to read the changed SC-MCCH information.

Finally, the LTE reads the SC-PTM configuration information according to the changed SC-MCCH information.

Another example, when one cell has multiple SC-MCCHs:

Step 1: The SC-RNTIs in different groups are different, and the corresponding relationship between different Multicast services and SC-RNTI is configured through RRC messages;

Step 2: The update of SC-MCCH information can be implemented in one PDCCH without the notification period and modification period in the related art to implement the SC-MCCH information update method, the specific method is as follows.

one field in the DCI of the PDCCH is used to indicate the MCCH state, and the message can be scrambled by a new RNTI, or scrambled by the SC-RNTI.

MCCH state Indicator - 2 bits is determined according to the following table:

| 01 | The configuration of MCCH has not changed |
|----|---|
| 10 | The configuration of MCCH has been changed |
| 11 | Whether the MCCH resources indicated by the DCI carry change information |

If it is 11, Messages-8 bits. If it is 01, this field is reserved and can be ignored by UE:

Table 5: MCCH State Change Messages

| Bit | Short Message |
|-----|---|
| 1 | transmission resource of MTCH have been changed |
| 2 | transmission of SC-PTM becomes the transmission of MBMS |
| 3 | transmission of SC-Ptm becomes the transmission of unicast |
| 4 | MTCH period change/offset change/MCS/TB change |
| 5 | Adding TMGI |
| 6 | Turning off/on HARQ feedback |
| 7 | Turning on CSI Feedback |

Then, the UE determines whether the SC-MCCH information has been changed according to the content in the DCI, and optionally, SC-MCCH information of which Multicast service has been changed, and/or the specific content of the change; and where to read the changed SC-MCCH information.

Optionally, the first DCI is used to indicate at least one of the following:

configuration information of the Multicast service and/or broadcast service having being changed;
a transmission mode of the Multicast service and/or broadcast service being changed from a single cell point-to-multipoint transmission mode to a multi cell point-to-multipoint transmission mode;
The transmission mode of the Multicast service and/or broadcast service being changed from the multi cell point-to-multipoint transmission mode to the single cell point-to-multipoint transmission mode;
The transmission mode of the Multicast service and/or broadcast service being changed from a point-to-multipoint transmission mode to a point-to-point transmission mode;
The transmission mode of the Multicast service and/or broadcast service being changed from the point-to-point transmission mode to the point-to-multipoint transmission mode;
A Multicast or broadcast service whose control information have been changed;
Adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service;
Turning On or Off CSI feedback of the Multicast service and/or broadcast service.

Optionally, after sending the first DCI scrambled by the first RNTI to the terminal, the method further includes:

The first DCI including information used to indicate that the control information of the Multicast service and/or broadcast service have changed, and/or,
In a case that a control information resource for indicating the Multicast service and/or broadcast service carries change information, sending the change information of the control information of the Multicast service and/or broadcast service.

Optionally, the method also includes:

> broadcasting control information of each Multicast service and/or broadcast service among control information of a plurality of Multicast services and/or broadcast services; or,
> broadcasting control information of a first Multicast service and/or broadcast service among the control information of the plurality of Multicast services and/or broadcast services, and control information of other Multicast services and/or broadcast services among the control information of the plurality of Multicast services and/or broadcast services being the same as the control information of the first Multicast service and/or broadcast service;
> Wherein, the control information includes at least one of a repetition period, an offset, an initial subframe or a modification period.

In the embodiment of the present disclosure, if there are a plurality of SC-MCCHs in the cell, for example, 10 SC-MCCHs. One method is that the system message still broadcasts the scheduling information such as the repetition period, offset, initial subframe and modification period of each set of SC-MCCH respectively; or,

> Scheduling information of a plurality of Multicast groups include sending information repetition period, offset, initial subframe, modification period and other scheduling information parameters. If the scheduling information parameters are the same, only one set will be broadcast, and then the Multicast group information will be carried;
> Or, if the repetition period of sending information of different groups is the same, in order to maintain better forward compatibility and save signaling overhead, the system message does not need to broadcast repetition periods, offsets, initial subframes and modification periods of a plurality of sets of SC-MCCHs; system messages still only broadcast the repetition period, offset, initial subframe and modification period and other scheduling information of one set of SC-MCCH; LTE deduces the time at which the SC-MCCH of a corresponding group appears according to the ID numbers of different groups.

FIG. 3 is a schematic flowchart of an information communication method provided by an embodiment of the present disclosure. The method is applied to a network side device and includes the following steps:

> Step 31: Sending a second DCI scrambled by a second RNTI to a terminal, the second DCI being used to indicate whether control information of a Multicast service and/or broadcast service set is changed or related information is changed;
> Wherein, the control information includes configuration information of Multicast service and/or broadcast service.

In the embodiment of the present disclosure, by using the DCI to indicate whether to update or not to update the control information of the Multicast service and/or broadcast service, it can accelerate the terminal to obtain the modification information of the Multicast control channel (MCCH), and obtain accurate Multicast and/or broadcast data more quickly, so as to meet low latency requirements. It can be applied to 5G multi-application scenarios.

Optionally, the configuration information of the Multicast service and/or broadcast service includes at least one of the following:

> a TMGI list;
> session ID corresponding to TMGI in the TMGI list;
> G-RNTI corresponding to the TMGI in the TMGI list;
> BWP corresponding to the TMGI in the TMGI list;
> subcarrier spacing corresponding to the TMGI in the TMGI list;
> a logical channel and/or logical channel group corresponding to the TMGI in the TMGI list;
> DRX configuration corresponding to the TMGI in the TMGI list;
> uplink resource configuration fed back by HARQ corresponding to the TMGI in the TMGI list;
> uplink resource configuration reported by CSI corresponding to the TMGI in the TMGI list.

Optionally, the Multicast service and/or broadcast service set is a set of part or all Multicast services and/or broadcast services in a cell; and/or,
The Multicast service and/or broadcast service set is a set of part or all Multicast services and/or broadcast services in one Multicast area and/or broadcast area.

Optionally, the second DCI is used to indicate at least one of the following:

> control information of the Multicast service and/or broadcast service set having been changed;
> Whether the control information of the Multicast service and/or broadcast service set having been changed;

Changed control information of the Multicast service and/or broadcast service set;

A type of the changed control information of the Multicast service and/or broadcast service set;

resource information of acquiring the changed control information of the Multicast service and/or broadcast service set.

Optionally, when the second DCI is used to indicate that the control information of the Multicast service and/or broadcast service set has been changed, the second DCI is also used to indicate at least one of the following:

configuration information of the Multicast service and/or broadcast service set having being changed;

a transmission mode of the Multicast service and/or broadcast service set being changed from a single cell point-to-multipoint transmission mode to the multi cell point-to-multipoint transmission mode;

The transmission mode of the Multicast service and/or broadcast service set being changed from the multi cell point-to-multipoint transmission mode to the single cell point-to-multipoint transmission mode;

The transmission mode of the Multicast service and/or broadcast service set being changed from a point-to-multipoint transmission mode to a point-to-point transmission mode;

The transmission mode of the Multicast service and/or broadcast service set being changed from the point-to-point transmission mode to the point-to-multipoint transmission mode;

Multicast or broadcast services where the control information of the Multicast service and/or broadcast service has been changed;

Adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service set;

Turning On or Off CSI feedback of the Multicast service and/or broadcast service set.

Optionally, the second DCI is used to indicate at least one of the following:

configuration information of the Multicast service and/or broadcast service set having being changed;

a transmission mode of the Multicast service and/or broadcast service set being changed from a single cell point-to-multipoint transmission mode to a multi cell point-to-multipoint transmission mode;

The transmission mode of the Multicast service and/or broadcast service set being changed from the multi cell point-to-multipoint transmission mode to the single cell point-to-multipoint transmission mode;

The transmission mode of the Multicast service and/or broadcast service set being changed from a point-to-multipoint transmission mode to a point-to-point transmission mode;

The transmission mode of the Multicast service and/or broadcast service set being changed from the point-to-point transmission mode to the point-to-multipoint transmission mode;

Multicast or broadcast services where the control information of the Multicast service and/or broadcast service set have been changed;

adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service set;

Turning On or Off CSI feedback of the Multicast service and/or broadcast service set;

Identification information of changed Multicast services and/or broadcast services in the Multicast service and/or broadcast service set.

Optionally, the second DCI is used to indicate the following content:
Identification information of changed Multicast services and/or broadcast services in the Multicast service and/or broadcast service set.

Optionally, the second DCI is used to indicate at least one of the following:

configuration information of the changed Multicast services and/or broadcast services in the Multicast service and/or broadcast service set having being changed;

a transmission mode of the changed Multicast services and/or broadcast services in the Multicast service and/or broadcast service set being changed from a single cell point-to-multipoint transmission mode to the multi cell point-to-multipoint transmission mode;

The transmission mode of the changed Multicast services and/or broadcast services in the Multicast service and/or broadcast service set being changed from the multi cell point-to-multipoint transmission mode to the single cell point-to-multipoint transmission mode;

The transmission mode of the changed Multicast services and/or broadcast services in the Multicast service and/or broadcast service set being changed from a point-to-multipoint transmission mode to a point-to-point transmission mode;

The transmission mode of the changed Multicast services and/or broadcast services in the Multicast service and/or broadcast service set being changed from the point-to-point transmission mode to the point-to-multipoint transmission mode;

Multicast or broadcast services whose control information have been changed in the changed Multicast services and/or broadcast services in the Multicast service and/or broadcast service set;

adding a new set of Multicast service and/or broadcast services;

removing a set of existing Multicast service and/or broadcast services;

modification of a set of existing Multicast service and/or broadcast services;

Turning Off or On HARQ feedback of part of Multicast services and/or broadcast services in the Multicast service and/or broadcast service set;

Turning On or Off CSI feedback of part of Multicast services and/or broadcast services in the Multicast service and/or broadcast service set.

Optionally, after sending the second DCI scrambled by the second RNTI to the terminal, further include:

The second DCI including information used to indicate that the control information of the Multicast service and/or broadcast service have changed, and/or,

In a case that a control information resource for indicating the Multicast service and/or broadcast service carries change information, sending the change information of the control information of the Multicast service and/or broadcast service.

Optionally, the method also includes:

broadcasting control information of each Multicast service and/or broadcast service among control information of a plurality of Multicast services and/or broadcast services; or,

broadcasting control information of a first Multicast service and/or broadcast service among the control information of the plurality of Multicast services and/or broadcast services, and control information of other Multicast services and/or broadcast services among the control information of the plurality of Multicast services and/or broadcast services being the same as the control information of the first Multicast service and/or broadcast service;

Wherein, the control information includes at least one of a repetition period, an offset, an initial subframe or a modification period.

FIG. 4 is a schematic flowchart of an information communication method provided by an embodiment of the present disclosure. The method is applied to a terminal and includes the following steps:

Step 41: Receiving a first DCI sent by a network side device and scrambled by a first RNTI, the first DCI being used to indicate whether control information of a Multicast service and/or broadcast service is changed or related information is changed;

Wherein, the control information includes configuration information of Multicast service and/or broadcast service.

In the embodiment of the present disclosure, by using DCI to indicate whether to update or not to update the control information of the Multicast service and/or broadcast service, it can accelerate the terminal to obtain MCCH modification information, and obtain accurate Multicast and/or broadcast data more quickly, so as to meet low latency requirements. It can be applied to 5G multi-application scenarios.

Optionally, the configuration information of the Multicast service and/or broadcast service includes at least one of the following:

a Temporary Mobile Group Identity (TMGI) list;

session ID corresponding to TMGI in the TMGI list;

group RNTI (G-RNTI) corresponding to the TMGI in the TMGI list;

bandwidth Part (BWP) corresponding to the TMGI in the TMGI list;

subcarrier spacing corresponding to the TMGI in the TMGI list;

a logical channel and/or logical channel group corresponding to the TMGI in the TMGI list;

Discontinuous Reception (DRX) configuration corresponding to the TMGI in the TMGI list;

uplink resource configuration fed back by Hybrid Automatic Repeat reQuest (HARQ) corresponding to the TMGI in the TMGI list;

uplink resource configuration reported by channel state information (CSI) corresponding to the TMGI in the TMGI list.

Optionally, the first DCI is used to indicate at least one of the following:

control information of Multicast service and/or broadcast service having been changed;

Whether the control information of the Multicast service and/or broadcast service having been changed;

Changed control information of the Multicast service and/or broadcast service;

A Type of the changed control information of the Multicast service and/or broadcast service;

resource information of acquiring the changed control information of the Multicast service and/or broadcast service.

Optionally, when the first DCI is used to indicate that the control information of the Multicast service and/or broadcast service has been changed, the first DCI is also used to indicate at least one of the following:

configuration information of the Multicast service and/or broadcast service having being changed;

a transmission mode of the Multicast service and/or broadcast service being changed from a single cell point-to-multipoint (SC-PTM) transmission mode to the multi cell point-to-multipoint (MBMS) transmission mode;

The transmission mode of the Multicast service and/or broadcast service being changed from the multi cell point-to-multipoint transmission mode to the single cell point-to-multipoint transmission mode;

The transmission mode of the Multicast service and/or broadcast service being changed from a point-to-multipoint transmission mode to a point-to-point transmission mode;

The transmission mode of the Multicast service and/or broadcast service being changed from the point-to-point transmission mode to the point-to-multipoint transmission mode;

A Multicast or broadcast service whose control information have been changed;

adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service;

Turning On or Off CSI feedback of the Multicast service and/or broadcast service.

Optionally, the first DCI is used to indicate at least one of the following:

configuration information of the Multicast service and/or broadcast service having being changed;

a transmission mode of the Multicast service and/or broadcast service being changed from a single cell point-to-multipoint transmission mode to a multi cell point-to-multipoint transmission mode;

The transmission mode of the Multicast service and/or broadcast service being changed from the multi cell point-to-multipoint transmission mode to the single cell point-to-multipoint transmission mode;

The transmission mode of the Multicast service and/or broadcast service being changed from a point-to-multipoint transmission mode to a point-to-point transmission mode;

The transmission mode of the Multicast service and/or broadcast service being changed from the point-to-point transmission mode to the point-to-multipoint transmission mode;

A Multicast or broadcast service whose control information have been changed;

adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service;

Turning On or Off CSI feedback of the Multicast service and/or broadcast service.

Optionally, after receiving the first DCI sent by the network side device and scrambled by the first RNTI, the method further includes:

The first DCI including information used to indicate that the control information of the Multicast service and/or broadcast service have changed, and/or,

In a case that a control information resource for indicating the Multicast service and/or broadcast service carries change information, sending the change information of the control information of the Multicast service and/or broadcast service.

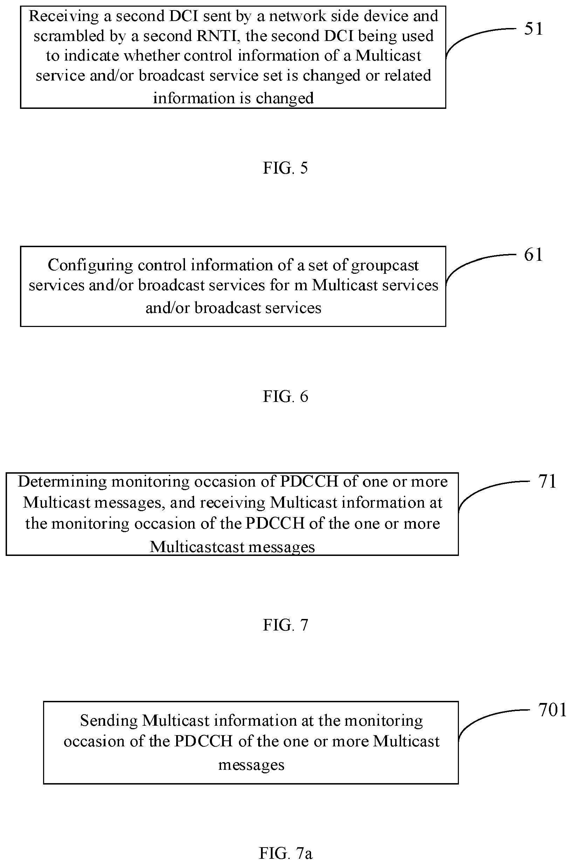

FIG. 5 is a schematic flowchart of an information communication method provided by an embodiment of the present disclosure. The method is applied to a terminal and includes the following steps:

Step 51: Receiving a second DCI sent by a network side device and scrambled by a second RNTI, the second DCI being used to indicate whether control information of a Multicast service and/or broadcast service set is changed or related information is changed;
Wherein, the control information includes configuration information of Multicast service and/or broadcast service.

In the embodiment of the present disclosure, by using the DCI to indicate whether to update or not to update the control information of the Multicast service and/or broadcast service, it can accelerate the terminal to obtain the modification information of the Multicast control channel (MCCH), and obtain accurate Multicast and/or broadcast data more quickly, so as to meet low latency requirements. It can be applied to 5G multi-application scenarios.

Optionally, the configuration information of the Multicast service and/or broadcast service includes at least one of the following:

a TMGI list;
session ID corresponding to TMGI in the TMGI list;
G-RNTI corresponding to the TMGI in the TMGI list;
BWP corresponding to the TMGI in the TMGI list;
subcarrier spacing corresponding to the TMGI in the TMGI list;
a logical channel and/or logical channel group corresponding to the TMGI in the TMGI list;
DRX configuration corresponding to the TMGI in the TMGI list;
uplink resource configuration fed back by HARQ corresponding to the TMGI in the TMGI list;
uplink resource configuration reported by CSI corresponding to the TMGI in the TMGI list.

Optionally, the Multicast service and/or broadcast service set is a set of part or all Multicast services and/or broadcast services in a cell; and/or,
The Multicast service and/or broadcast service set is a set of part or all Multicast services and/or broadcast services in one Multicast area and/or broadcast area.

Optionally, the second DCI is used to indicate at least one of the following:

control information of the Multicast service and/or broadcast service set having been changed;
Whether the control information of the Multicast service and/or broadcast service set having been changed;
Changed control information of the Multicast service and/or broadcast service set;
A type of the changed control information of the Multicast service and/or broadcast service set;
resource information of acquiring the changed control information of the Multicast service and/or broadcast service set.

Optionally, the second DCI is used to indicate at least one of the following:

configuration information of the Multicast service and/or broadcast service set having being changed;
a transmission mode of the Multicast service and/or broadcast service set being changed from a single cell point-to-multipoint transmission mode to the multi cell point-to-multipoint transmission mode;
The transmission mode of the Multicast service and/or broadcast service set being changed from the multi cell point-to-multipoint transmission mode to the single cell point-to-multipoint transmission mode;
The transmission mode of the Multicast service and/or broadcast service set being changed from a point-to-multipoint transmission mode to a point-to-point transmission mode;
The transmission mode of the Multicast service and/or broadcast service set being changed from the point-to-point transmission mode to the point-to-multipoint transmission mode;
Multicast or broadcast services where the control information of the Multicast service and/or broadcast service has been changed;
adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service set;
Turning On or Off CSI feedback of the Multicast service and/or broadcast service set.

Optionally, the second DCI is used to indicate at least one of the following:

configuration information of the Multicast service and/or broadcast service set having being changed;

a transmission mode of the Multicast service and/or broadcast service set being changed from a single cell point-to-multipoint transmission mode to a multi cell point-to-multipoint transmission mode;

The transmission mode of the Multicast service and/or broadcast service set being changed from the multi cell point-to-multipoint transmission mode to the single cell point-to-multipoint transmission mode;

The transmission mode of the Multicast service and/or broadcast service set being changed from a point-to-multipoint transmission mode to a point-to-point transmission mode;

The transmission mode of the Multicast service and/or broadcast service set being changed from the point-to-point transmission mode to the point-to-multipoint transmission mode;

Multicast or broadcast services where the control information of the Multicast service and/or broadcast service set have been changed;

adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service set;

Turning On or Off CSI feedback of the Multicast service and/or broadcast service set;

Identification information of changed Multicast services and/or broadcast services in the Multicast service and/or broadcast service set.

Optionally, the second DCI is used to indicate the following content:
Identification information of changed Multicast services and/or broadcast services in the Multicast service and/or broadcast service set.

Optionally, the second DCI is used to indicate at least one of the following:

configuration information of the changed Multicast services and/or broadcast services in the Multicast service and/or broadcast service set having being changed;

a transmission mode of the changed Multicast services and/or broadcast services in the Multicast service and/or broadcast service set being changed from a single cell point-to-multipoint transmission mode to the multi cell point-to-multipoint transmission mode;

The transmission mode of the changed Multicast services and/or broadcast services in the Multicast service and/or broadcast service set being changed from the multi cell point-to-multipoint transmission mode to the single cell point-to-multipoint transmission mode;

The transmission mode of the changed Multicast services and/or broadcast services in the Multicast service and/or broadcast service set being changed from a point-to-multipoint transmission mode to a point-to-point transmission mode;

The transmission mode of the changed Multicast services and/or broadcast services in the Multicast service and/or broadcast service set being changed from the point-to-point transmission mode to the point-to-multipoint transmission mode;

Multicast or broadcast services whose control information have been changed in the changed Multicast services and/or broadcast services in the Multicast service and/or broadcast service set;

adding a new set of Multicast service and/or broadcast services;

removing a set of existing Multicast service and/or broadcast services;

modification of a set of existing Multicast service and/or broadcast services;

Turning Off or On HARQ feedback of part of Multicast services and/or broadcast services in the Multicast service and/or broadcast service set;

Turning On or Off CSI feedback of part of Multicast services and/or broadcast services in the Multicast service and/or broadcast service set.

Optionally, after receiving the second DCI sent by the network side device and scrambled by the second RNTI, further include:

The second DCI including information used to indicate that the control information of the Multicast service and/or broadcast service have changed, and/or,

In a case that a control information resource for indicating the Multicast service and/or broadcast service carries change information, sending the change information of the control information of the Multicast service and/or broadcast service.

FIG. 6 is a schematic flowchart of an information configuration method provided by an embodiment of the present disclosure. The method is applied to a network side device and includes the following steps:

Step 61: configuring control information of a set of Multicast services and/or broadcast services for m Multicast services and/or broadcast services;

in a cell where the m Multicast services and/or broadcast services are located, n Multicast services and/or broadcast services being in a Multicast area and/or broadcast area;

the n Multicast services and/or broadcast services being configured with control information of k sets of Multicast services and/or broadcast services;

wherein m, n, k are natural numbers greater than or equal to 1, m is less than or equal to n, and k is less than or equal to n.

In the embodiments of the present disclosure, configuring a set of control information for a plurality of Multicast services and/or broadcast services can improve resource utilization.

Optionally, the method also includes:

Configuring at least one of a repetition period, a modification period, and an initial offset for the sending of control information of k sets of Multicast services and/or broadcast services;

At least one of the repetition period, the modification period, and the initial offset of the control information of the k sets of Multicast services and/or broadcast services being the same or different.

Optionally, the method also includes:

In the repetition period of the control information of the Multicast service and/or broadcast service, sending control information of n Multicast services and/or broadcast services to the terminal at intervals of t time domain units, where n and t are positive integers.

Optionally, in the repetition period of the control information of the Multicast service and/or broadcast service, before sending control information of n Multicast services and/or broadcast services to the terminal at intervals of t time domain units, the method further includes:

Sending first information to the terminal, wherein the first information is used to indicate a first sending time, the first sending time is sending time of the control information of the n Multicast services and/or broadcast services in a corresponding time domain unit.

Optionally, the first information includes at least one of the following:

information for indicating a start time of the first sending time;
information for indicating a duration of the first sending time;
Information for indicating a first offset, wherein the first offset is an offset between the first sending time and a position of RMSI of SSB.

Among them, RMSI is the remaining minimum system information.

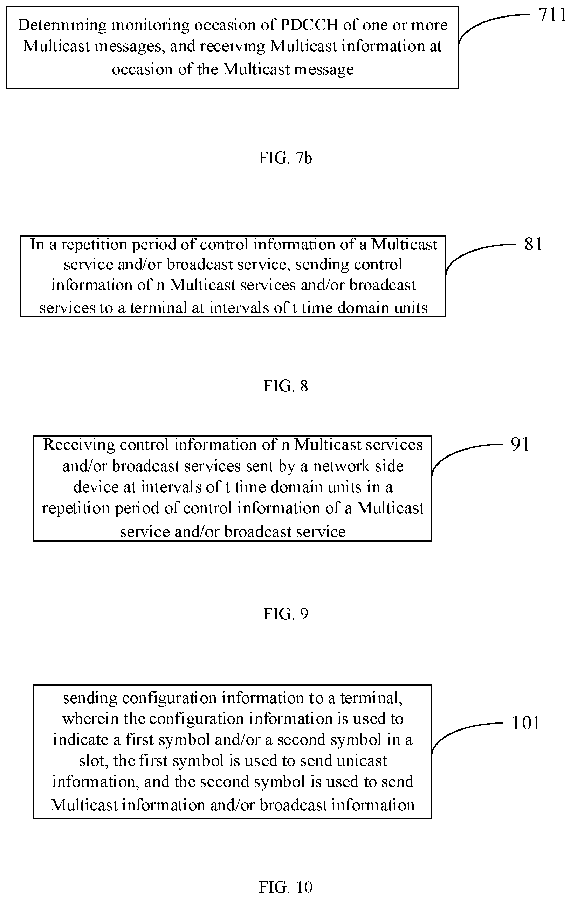

FIG. 7 is a schematic flowchart of an information receiving method provided by an embodiment of the present disclosure. The method is applied to a terminal and includes the following steps:

Step 71: Determining monitoring occasion of physical downlink control channel (PDCCH) of one or more Multicast messages, and receiving Multicast information at the monitoring occasion of the PDCCH of the one or more Multicast messages;

Wherein, occasion of one Multicast message is the monitoring occasion of the PDCCH of a group of Multicast messages;

Wherein, the monitoring occasion of the PDCCH of one Multicast message includes at least one slot;

Wherein, each slot included in the monitoring occasion of the PDCCH of one Multicast message includes at least one time symbol;

Wherein, the Multicast information includes at least one of the following:

DCI of a network scheduling Multicast service;
DCI of configuration information of the network scheduling Multicast service;
DCI of information of a control channel of the Multicast service;
DCI of the information of the control channel of the network scheduling Multicast service;
DCI of the scheduling information of the information of the control channel of the Multicast service;
DCI of modification information of the control channel of the network scheduling Multicast service;
DCI of the modification information of the control channel of the Multicast service;

DCI of the scheduling information of the modification information of the control channel of the Multicast service.

The Multicast message is the content carried in the PDSCH. The Multicast information refers to the monitored content. The terminal can find the sending resource of the Multicast message by using the Multicast information.

The "receiving" in "determining monitoring occasion of the physical downlink control channel (PDCCH) of one or more Multicast messages, and receiving Multicast information at the monitoring occasion of the PDCCH of the one or more Multicast messages" also means "monitoring" or "discovery".

In the embodiments of the present disclosure, regarding the monitoring occasion (MO) of monitoring Multicast scheduling information and/or Multicast service information, especially for terminals in idle state and connected state, the public search space is used for receiving Multicast scheduling information and/or Multicast service information, the terminal only needs to wake up to monitor the PDCCH and the corresponding PDSCH in the corresponding scheduling slot, instead of continuously monitoring the PDCCH of the SC-RNTI, thereby reducing power consumption.

Taking the monitoring of Multicast scheduling information as an example, the terminal monitors the Multicast scheduling information within one Multicast scheduling information occasion (MO) in each period of reading the Multicast scheduling information. The MO is a group of PDCCH monitoring occasions, which may include a plurality of slots (for example, subframes or Orthogonal Frequency Division Multiplexing (OFDM) symbols), in which DCI of the Multicast scheduling message may be sent.

Optionally, the determining the monitoring occasion of the PDCCH of one or more Multicast messages includes:

Determining the monitoring occasion of the PDCCH of the Multicast message according to a search space of the Multicast message or a search space set of the Multicast message;

Determining the search space of the Multicast message by at least one of the following methods:

The UE reads the information of the common search space set of the Nth type PDCCH configured by the search space used for the Multicast message in the PDCCH common configuration configured by the network through the RRC message; wherein, the common search space is used for the DCI format scrambled by the Multicast-RNTI with Cyclic redundancy check (CRC) on the primary cell;

The UE reads a search space identified as a common type in the PDCCH dedicated configuration configured in the RRC message, and the search space is used for the DCI format scrambling by the Multicast-RNTI with CRC on the primary cell;

If the UE does not find that the RRC message is configured with the information of the common search space set of the Nth type of PDCCH used for the search space configuration of the Multicast message, the association relationship between the PDCCH monitoring occasion for the Nth type of PDCCH common search space set and the SSB block index is the same as the association relationship between the PDCCH monitoring occasion for the Nth type of PDCCH common search space set and the PDCCH monitoring occasion of the PDCCH common search space of type 0;

Find out a CCE aggregation level in the common search space set of the Nth type of PDCCH and the number of PDCCH candidates for each CCE aggregation level by a look-up table;

Wherein, the information of the common search space set of the Nth type of PDCCH, and/or the information of the search space identified as the common type, includes at least one of the following information:

A search space label;

first indication information for indicating a first time symbol in a control resource set in one slot of a PDCCH monitoring occasion for a Multicast message;

second indication information for indicating a monitoring period and a time offset at the PDCCH monitoring occasion for the Multicast message;

third indication information for indicating an initial symbol and/or duration in a monitoring period of the PDCCH monitoring occasion for the Multicast message;

fourth indication information for indicating a monitoring slot and/or monitoring time symbol of the PDCCH monitoring occasion of the Multicast message in a bitmap form;

fifth indication information for indicating a monitoring time symbol in one slot of the PDCCH monitoring occasion for the Multicast message in the bitmap form;

sixth indication information for indicating the initial symbol and/or duration of one slot at the PDCCH monitoring occasion for the Multicast message;

seventh indication information for indicating an index of a control resource set associated with the search space.

Optionally, the monitoring occasion of PDCCH of one or more Multicast messages constitutes one Multicast message occasion.

The following example illustrates the method for determining the MF and MO that monitor the Multicast scheduling message:

A group of PDCCH candidates for the terminal to monitor is defined according to a PDCCH search space set, which may be a common search space set or a search space set dedicated to the terminal. The terminal monitors PDCCH candidates in one or more of the search space sets. The common search space set of TypeN-PDCCH configured by X-SearchSpace in PDCCH-ConfigCommon; wherein the common search space is configured by DCI format of CRC scrambled by Multicast-RNTI on the primary cell.

If the high-layer parameter MB-SearchSpace for the type x-PDCCH common search space set is not provided to the LTE, the association relationship between the PDCCH monitoring occasions for the type X-PDCCH common search space set and the SS/PBCH block index and the association relationship between the PDCCH monitoring occasions for the type X-PDCCH common search space set and TYPE0-PDCCH public monitoring occasions is the same. A aggregation level of a Control Channel Element (CCE)s in the X-PDCCH common search space set and the number of PDCCH candidates for each CCE aggregation level can be found by the look-up table.

According to the X-SearchSpace specified by the protocol and the first PDCCH monitoring occasion configured by RRC signaling, it is used to determine the PDCCH monitoring occasion for monitoring the Multicast scheduling information; and/or, the network configures whether the PDCCH monitoring occasion for Multicast scheduling is the same as that of the RMSI.

For a monitoring slot and/or monitoring time symbol indicating one PDCCH monitoring occasion for a Multicast message in the form of a bitmap, for example, if a Monitoring-periodicity-PDCCH-slot is 2, there are 8 PDCCH monitoring occasions (MO) in each slot. Specifically, you can define the initial OFDM time symbol and which symbols need to be monitored through RRC, such as 0011110111100000111101111000, then symbols #2, 3, 4, 5; #7, 8, 9, 10 need to be monitored;

or:

If a Monitoring-periodicity-PDCCH-slot is 2, there are 4 PDCCH monitoring ocassions in each slot, and the symbols in the first slot that needs to be monitored are #2,3,4,5; the symbols in the second slot that needs to be monitored are #7,8,9,10. Specifically, the initial OFDM time symbol and which specific symbols need to be monitored can be defined through RRC, such as 0011110000000000000001111000.

Optionally, the method also includes:

Determine the Multicast scheduling radio frame (MF), wherein MF is a system frame that includes MOs or a starting point of MOs of one or more Multicast services.

A Multicast scheduling radio frame (MF) is a system frame that can contain MOs or a starting point of MOs of one or more Multicast services.

Optionally, the method includes:

Selecting one or more beams for receiving Multicast scheduling information.

Associating with beam information: SSB/CSI-RS.

In a multi-beam operation, the UE may assume that the same Multicast scheduling message is repeated in all transmitted beams, and therefore, the UE may select one or more beams for receiving the Multicast scheduling message.

Optionally, the occasion of one Multicast message is the monitoring occasion of PDCCHs of Y Multicast messages, wherein Y is determined according to the number of SSBs actually transmitted in the cell.

MO is a group of Y consecutive PDCCH monitoring occasions, wherein Y is determined according to the number of SSBs actually transmitted in the cell.

Optionally, the occasion of one Multicast message being the monitoring occasion of the PDCCH of a group of Multicast messages, including:

a Z-th PDCCH monitoring occasion used in the occasions of the Multicast message corresponding to a Z-th transmitted SSB, and Z is a positive integer.

Among them, the Zth PDCCH monitoring occasion, that is, the occasion of one Multicast message is composed of the monitoring occasions of the PDCCHs of Y Multicast messages, and then the Zth PDCCH monitoring occasion is the Zth PDCCH monitoring occasion in the monitoring occasion of the PDCCHs of the Y Multicast messages.

FIG. 7a is a schematic flowchart of an information sending method provided by an embodiment of the present disclosure. The method is applied to a network side device and includes the following steps:

> Step 701: Sending Multicast information at the monitoring occasion of the PDCCH of the one or more Multicast messages;
> Wherein, the monitoring occasion of the PDCCH of one Multicast message includes at least one slot;
> Wherein, each slot included in the monitoring occasion of the PDCCH of one Multicast message includes at least one time symbol;
> Wherein, the Multicast information includes at least one of the following:
>
> > DCI of a network scheduling Multicast service;

DCI of configuration information of the network scheduling Multicast service;

DCI of information of a control channel of the Multicast service;

DCI of the information of the control channel of the network scheduling Multicast service;

DCI of the scheduling information of the information of the control channel of the Multicast service;

DCI of modification information of the control channel of the network scheduling Multicast service;

DCI of the modification information of the control channel of the Multicast service;

DCI of the scheduling information of the modification information of the control channel of the Multicast service.

Optionally, the sending the Multicast information at the monitoring occasion of the PDCCH of one or more Multicast messages includes:

Associating the monitoring occasion of the PDCCH of the Multicast message with a search space of a corresponding Multicast message or a search space set of the Multicast message;

Configuring the search space for Multicast messages by at least one of the following methods:

information of a common search space set of an Nth type of PDCCH configured by the search space used for the Multicast message in PDCCH common configuration configured through an RRC message; wherein the common search space is used for a DCI format scrambled by a Multicast-RNTI with Cyclic redundancy check (CRC) on a primary cell;

a search space identified as a common type in PDCCH dedicated configuration configured through the RRC message, and the search space being used for the DCI format scrambling by the Multicast-RNTI with CRC on the primary cell;

Wherein, the information of the common search space set of the Nth type of PDCCH, and/or the information of the search space identified as the common type, includes at least one of the following information:

A search space label;

first indication information for indicating a first time symbol in a control resource set in one slot of a PDCCH monitoring occasion for a Multicast message;

second indication information for indicating a monitoring period and a time offset at the PDCCH monitoring occasion for the Multicast message;

third indication information for indicating an initial symbol and/or duration in a monitoring period of the PDCCH monitoring occasion for the Multicast message;

fourth indication information for indicating a monitoring slot and/or monitoring time symbol of the PDCCH monitoring occasion of the Multicast message in a bitmap form;

fifth indication information for indicating a monitoring time symbol in one slot of the PDCCH monitoring occasion for the Multicast message in the bitmap form;

sixth indication information for indicating the initial symbol and/or duration of one slot at the PDCCH monitoring occasion for the Multicast message;

seventh indication information for indicating an index of a control resource set associated with the search space.

Optionally, the monitoring occasion of PDCCH of one or more Multicast messages constitutes one Multicast message occasion.

Optionally, the method also includes:

Determining a Multicast scheduling radio frame, wherein MF is a system frame that includes MOs or a starting point of MOs of one or more Multicast services.

Optionally, the method includes:

Selecting one or more beams for transmitting Multicast scheduling information.

Optionally, the occasion of one Multicast message is the monitoring occasion of PDCCHs of Y Multicast messages, wherein Y is determined according to the number of SSBs actually transmitted in the cell.

Optionally, the occasion of one Multicast message being the monitoring occasion of the PDCCH of a group of Multicast messages, including:

a Z-th PDCCH monitoring occasion used in the occasion of the Multicast message corresponding to a Z-th transmitted SSB, and Z is a positive integer.

FIG. 7b is a schematic flowchart of an information receiving method provided by an embodiment of the present disclosure. The method is applied to a terminal and includes the following steps:

Step 711: Determining monitoring occasion of PDCCH of one or more Multicast messages, and receiving Multicast information at occasion of the Multicast message;

Wherein, the monitoring occasion of the PDCCH of one Multicast message includes at least one slot;

Wherein, each slot included in the monitoring occasion of the PDCCH of one Multicast message includes at least one time symbol;
Wherein, the Multicast information includes at least one of the following:

DCI of a network scheduling Multicast service;
DCI of configuration information of the network scheduling Multicast service;
DCI of information of a control channel of the Multicast service;
DCI of the information of the control channel of the network scheduling Multicast service;
DCI of the scheduling information of the information of the control channel of the Multicast service;
DCI of modification information of the control channel of the network scheduling Multicast service;
DCI of the modification information of the control channel of the Multicast service;
DCI of the scheduling information of the modification information of the control channel of the Multicast service.
The "receiving" in "determining monitoring occasion of the physical downlink control channel (PDCCH) of one or more Multicast messages, and receiving Multicast information at the monitoring occasion of the PDCCH of the one or more Multicast messages" also means "monitoring" or "discovery".

In the embodiments of the present disclosure, regarding the monitoring occasion (MO) of monitoring Multicast scheduling information and/or Multicast service information, especially for terminals in idle state and connected state, the public search space is used for receiving Multicast scheduling information and/or Multicast service information, the terminal only needs to wake up to monitor the PDCCH and the corresponding PDSCH in the corresponding scheduling slot, instead of continuously monitoring the PDCCH of the SC-RNTI, thereby reducing power consumption.

Determine the monitoring occasion of the PDCCH of the Multicast message according to the search space of the Multicast message or the search space set of the Multicast message;
Determining the search space for the Multicast message by at least one of the following methods:

The UE reads the information of the common search space set of the Nth type PDCCH configured by the search space used for the Multicast message in the PDCCH common configuration configured by the network through the RRC message; wherein, the common search space is used for the DCI format scrambled by the Multicast-RNTI with Cyclic redundancy check (CRC) on the primary cell;
The UE reads a search space identified as a common type in the PDCCH dedicated configuration configured in the RRC message, and the search space is used for the DCI format scrambling by the Multicast-RNTI with CRC on the primary cell;
If the UE does not find that the RRC message is configured with the information of the common search space set of the Nth type of PDCCH used for the search space configuration of the Multicast message, the association relationship between the PDCCH monitoring occasion for the Nth type of PDCCH common search space set and the SSB block index is the same as the association relationship between the PDCCH monitoring occasion for the Nth type of PDCCH common search space set and the PDCCH monitoring occasion of the PDCCH common search space of type 0;
Find out a CCE aggregation level in the common search space set of the Nth type of PDCCH and the number of PDCCH candidates for each CCE aggregation level by a look-up table;
Wherein, the information of the common search space set of the Nth type of PDCCH, and/or the information of the search space identified as the common type, includes at least one of the following information:

A search space label;
first indication information for indicating a first time symbol in a control resource set in one slot of a PDCCH monitoring occasion for a Multicast message;
second indication information for indicating a monitoring period and a time offset at the PDCCH monitoring occasion for the Multicast message;
third indication information for indicating an initial symbol and/or duration in a monitoring period of the PDCCH monitoring occasion for the Multicast message;
fourth indication information for indicating a monitoring slot and/or monitoring time symbol of the PDCCH monitoring occasion of the Multicast message in a bitmap form;
fifth indication information for indicating a monitoring time symbol in one slot of the PDCCH monitoring occasion for the Multicast message in the bitmap form;
sixth indication information for indicating the initial symbol and/or duration of one slot at the PDCCH monitoring occasion for the Multicast message;
seventh indication information for indicating an index of a control resource set associated with the search space.

A group of PDCCH candidates for the terminal to monitor is defined according to a PDCCH search space set, which may be a common search space set or a search space set dedicated to the terminal. The terminal monitors PDCCH candidates in one or more of the search space sets. The common search space set of TypeN-PDCCH configured by X-SearchSpace in PDCCH-ConfigCommon; wherein the common search space is configured by DCI format of CRC scrambled by Multicast-RNTI on the primary cell.

If the high-layer parameter MB-SearchSpace for the type x-PDCCH common search space set is not provided to the LTE, the association relationship between the PDCCH monitoring occasions for the type X-PDCCH common search space set and the SS/PBCH block index and the association relationship between the PDCCH monitoring occasions for the type X-PDCCH common search space set and TYPE0-PDCCH public monitoring occasions is the same. A aggregation level of a Control Channel Element (CCE)s in the X-PDCCH common search space set and the number of PDCCH candidates for each CCE aggregation level can be found by the look-up table.

According to the X-SearchSpace specified by the protocol and the first PDCCH monitoring occasion configured by RRC signaling, it is used to determine the PDCCH monitoring occasion for monitoring the Multicast scheduling information; and/or, the network configures whether the PDCCH monitoring occasion for Multicast scheduling is the same as that of the RMSI.

For a monitoring slot and/or monitoring time symbol indicating one PDCCH monitoring occasion for a Multicast message in the form of a bitmap, for example, if a Monitoring-periodicity-PDCCH-slot is 2, there are 8 PDCCH monitoring occasions (MO) in each slot. Specifically, you can define the initial OFDM time symbol and which symbols need to be monitored through RRC, such as 0011110111100000111101111000, then symbols #2, 3, 4, 5; #7, 8, 9, 10 need to be monitored;

or:

If a Monitoring-periodicity-PDCCH-slot is 2, there are 4 PDCCH monitoring ocassions in each slot, and the symbols in the first slot that needs to be monitored are #2,3,4,5; the symbols in the second slot that needs to be monitored are #7,8,9,10. Specifically, the initial OFDM time symbol and which specific symbols need to be monitored can be defined through RRC, such as 0011110000000000000001111000.

Optionally, the method includes:

Selecting one or more beams for receiving Multicast scheduling information.

Associating with beam information: SSB/CSI-RS.

In a multi-beam operation, the UE may assume that the same Multicast scheduling message is repeated in all transmitted beams, and therefore, the UE may select one or more beams for receiving the Multicast scheduling message.

Optionally, the occasion of one Multicast message being the monitoring occasion of the PDCCH of a group of Multicast messages, including:

The occasion of one Multicast message is the monitoring occasion of PDCCHs of Y Multicast messages, wherein Y is determined according to the number of SSBs actually transmitted on the cell.

MO is a group of Y consecutive PDCCH monitoring occasions, wherein Y is determined according to the number of SSBs actually transmitted on the cell.

Optionally, the occasion of a Multicast message is the monitoring occasion of the PDCCH of a group of Multicast messages, including:

a Z-th PDCCH monitoring occasion used in the occasion of the Multicast message corresponding to the Z-th transmitted SSB, and Z is a positive integer.

FIG. 8 is a schematic flowchart of an information sending method provided by an embodiment of the present disclosure. The method is applied to a network side device and includes the following steps:

Step 81: In a repetition period of control information of a Multicast service and/or broadcast service, sending control information of n Multicast services and/or broadcast services to a terminal at intervals of t time domain units, wherein n and t are positive integers.

In the embodiment of the present disclosure, the control information of a plurality of Multicast and/or broadcast services can be sent separately, so that the terminal can monitor the corresponding control information at the corresponding sending time, and there is no need to receive the control information of all Multicast and/or broadcast services.

In related art, the control information of all Multicast and/or broadcast are sent in one MCCH. In addition, all Multicast scheduling information in the related art is sent in one SC-MCCH, and the embodiments of the present disclosure introduce SC-MCCHs of a plurality of Multicast. The SC-MCCH information of the plurality of Multicast broadcast by the network is generated by the distributed node (DU), and then sent to the centralized unit (CU) node for broadcast; before generating SC-MCCH related system information, the DU node needs to obtain information related to the Multicast service such as TMGI, session identifier, interested UE, and Quality of Service (QoS).

Optionally, In a repetition period of control information of a Multicast service and/or broadcast service, before sending control information of n Multicast services and/or broadcast services to a terminal at intervals of t time domain units, the method further includes :

Sending first information to the terminal, wherein the first information is used to indicate a first sending time, the first sending time is a sending time of the control information of the n Multicast services and/or broadcast services in the corresponding time domain unit.

Optionally, the first information includes at least one of the following:

information for indicating an initial time of the first sending time;
information for indicating a duration of the first sending time;
information for indicating a first offset, wherein the first offset is an offset between the first sending time and a position of RMSI of SSB.

FIG. 9 is a schematic flowchart of an information receiving method provided by an embodiment of the present disclosure. The method is applied to a terminal and includes the following steps:
Step 91: Receiving control information of n Multicast services and/or broadcast services sent by a network side device at intervals of t time domain units in a repetition period of control information of a Multicast service and/or broadcast service, wherein n and t are positive integers.

In the related art, control information of all Multicast and/or broadcast is sent in one MCCH.

In the embodiment of the present disclosure, the control information of a plurality of Multicast and/or broadcast services can be sent separately, so that the terminal can monitor the corresponding control information at the corresponding sending time, and there is no need to receive the control information of all Multicast and/or broadcast services.

Optionally, the receiving control information of n Multicast services and/or broadcast services sent by a network side device at intervals of t time domain units in a repetition period of control information of a Multicast service and/or broadcast service includes:

Obtaining the time domain unit corresponding to the control information of the Multicast service and/or broadcast service within the repetition period;
monitoring the control information of the corresponding Multicast service and/or broadcast service in the time domain unit.

Optionally, the time domain unit is calculated according to the following formula:
SFN mod sc-mcch-RepetitionPeriod = sc-mcch-Offset + (sc-mcch-RepetitionPeriod) divided by $(M/n) * ([Multicast\_ID /n] - 1)$;

SFN is a serial number of the time domain unit corresponding to the control information of the first Multicast service and/or broadcast service, sc-mcch-RepetitionPeriod is a size of the repetition period, and sc-mcch-Offset is an offset of an initial time domain unit of the first repetition period, M is the total number of control information of the Multicast service and/or broadcast service sent within the repetition period, and the Multicast_ID is the serial number of the Multicast service and/or broadcast service, so the Multicast_ID is determined according to the sending sequence of the control information of the Multicast service and/or broadcast service within the repetition period.

In the embodiment of the present disclosure, when the network side device sends the control information of n Multicast services and/or broadcast services control information at intervals of t time domain units within the repetition period of the control information of the Multicast service and/or broadcast service, the terminal deduces the time when the SC-MCCH of the corresponding group appears according to the ID numbers of different groups, so that the SC-MCCH can be received only when the SC-MCCH needs to be received and not received at other times.

The time domain unit may be a radio frame.

Optionally, the receiving the control information of n Multicast services and/or broadcast services sent by the network side device at intervals of t time domain units within the repetition period of the control information of Multicast services and/or broadcast services includes:

receiving the first information sent by the network side device, wherein the first information is used to indicate a second sending time, and the second sending time is a sending time of the control information of the n Multicast services and/or broadcast services in the corresponding time domain unit;
Receiving the control information of the n Multicast services and/or broadcast services at the second sending time.

In the embodiment of the present disclosure, the terminal also obtains specific slots and/or symbols that need to be monitored in the radio frames that need to be monitored. A specific PDCCH monitoring slot (Monitoring-symbols-PDCCH-within-slot) in a radio frame may indicate the first time symbol in a control resource set in a slot for PDCCH monitoring.

If a Monitoring-periodicity-PDCCH-slot is 2, there are 8 PDCCH monitoring occasions (MO) in each slot. Specifically, the initial OFDM time symbol and which symbols need to be monitored is defined through RRC, such as 0011110111100000111101111000, then symbols #2, 3, 4, 5; #7, 8, 9, 10 need to be monitored;

or:

If a Monitoring-periodicity-PDCCH-slot is 2, there are 4 PDCCH monitoring ocassions in each slot, and the symbols in the first slot that needs to be monitored are #2,3,4,5; the symbols in the second slot that needs to be monitored are #7,8,9,10. Specifically, the initial OFDM time symbol and which specific symbols need to be monitored can be defined through RRC, such as 0011110000000000000001111000.

Optionally, the first information includes at least one of the following:

information for indicating an initial time of the second sending time;
information for indicating a duration of the second sending time;
information for indicating a first offset, wherein the first offset is an offset between the second sending time and a position of RMSI of SSB.

Specifically, a specific monitoring occasion in a radio frame can be determined by defining an initial symbol and a duration. Among them, the duration can be defined in CORESET-time-duration. For example, the initial symbols are #2 and #7, and the duration is 4 symbols. Alternatively, the position of the SC-MCCH can be deduced according to the period and position information of the SSB sent by the RRC by defining an offset from the position of the RMSI of the SSB.

Similarly, this method is also applicable to UEs in idle state and inactive state to read SC-PTM information.

FIG. 10 is a schematic flowchart of a resource configuration method provided by an embodiment of the present disclosure. The method is applied to a network side device and includes the following steps:

Step 101: sending configuration information to a terminal,
sending the configuration information to the terminal, where the configuration information is used to indicate a first symbol information and/or a second symbol information in one slot, the first symbol is a symbol used to send unicast information, and the second symbol is a symbol used to send Multicast information and/or broadcast information;
the first symbol information, a number of time symbols and/or a number of PRBs occupied by the first symbol;
the second symbol information, a number of time symbols and/or the number of PRBs occupied by the second symbol.

Optionally, the configuration information is also used to indicate that a column of reference signals is inserted for every y symbols in the slot; and/or, the configuration information is also used to indicate that one reference signal is inserted for every x subcarriers in the frequency domain corresponding to the slot, wherein the reference signal is a reference signal for Multicast and/or broadcast;
Optionally, the reference signal may be one SSB or one SSB set of one cell, or one SSB or one SSB set shared by one Multicast and/or broadcast area; and/or:

Optionally, the reference signal may be a unified CSI-RS or a CSI-RS set for terminals in a Multicast and/or broadcast group, or a CSI-RS or a CSI-RS set shared in a Multicast and/or broadcast area;
Optionally, the information of the reference signal needs to be exchanged between different network nodes;
Wherein, x and y are positive integers, x is determined according to the subcarrier spacing, and y is determined according to the subcarrier spacing;
the unicast information includes a reference signal corresponding to unicast, at least one of control signaling and data;
the Multicast information includes a reference signal corresponding to the Multicast, at least one of control signaling and data;
the broadcasting information includes a reference signal corresponding to broadcast, at least one of control signaling and data;
Optionally, x and y are positive integers, x is determined according to the subcarrier spacing, and y is also determined according to the measurement accuracy.

Currently, in the MBMS system, the MCCH message can only be sent through the Multimedia Broadcast Multicast Service Single Frequency Network (MBSFN) subframe, and the MBSFN subframe is a dedicated subframe, and can only sent one data block. The UE can obtain the MCCH message only after reading the MBSFN subframe at the corresponding time point. Since the MBSFN subframe can only transmit one data block, and the data block can be used to transmit MCCH message or data other than the MCCH message. However, if the MCCH message cannot occupy all the resources of the MBSFN subframe, other data cannot be sent on the MBSFN subframe, resulting in waste of resources.

In addition, MBSFN is divided into two types: MBSFN of dedicated carrier and MBSFN of mixed carrier with unicast. The design of MBSFN reference signal (RS) has its special requirements. In a radio frame of mixed carrier MBSFN system, most resources are used for unicast services, and only a few subframes are used for MBSFN services.

A typical scenario is that an isolated MBSFN subframe is inserted in consecutive unicast subframes, so that the terminal that receives this MBSFN subframe cannot interpolate channel estimation between RSs of adjacent subframes when receiving unicast signals. Therefore, the RS design of MBSFN must be able to support channel estimation in an isolated subframe. In the embodiments of the present disclosure, the method of taking the MBSFN subframe as the minimum design unit in LTE is broken through, and the MBSFN slot is used as the minimum design unit. Although SGNR supports multiple subcarrier spacings, the lengths of radio frames and subframes are the same under different subcarrier spacing configurations. The length of the radio frame is 10ms, and the length of the subframe is 1ms. The number of slots included in each subframe varies. In the case of a normal cyclic prefix (CP), each slot contains the same number of symbols, and all of them are 14. That is to say, the number of time symbols included in one subframe of NR is different, but the number of time symbols included in each slot is the same. Among the 14 time symbols, b time symbols are used to send unicast PDCCH, CSI-RS and demodulation reference signal (DM-RS), and then 14-b time symbols are used to send MBMSFN reference signal, control channel and data channel. b can be determined according to the measurement accuracy requirements, the size of bandwidth of different frequency bands, and the Multicast service load. Moreover, the positions of the b time symbols can be defined and fixed, such as the first b, the last b, or the middle b, or the specific positions can be indicated through signaling.

```
MBSFN-SlotConfig ::=                    SEQUENCE {
    radioframeAllocationPeriod              ENUMERATED {n1, n2, n4, n8, n16, n32},
    radioframeAllocationOffset              INTEGER (0..7),
    slotAllocation                      CHOICE {
        oneFrame                            BIT STRING (SIZE(6)) of symbolAllocation,
        fourFrames                          BIT STRING (SIZE(24) of symbolAllocation)
    }
}-- ASN1STOP
```

When a terminal in an adjacent cell performs adjacent cell measurement, it may only measure the unicast reference signal of the b time symbols.

The first and second symbols in the MBSFN subframe adopt the regular CP and reserve the unicast pilot, which can be used for transmission of PDCCH, Physical Control Format Indicator Channel (PCFICH) and physical HARQ indicator channel (PHICH) and other channels. Other symbols in the subframe are used for MBSFN signal transmission.

On the other hand, according to the specific subcarrier spacing, one MBSFN reference signal (RS) is inserted for every x subcarriers in the frequency domain, and one column of RS is inserted for every y OFDM symbols in the time domain.

The measurement accuracy, the SCS and the PRB have different width, resulting in different intervals of RS insertion under different SCSs. If the SCS interval is wide, the density of RS is relatively sparse. Density of the reference signal in subcarriers. The density of reference signal is added for time symbols. RS can be used for a demodulation channel of MBMS in 5G.

Since the combination of multiple cells greatly increases the number of multipaths, the frequency selectivity of the MBSFN signal is far greater than that of the unicast signal, thus a larger RS frequency domain density is required. However, the lengths of time symbols of different subcarrier intervals are also different.

Therefore, x, y, and b all have a corresponding relationship with the value of the subcarrier spacing;

The corresponding relationship can be determined in the form of a table; or, configured through RRC message/MAC CE/PDCCH signaling;
Or, determined by defining a table of multiple correspondences and the corresponding index number, and then configuring the index number through RRC message/MAC CE/PDCCH signaling;
Or, determined by configuring the tale of multiple correspondences and corresponding index numbers in RRC signaling, and then configuring the index number through MAC CE/PDCCH signaling.

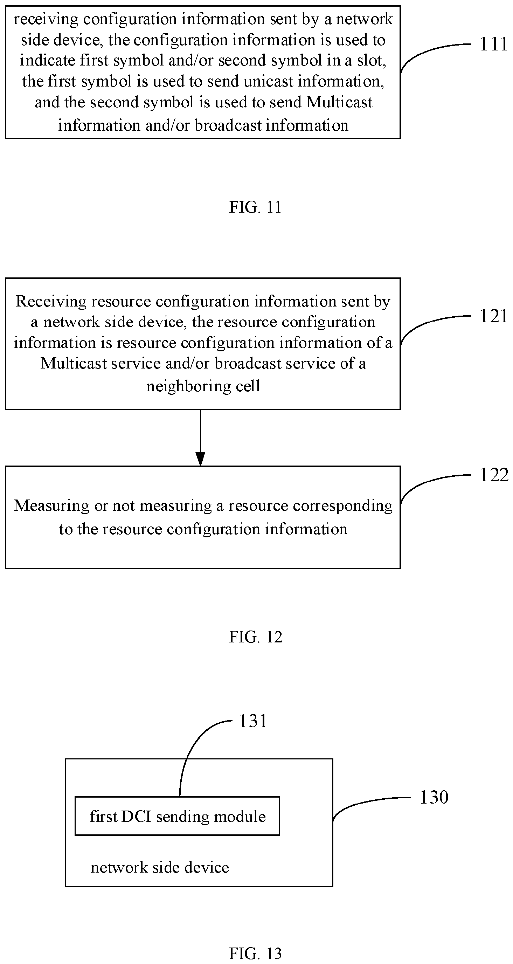

FIG. 11 is a schematic flowchart of a resource configuration method provided by an embodiment of the present disclosure. The method is applied to a terminal and includes the following steps:

Step 111: receiving configuration information sent by a network side device,
sending the configuration information to the terminal, wherein the configuration information is used to indicate first symbol information and/or second symbol information in one slot, the first symbol is a symbol used to send unicast information, and the second symbol is a symbol used to send Multicast information and/or broadcast information;
The first symbol information includes the number of time symbols and/or the number of PRBs occupied by the first symbol;
The second symbol information includes the number of time symbols and/or the number of PRBs occupied by the second symbol.

Optionally, the configuration information is also used to indicate that a column of reference signals is inserted for every y symbols in the slot; and/or, the configuration information is also used to indicate that a reference signal is inserted for every x subcarriers in the frequency domain corresponding to the slot, wherein the reference signal is a reference signal for Multicast and/or broadcast;

Optionally, the reference signal may be an SSB or an SSB set in a cell, or an SSB or an SSB set shared by a Multicast and/or broadcast area; and/or:

Optionally, the reference signal may be a unified CSI-RS or a CSI-RS set for terminals in a Multicast and/or broadcast group, or a CSI-RS or a CSI-RS set shared by a Multicast and/or broadcast area;

Optionally, the information of the reference signal needs to be exchanged between different network nodes;

Wherein, x and y are positive integers, x is determined according to the subcarrier spacing, and y is determined according to the subcarrier spacing;

The unicast information includes a reference signal corresponding to unicast, at least one of control signaling and data;

The Multicast information includes a reference signal corresponding to the Multicast, at least one of control signaling and data;

The broadcast information includes a reference signal corresponding to the broadcast, at least one of control signaling and data;

Optionally, x and y are positive integers, x is determined according to the subcarrier spacing, and y is also determined according to the measurement accuracy.

FIG. 12 is a schematic flowchart of an information measurement method provided by an embodiment of the present disclosure. The method is applied to a terminal and includes the following steps:

Step 121: Receiving resource configuration information sent by a network side device, the resource configuration information is resource configuration information of a Multicast service and/or broadcast service of a neighboring cell;

Step 122: Measuring or not measuring a resource corresponding to the resource configuration information.

In the embodiments of the present disclosure, the base station and/or the cell exchange MBSFN configuration information; or the base station and/or the cell obtains the MBSFN configuration information of the neighboring cell from the network administrator. Then the base station and/or the cell notifies the terminal of the MBSFN configuration information of the neighboring cell through signaling, so that unicast signals and channel information do not need to be transmitted on the unit resource block of the MBSFN. The terminal ignores this MBSFN resource when measuring the signal quality of the neighboring cell, or, if the terminal has MBMS service, it only measures the MBSFN resource.

Optionally, the measuring or not measuring the resource corresponding to the resource configuration information includes:

If the terminal only has a unicast service, not measuring the resource corresponding to the resource configuration information;

If the terminal only has a Multicast service and/or broadcast service, measuring the resource corresponding to the resource configuration information;

If the terminal has both a unicast service and a Multicast service and/or a broadcast service, measuring the resource corresponding to the resource configuration information.

In the embodiment of the present disclosure, the terminal may measure the corresponding MBSFN resource for a specific MBMS service. If the UE has unicast services, the LTE ignores the MBSFN resources when measuring the signal quality of neighboring cells. If the UE has both the unicast service and the MBMS service, it reports the measurement information of the two types of resources respectively.

The unicast service is configured on a dedicated active BWP, the Multicast service is configured on the initial BWP or a BWP associated with the initial BWP, and the association relationship between the BWP sending the Multicast service and the initial BWP is indicated in the system message, such as offset relationships on Corset and Searchspace.

FIG. 13 is a schematic structural diagram of a network side device provided by an embodiment of the present disclosure. The network side device 130 includes:

a first DCI sending module 131, configured to send a first downlink control information (DCI) scrambled by a first radio network temporary identifier (RNTI) to a terminal, the first DCI being used to indicate whether control information of one Multicast service and/or broadcast service is changed or related information is changed;

Wherein, the control information includes configuration information of Multicast service and/or broadcast service.

Optionally, the configuration information of the Multicast service and/or broadcast service includes at least one of the following:

a Temporary Mobile Group Identity (TMGI) list;
session ID corresponding to TMGI in the TMGI list;
group RNTI (G-RNTI) corresponding to the TMGI in the TMGI list;
bandwidth Part (BWP) corresponding to the TMGI in the TMGI list;
subcarrier spacing corresponding to the TMGI in the TMGI list;
a logical channel and/or logical channel group corresponding to the TMGI in the TMGI list;
Discontinuous Reception (DRX) configuration corresponding to the TMGI in the TMGI list;
uplink resource configuration fed back by Hybrid Automatic Repeat reQuest (HARQ) corresponding to the TMGI in the TMGI list;
uplink resource configuration reported by channel state information (CSI) corresponding to the TMGI in the TMGI list.

Optionally, the first DCI is used to indicate at least one of the following:

control information of Multicast service and/or broadcast service having been changed;
Whether the control information of the Multicast service and/or broadcast service having been changed;
Changed control information of the Multicast service and/or broadcast service;
A Type of the changed control information of the Multicast service and/or broadcast service;
resource information of acquiring the changed control information of the Multicast service and/or broadcast service.

Optionally, when the first DCI is used to indicate that the control information of the Multicast service and/or broadcast service has been changed, the first DCI is also used to indicate at least one of the following:

configuration information of the Multicast service and/or broadcast service having being changed;
a transmission mode of the Multicast service and/or broadcast service being changed from a single cell point-to-multipoint (SC-PTM) transmission mode to the multi cell point-to-multipoint (MBMS) transmission mode;
The transmission mode of the Multicast service and/or broadcast service being changed from the multi cell point-to-multipoint transmission mode to the single cell point-to-multipoint transmission mode;
The transmission mode of the Multicast service and/or broadcast service being changed from a point-to-multipoint transmission mode to a point-to-point transmission mode;
The transmission mode of the Multicast service and/or broadcast service being changed from the point-to-point transmission mode to the point-to-multipoint transmission mode;
A Multicast or broadcast service whose control information have been changed;
adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service;
Turning On or Off CSI feedback of the Multicast service and/or broadcast service.

Optionally, the first DCI is used to indicate at least one of the following:

configuration information of the Multicast service and/or broadcast service having being changed;
a transmission mode of the Multicast service and/or broadcast service being changed from a single cell point-to-multipoint transmission mode to a multi cell point-to-multipoint transmission mode;
The transmission mode of the Multicast service and/or broadcast service being changed from the multi cell point-to-multipoint transmission mode to the single cell point-to-multipoint transmission mode;
The transmission mode of the Multicast service and/or broadcast service being changed from a point-to-multipoint transmission mode to a point-to-point transmission mode;
The transmission mode of the Multicast service and/or broadcast service being changed from the point-to-point transmission mode to the point-to-multipoint transmission mode;
A Multicast or broadcast service whose control information have been changed;
adding a new set of Multicast service and/or broadcast services;
removing a set of existing Multicast service and/or broadcast services;

modification of a set of existing Multicast service and/or broadcast services;
Turning Off or On HARQ feedback of the Multicast service and/or broadcast service;
Turning On or Off CSI feedback of the Multicast service and/or broadcast service.

Optionally, the network side device also includes:
a change information sending module, configured to include information for indicating that the control information of the Multicast service and/or broadcast service have changed in the first DCI, and/or:
In a case that a control information resource for indicating the Multicast service and/or broadcast service carries change information, send the change information of the control information of the Multicast service and/or broadcast service.

Optionally, the network side device also includes:

a first broadcast module, configured to broadcast control information of each Multicast service and/or broadcast service among control information of a plurality of Multicast services and/or broadcast services; or,
a second broadcast module, configured to broadcast control information of a first Multicast service and/or broadcast service among the control information of the plurality of Multicast services and/or broadcast services, and control information of other Multicast services and/or broadcast services among the control information of the plurality of Multicast services and/or broadcast services being the same as the control information of the first Multicast service and/or broadcast service;
Wherein, the control information includes at least one of a repetition period, an offset, an initial subframe or a modification period.

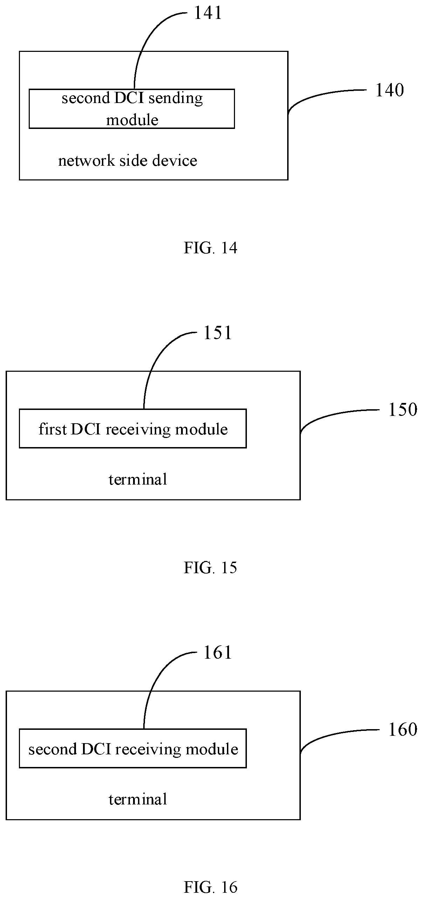

FIG. 14 is a schematic structural diagram of a network side device provided by an embodiment of the present disclosure. The network side device 140 includes:

a second DCI sending module 141, configured to send a second DCI scrambled by a second RNTI to a terminal, the second DCI being used to indicate whether control information of a Multicast service and/or broadcast service set is changed or related information is changed;
Wherein, the control information includes configuration information of Multicast service and/or broadcast service.

Optionally, the configuration information of the Multicast service and/or broadcast service includes at least one of the following:

a TMGI list;
session ID corresponding to TMGI in the TMGI list;
G-RNTI corresponding to the TMGI in the TMGI list;
BWP corresponding to the TMGI in the TMGI list;
subcarrier spacing corresponding to the TMGI in the TMGI list;
a logical channel and/or logical channel group corresponding to the TMGI in the TMGI list;
DRX configuration corresponding to the TMGI in the TMGI list;
uplink resource configuration fed back by HARQ corresponding to the TMGI in the TMGI list;
uplink resource configuration reported by CSI corresponding to the TMGI in the TMGI list.

Optionally, the first DCI is used to indicate at least one of the following:

control information of Multicast service and/or broadcast service having been changed;
Whether the control information of the Multicast service and/or broadcast service having been changed;
Changed control information of the Multicast service and/or broadcast service;
A Type of the changed control information of the Multicast service and/or broadcast service;
resource information of acquiring the changed control information of the Multicast service and/or broadcast service.

Optionally, the Multicast service and/or broadcast service set is a set of part or all Multicast services and/or broadcast services in a cell; and/or,
The Multicast service and/or broadcast service set is a set of part or all Multicast services and/or broadcast services in one Multicast area and/or broadcast area.

Optionally, the second DCI is used to indicate at least one of the following:

control information of the Multicast service and/or broadcast service set having been changed;
Whether the control information of the Multicast service and/or broadcast service set having been changed;

Changed control information of the Multicast service and/or broadcast service set;
A type of the changed control information of the Multicast service and/or broadcast service set;
resource information of acquiring the changed control information of the Multicast service and/or broadcast service set.

Optionally, when the second DCI is used to indicate that the control information of the Multicast service and/or broadcast service set has been changed, the second DCI is also used to indicate at least one of the following:

configuration information of the Multicast service and/or broadcast service set having being changed;
a transmission mode of the Multicast service and/or broadcast service set being changed from a single cell point-to-multipoint transmission mode to the multi cell point-to-multipoint transmission mode;
The transmission mode of the Multicast service and/or broadcast service set being changed from the multi cell point-to-multipoint transmission mode to the single cell point-to-multipoint transmission mode;
The transmission mode of the Multicast service and/or broadcast service set being changed from a point-to-multipoint transmission mode to a point-to-point transmission mode;
The transmission mode of the Multicast service and/or broadcast service set being changed from the point-to-point transmission mode to the point-to-multipoint transmission mode;
Multicast or broadcast services where the control information of the Multicast service and/or broadcast service has been changed;
adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service set;
Turning On or Off CSI feedback of the Multicast service and/or broadcast service set.

Optionally, the second DCI is used to indicate at least one of the following:

configuration information of the Multicast service and/or broadcast service set having being changed;
a transmission mode of the Multicast service and/or broadcast service set being changed from a single cell point-to-multipoint transmission mode to a multi cell point-to-multipoint transmission mode;
The transmission mode of the Multicast service and/or broadcast service set being changed from the multi cell point-to-multipoint transmission mode to the single cell point-to-multipoint transmission mode;
The transmission mode of the Multicast service and/or broadcast service set being changed from a point-to-multipoint transmission mode to a point-to-point transmission mode;
The transmission mode of the Multicast service and/or broadcast service set being changed from the point-to-point transmission mode to the point-to-multipoint transmission mode;
Multicast or broadcast services where the control information of the Multicast service and/or broadcast service set have been changed;
adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service set;
Turning On or Off CSI feedback of the Multicast service and/or broadcast service set.
configuration information of the changed Multicast services and/or broadcast services in the Multicast service and/or broadcast service set having being changed;
a transmission mode of the changed Multicast services and/or broadcast services in the Multicast service and/or broadcast service set being changed from a single cell point-to-multipoint transmission mode to the multi cell point-to-multipoint transmission mode;
The transmission mode of the changed Multicast services and/or broadcast services in the Multicast service and/or broadcast service set being changed from the multi cell point-to-multipoint transmission mode to the single cell point-to-multipoint transmission mode;
The transmission mode of the changed Multicast services and/or broadcast services in the Multicast service and/or broadcast service set being changed from a point-to-multipoint transmission mode to a point-to-point transmission mode;
The transmission mode of the changed Multicast services and/or broadcast services in the Multicast service and/or broadcast service set being changed from the point-to-point transmission mode to the point-to-multipoint transmission mode;
Multicast or broadcast services whose control information have been changed in the changed Multicast services and/or broadcast services in the Multicast service and/or broadcast service set;
adding a new set of Multicast service and/or broadcast services;
removing a set of existing Multicast service and/or broadcast services;
modification of a set of existing Multicast service and/or broadcast services;
Turning Off or On HARQ feedback of part of Multicast services and/or broadcast services in the Multicast service and/or broadcast service set;
Turning On or Off CSI feedback of part of Multicast services and/or broadcast services in the Multicast service and/or broadcast service set.

Optionally, the network side device also includes:
a change information sending module, configured to include information for indicating that the control information of the Multicast service and/or broadcast service have changed in the first DCI, and/or:
In a case that a control information resource for indicating the Multicast service and/or broadcast service carries change information, send the change information of the control information of the Multicast service and/or broadcast service.

Optionally, the network side device also includes:

a first broadcast module, configured to broadcast control information of each Multicast service and/or broadcast service among control information of a plurality of Multicast services and/or broadcast services; or,
a second broadcast module, configured to broadcast control information of a first Multicast service and/or broadcast service among the control information of the plurality of Multicast services and/or broadcast services, and control information of other Multicast services and/or broadcast services among the control information of the plurality of Multicast services and/or broadcast services being the same as the control information of the first Multicast service and/or broadcast service;
Wherein, the control information includes at least one of a repetition period, an offset, an initial subframe or a modification period.

FIG. 15 is a schematic structural diagram of a terminal provided by an embodiment of the present disclosure. The terminal 150 includes:

a first DCI receiving module 151, configured to receive a first DCI sent by a network side device and scrambled by a first RNTI, the first DCI being used to indicate whether the control information of one Multicast service and/or broadcast service is changed or related information is changed;
Wherein, the control information includes configuration information of Multicast service and/or broadcast service.

Optionally, the configuration information of the Multicast service and/or broadcast service includes at least one of the following:

a Temporary Mobile Group Identity (TMGI) list;
session ID corresponding to TMGI in the TMGI list;
group RNTI (G-RNTI) corresponding to the TMGI in the TMGI list;
bandwidth Part (BWP) corresponding to the TMGI in the TMGI list;
subcarrier spacing corresponding to the TMGI in the TMGI list;
a logical channel and/or logical channel group corresponding to the TMGI in the TMGI list;
Discontinuous Reception (DRX) configuration corresponding to the TMGI in the TMGI list;
uplink resource configuration fed back by Hybrid Automatic Repeat reQuest (HARQ) corresponding to the TMGI in the TMGI list;
uplink resource configuration reported by channel state information (CSI) corresponding to the TMGI in the TMGI list.

Optionally, the first DCI is used to indicate at least one of the following:

control information of Multicast service and/or broadcast service having been changed;
Whether the control information of the Multicast service and/or broadcast service having been changed;
Changed control information of the Multicast service and/or broadcast service;
A Type of the changed control information of the Multicast service and/or broadcast service;
resource information of acquiring the changed control information of the Multicast service and/or broadcast service.

Optionally, when the first DCI is used to indicate that the control information of the Multicast service and/or broadcast service has been changed, the first DCI is also used to indicate at least one of the following:

35

configuration information of the Multicast service and/or broadcast service having being changed;

a transmission mode of the Multicast service and/or broadcast service being changed from a single cell point-to-multipoint (SC-PTM) transmission mode to the multi cell point-to-multipoint (MBMS) transmission mode;

The transmission mode of the Multicast service and/or broadcast service being changed from the multi cell point-to-multipoint transmission mode to the single cell point-to-multipoint transmission mode;

The transmission mode of the Multicast service and/or broadcast service being changed from a point-to-multipoint transmission mode to a point-to-point transmission mode;

The transmission mode of the Multicast service and/or broadcast service being changed from the point-to-point transmission mode to the point-to-multipoint transmission mode;

A Multicast or broadcast service whose control information have been changed;

adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service;

Turning On or Off CSI feedback of the Multicast service and/or broadcast service.

Optionally, the first DCI is used to indicate at least one of the following:

configuration information of the Multicast service and/or broadcast service having being changed;

a transmission mode of the Multicast service and/or broadcast service being changed from a single cell point-to-multipoint transmission mode to a multi cell point-to-multipoint transmission mode;

The transmission mode of the Multicast service and/or broadcast service being changed from the multi cell point-to-multipoint transmission mode to the single cell point-to-multipoint transmission mode;

The transmission mode of the Multicast service and/or broadcast service being changed from a point-to-multipoint transmission mode to a point-to-point transmission mode;

The transmission mode of the Multicast service and/or broadcast service being changed from the point-to-point transmission mode to the point-to-multipoint transmission mode;

A Multicast or broadcast service whose control information have been changed;

adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service;

Turning On or Off CSI feedback of the Multicast service and/or broadcast service.

Optionally, the terminal also includes:
a change information receiving module, configured to include information for indicating that the control information of the Multicast service and/or broadcast service have changed in the first DCI, and/or:
In a case that a control information resource for indicating the Multicast service and/or broadcast service carries change information, sending the change information of the control information of the Multicast service and/or broadcast service.

FIG. 16 is a schematic structural diagram of a terminal provided by an embodiment of the present disclosure. The terminal 160 includes:

a second DCI receiving module 161, configured to receive a second DCI sent by aa network side device and scrambled by a second RNTI, the second DCI being used to indicate whether control information of a Multicast service and/or broadcast service set is changed or related information is changed;

Wherein, the control information includes configuration information of Multicast service and/or broadcast service.

Optionally, the configuration information of the Multicast service and/or broadcast service includes at least one of the following:

a TMGI list;

session ID corresponding to TMGI in the TMGI list;

G-RNTI corresponding to the TMGI in the TMGI list;

BWP corresponding to the TMGI in the TMGI list;

subcarrier spacing corresponding to the TMGI in the TMGI list;

a logical channel and/or logical channel group corresponding to the TMGI in the TMGI list;

DRX configuration corresponding to the TMGI in the TMGI list;

uplink resource configuration fed back by HARQ corresponding to the TMGI in the TMGI list;

uplink resource configuration reported by CSI corresponding to the TMGI in the TMGI list.

Optionally, the Multicast service and/or broadcast service set is a set of part or all Multicast services and/or broadcast services in a cell; and/or,

The Multicast service and/or broadcast service set is a set of part or all Multicast services and/or broadcast services in one Multicast area and/or broadcast area.

Optionally, the second DCI is used to indicate at least one of the following:

control information of a Multicast service and/or broadcast service set having been changed;
Whether the control information of the Multicast service and/or broadcast service set having been changed;
Changed control information of the Multicast service and/or broadcast service set;
A Type of the changed control information of the Multicast service and/or broadcast service set;
resource information of acquiring the changed control information of the Multicast service and/or broadcast service set.

Optionally, when the second DCI is used to indicate that the control information of the Multicast service and/or broadcast service set has been changed, the second DCI is also used to indicate at least one of the following:

configuration information of the Multicast service and/or broadcast service set having being changed;
a transmission mode of the Multicast service and/or broadcast service set being changed from a single cell point-to-multipoint transmission mode to a multi cell point-to-multipoint transmission mode;
The transmission mode of the Multicast service and/or broadcast service set being changed from the multi cell point-to-multipoint transmission mode to the single cell point-to-multipoint transmission mode;
The transmission mode of the Multicast service and/or broadcast service set being changed from a point-to-multipoint transmission mode to a point-to-point transmission mode;
The transmission mode of the Multicast service and/or broadcast service set being changed from the point-to-point transmission mode to the point-to-multipoint transmission mode;
Multicast or broadcast services where the control information of the Multicast service and/or broadcast service set have been changed;
adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service set;
Turning On or Off CSI feedback of the Multicast service and/or broadcast service set.

Optionally, the second DCI is used to indicate at least one of the following:

configuration information of the Multicast service and/or broadcast service set having being changed;
a transmission mode of the Multicast service and/or broadcast service set being changed from a single cell point-to-multipoint transmission mode to a multi cell point-to-multipoint transmission mode;
The transmission mode of the Multicast service and/or broadcast service set being changed from the multi cell point-to-multipoint transmission mode to the single cell point-to-multipoint transmission mode;
The transmission mode of the Multicast service and/or broadcast service set being changed from a point-to-multipoint transmission mode to a point-to-point transmission mode;
The transmission mode of the Multicast service and/or broadcast service set being changed from the point-to-point transmission mode to the point-to-multipoint transmission mode;
Multicast or broadcast services where the control information of the Multicast service and/or broadcast service set have been changed;
adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service set;
Turning On or Off CSI feedback of the Multicast service and/or broadcast service set.

Optionally, the second DCI is used to indicate the following content:
Identification information of changed Multicast services and/or broadcast services in the Multicast service and/or broadcast service set.

Optionally, the second DCI is also used to indicate at least one of the following:

configuration information of the changed Multicast services and/or broadcast services in the Multicast service and/or broadcast service set having being changed;

a transmission mode of the changed Multicast services and/or broadcast services in the Multicast service and/or broadcast service set being changed from a single cell point-to-multipoint transmission mode to the multi cell point-to-multipoint transmission mode;

The transmission mode of the changed Multicast services and/or broadcast services in the Multicast service and/or broadcast service set being changed from the multi cell point-to-multipoint transmission mode to the single cell point-to-multipoint transmission mode;

The transmission mode of the changed Multicast services and/or broadcast services in the Multicast service and/or broadcast service set being changed from a point-to-multipoint transmission mode to a point-to-point transmission mode;

The transmission mode of the changed Multicast services and/or broadcast services in the Multicast service and/or broadcast service set being changed from the point-to-point transmission mode to the point-to-multipoint transmission mode;

Multicast or broadcast services whose control information have been changed in the changed Multicast services and/or broadcast services in the Multicast service and/or broadcast service set;

adding a new set of Multicast service and/or broadcast services;

removing a set of existing Multicast service and/or broadcast services;

modification of a set of existing Multicast service and/or broadcast services;

Turning Off or On HARQ feedback of part of Multicast services and/or broadcast services in the Multicast service and/or broadcast service set;

Turning On or Off CSI feedback of part of Multicast services and/or broadcast services in the Multicast service and/or broadcast service set.

Optionally, the terminal also includes:

a change information receiving module, configured to include information for indicating that the control information of the Multicast service and/or broadcast service have changed in the second DCI, and/or:

In a case that a control information resource for indicating the Multicast service and/or broadcast service carries change information, sending the change information of the control information of the Multicast service and/or broadcast service.

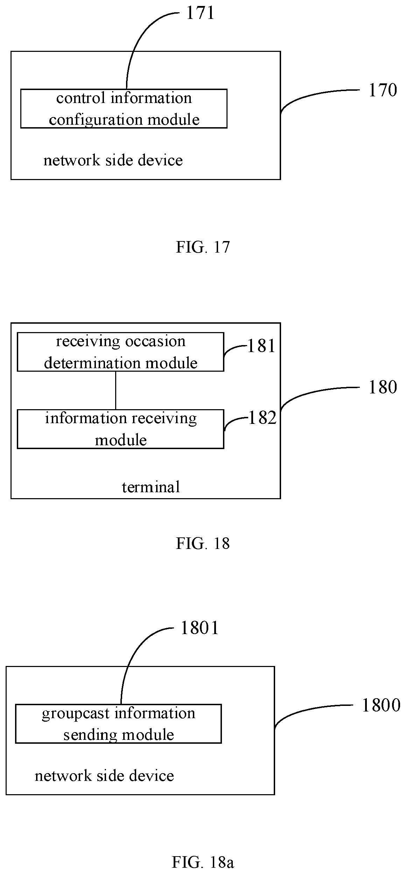

FIG. 17 is a schematic structural diagram of a network side device provided by an embodiment of the present disclosure. The network side device 170 includes:

a control information configuration module 171, configured to configure control information of a set of Multicast services and/or broadcast services for m Multicast services and/or broadcast services;

In a cell where the m Multicast services and/or broadcast services are located, and there are n Multicast services and/or broadcast services in a Multicast area and/or broadcast area;

The n Multicast services and/or broadcast services are configured with control information of k sets of Multicast services and/or broadcast services;

m, n, k are natural numbers greater than or equal to 1, m is less than or equal to n, and k is less than or equal to n.

Optionally, the network side device also includes:

a configuration module, configured to configure at least one of a repetition period, a modification period, and an initial offset for the sending of control information of k sets of Multicast services and/or broadcast services;

At least one of the repetition period, the modification period, and the initial offset of the control information of the k sets of Multicast services and/or broadcast services being the same or different.

Optionally, the network side device also includes:

a control information sending module, configured to, in the repetition period of the control information of the Multicast service and/or broadcast service, send control information of n Multicast services and/or broadcast services to the terminal at intervals of t time domain units, where n and t are positive integers.

Optionally, the network side device also includes:

a first information sending module, configured to, send first information to the terminal, wherein the first information is used to indicate a first sending time, the first sending time is sending time of the control information of the n Multicast services and/or broadcast services in a corresponding time domain unit.

Optionally, the first information includes at least one of the following:

information for indicating a start time of the first sending time;

information for indicating a duration of the first sending time;

Information for indicating a first offset, wherein the first offset is an offset between the first sending time and a position of RMSI of SSB.

FIG. 18 is a schematic structural diagram of a terminal provided by an embodiment of the present disclosure. The terminal 180 includes:

a receiving occasion determination module 181, configured to determine the monitoring occasion of the physical downlink control channel PDCCH of one or more Multicast messages,

The information receiving module 182 is configured to receive monitoring occasion of the physical downlink control channel (PDCCH) of one or more Multicast messages, and receiving Multicast information at the monitoring occasion of the PDCCH of the one or more Multicast messages;

Wherein, occasion of one Multicast message is the monitoring occasion of the PDCCH of a group of Multicast messages;

Wherein, the monitoring occasion of the PDCCH of one Multicast message includes at least one slot;

Wherein, each slot included in the monitoring occasion of the PDCCH of one Multicast message includes at least one time symbol;

Wherein, the Multicast information includes at least one of the following:

DCI of a network scheduling Multicast service;

DCI of configuration information of the network scheduling Multicast service;

DCI of information of a control channel of the Multicast service;

DCI of the information of the control channel of the network scheduling Multicast service;

DCI of the scheduling information of the information of the control channel of the Multicast service;

DCI of modification information of the control channel of the network scheduling Multicast service;

DCI of the modification information of the control channel of the Multicast service;

DCI of the scheduling information of the modification information of the control channel of the Multicast service.

Optionally, the receiving occasion determination module is configured to determine the monitoring occasion of the PDCCH of the Multicast message according to a search space of the Multicast message or a search space set of the Multicast message;

Determining the search space of the Multicast message by at least one of the following methods:

The UE reads the information of the common search space set of the Nth type PDCCH configured by the search space used for the Multicast message in the PDCCH common configuration configured by the network through the RRC message; wherein, the common search space is used for the DCI format scrambled by the Multicast-RNTI with Cyclic redundancy check (CRC) on the primary cell;

The UE reads a search space identified as a common type in the PDCCH dedicated configuration configured in the RRC message, and the search space is used for the DCI format scrambling by the Multicast-RNTI with CRC on the primary cell;

If the UE does not find that the RRC message is configured with the information of the common search space set of the Nth type of PDCCH used for the search space configuration of the Multicast message, the association relationship between the PDCCH monitoring occasion for the Nth type of PDCCH common search space set and the SSB block index is the same as the association relationship between the PDCCH monitoring occasion for the Nth type of PDCCH common search space set and the PDCCH monitoring occasion of the PDCCH common search space of type 0;

Find out a CCE aggregation level in the common search space set of the Nth type of PDCCH and the number of PDCCH candidates for each CCE aggregation level by a look-up table;

Wherein, the information of the common search space set of the Nth type of PDCCH, and/or the information of the search space identified as the common type, includes at least one of the following information:

A search space label;

first indication information for indicating a first time symbol in a control resource set in one slot of a PDCCH monitoring occasion for a Multicast message;

second indication information for indicating a monitoring period and a time offset at the PDCCH monitoring occasion for the Multicast message;

third indication information for indicating an initial symbol and/or duration in a monitoring period of the PDCCH monitoring occasion for the Multicast message;

fourth indication information for indicating a monitoring slot and/or monitoring time symbol of the PDCCH monitoring occasion of the Multicast message in a bitmap form;

fifth indication information for indicating a monitoring time symbol in one slot of the PDCCH monitoring occasion for the Multicast message in the bitmap form;

sixth indication information for indicating the initial symbol and/or duration of one slot at the PDCCH monitoring occasion for the Multicast message;

seventh indication information for indicating an index of a control resource set associated with the search space.

Optionally, the monitoring occasion of PDCCH of one or more Multicast messages constitutes one Multicast message occasion. Optionally, the receiving occasion determination module also includes:

a radio frame determination module, configured to determine the Multicast scheduling radio frame (MF), wherein MF is a system frame that includes MOs or a starting point of MOs of one or more Multicast services.

Optionally, the receiving occasion determination module also includes:

A beam selection module configured to select one or more beams for receiving Multicast scheduling information.

Optionally, the occasion of one Multicast message is the monitoring occasion of PDCCHs of Y Multicast messages, wherein Y is determined according to the number of SSBs actually transmitted in the cell.

Optionally, the occasion of one Multicast message being the monitoring occasion of the PDCCH of a group of Multicast messages, including:

a Z-th PDCCH monitoring occasion used in the occasions of the Multicast message corresponding to a Z-th transmitted SSB, and Z is a positive integer.

FIG. 18a is a schematic structural diagram of a network side device provided by an embodiment of the present disclosure. The network side device 1800 includes:

a Multicast information sending module 1801, configured to send Multicast information at the monitoring occasion of the PDCCH of the one or more Multicast messages;

Wherein, the monitoring occasion of the PDCCH of one Multicast message includes at least one slot;

Wherein, each slot included in the monitoring occasion of the PDCCH of one Multicast message includes at least one time symbol;

Wherein, the Multicast information includes at least one of the following:

DCI of a network scheduling Multicast service;

DCI of configuration information of the network scheduling Multicast service;

DCI of information of a control channel of the Multicast service;

DCI of the information of the control channel of the network scheduling Multicast service;

DCI of the scheduling information of the information of the control channel of the Multicast service;

DCI of modification information of the control channel of the network scheduling Multicast service;

DCI of the modification information of the control channel of the Multicast service;

DCI of the scheduling information of the modification information of the control channel of the Multicast service.

Optionally, the Multicast information sending module includes:

an associating unit, configured to associate the monitoring occasion of the PDCCH of the Multicast message with a search space of a corresponding Multicast message or a search space set of the Multicast message;

Configuring the search space for Multicast messages by at least one of the following methods:

information of a common search space set of an Nth type of PDCCH configured by the search space used for the Multicast message in PDCCH common configuration configured through an RRC message; wherein the common search space is used for a DCI format scrambled by a Multicast-RNTI with Cyclic redundancy check (CRC) on a primary cell;

a search space identified as a common type in PDCCH dedicated configuration configured through the RRC message, and the search space being used for the DCI format scrambling by the Multicast-RNTI with CRC on the primary cell;

Wherein, the information of the common search space set of the Nth type of PDCCH, and/or the information of the search space identified as the common type, includes at least one of the following information:

A search space label;

first indication information for indicating a first time symbol in a control resource set in one slot of a PDCCH monitoring occasion for a Multicast message;

second indication information for indicating a monitoring period and a time offset at the PDCCH monitoring occasion for the Multicast message;

third indication information for indicating an initial symbol and/or duration in a monitoring period of the PDCCH monitoring occasion for the Multicast message;

fourth indication information for indicating a monitoring slot and/or monitoring time symbol of the PDCCH monitoring occasion of the Multicast message in a bitmap form;

fifth indication information for indicating a monitoring time symbol in one slot of the PDCCH monitoring occasion for the Multicast message in the bitmap form;

sixth indication information for indicating the initial symbol and/or duration of one slot at the PDCCH monitoring occasion for the Multicast message;

seventh indication information for indicating an index of a control resource set associated with the search space.

Optionally, the monitoring occasion of PDCCH of one or more Multicast messages constitutes one Multicast message occasion.

Optionally, the Multicast information sending module also includes:
a Multicast scheduling radio frame determining module, configured to determine a Multicast scheduling radio frame, wherein MF is a system frame that includes MOs or a starting point of MOs of one or more Multicast services.

Optionally, the Multicast information sending module also includes:
A beam selection module, configured to select one or more beams for sending Multicast scheduling information.

Optionally, the occasion of one Multicast message is the monitoring occasion of PDCCHs of Y Multicast messages, wherein Y is determined according to the number of SSBs actually transmitted in the cell.

Optionally, the occasion of one Multicast message being the monitoring occasion of the PDCCH of a group of Multicast messages, including:
a Z-th PDCCH monitoring occasion used in the occasion of the Multicast message corresponding to a Z-th transmitted SSB, and Z is a positive integer.

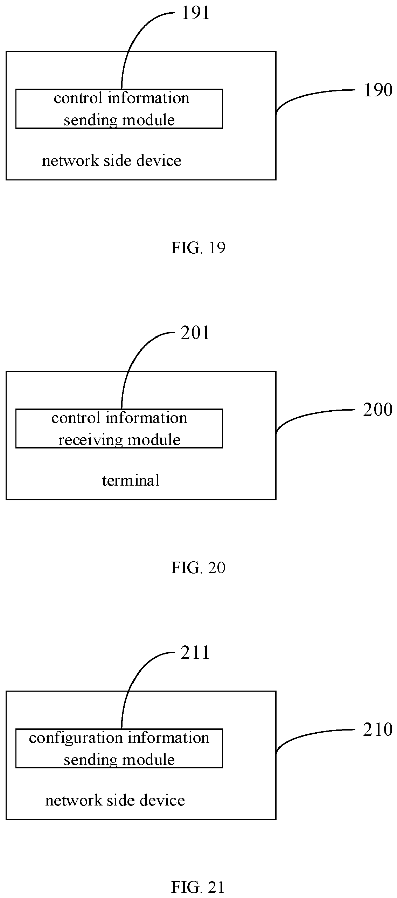

FIG. 19 is a schematic structural diagram of a network side device provided by an embodiment of the present disclosure. The network side device 190 includes:
a control information sending module 191, configured to, in a repetition period of control information of a Multicast service and/or broadcast service, send control information of n Multicast services and/or broadcast services to a terminal at intervals of t time domain units, wherein n and t are positive integers.

Optionally, the network side device also includes:
a first information sending module, configured to send first information to the terminal, wherein the first information is used to indicate a first sending time, the first sending time is a sending time of the control information of the n Multicast services and/or broadcast services in the corresponding time domain unit.

Optionally, the first information includes at least one of the following:

information for indicating an initial time of the first sending time;

information for indicating a duration of the first sending time;

information for indicating a first offset, wherein the first offset is an offset between the first sending time and a position of RMSI of SSB.

FIG. 20 is a schematic structural diagram of a terminal provided by an embodiment of the present disclosure. The terminal 200 includes:
a control information receiving module 201, configured to receive control information of n Multicast services and/or broadcast services sent by a network side device at intervals of t time domain units in a repetition period of control information of a Multicast service and/or broadcast service, wherein n and t are positive integers.

Optionally, the control information receiving module is configured to obtain the time domain unit corresponding to the control information of the Multicast service and/or broadcast service within the repetition period; monitor the control information of the corresponding Multicast service and/or broadcast service in the time domain unit.

Optionally, the time domain unit is calculated according to the following formula:

$$SFN \bmod sc\text{-}mcch\text{-}RepetitionPeriod = sc\text{-}mcch\text{-}Offset + (sc\text{-}mcch\text{-}RepetitionPeriod) \text{ divided by } (M/n) * ([Multicast\_ID /n] - 1);$$

SFN is a serial number of the time domain unit corresponding to the control information of the first Multicast service and/or broadcast service, sc-mcch-RepetitionPeriod is a size of the repetition period, and sc-mcch-Offset is an offset of an initial time domain unit of the first repetition period, M is the total number of control information of the Multicast service and/or broadcast service sent within the repetition period, and the Multicast_ID is the serial number of the Multicast service and/or broadcast service, so the Multicast_ID is determined according to the sending sequence of the control information of the Multicast service and/or broadcast service within the repetition period.

Optionally, the control information receiving module is configured to receive the first information sent by the network side device, wherein the first information is used to indicate a second sending time, and the second sending time is a sending time of the control information of the n Multicast services and/or broadcast services in the corresponding time domain unit;

Receive the control information of the n Multicast services and/or broadcast services at the second sending time.

Optionally, the first information includes at least one of the following information:

information for indicating an initial time of the second sending time;
information for indicating a duration of the second sending time;
information for indicating a first offset, wherein the first offset is an offset between the second sending time and a position of RMSI of SSB.

FIG. 21 is a schematic structural diagram of a network side device provided by an embodiment of the present disclosure. The network side device 210 includes:

a configuration information sending module 211, configured to send configuration information to a terminal, sending the configuration information to the terminal, where the configuration information is used to indicate a first symbol information and/or a second symbol information in one slot, the first symbol is a symbol used to send unicast information, and the second symbol is a symbol used to send Multicast information and/or broadcast information;
the first symbol information, a number of time symbols and/or a number of PRBs occupied by the first symbol;
the second symbol information, a number of time symbols and/or the number of PRBs occupied by the second symbol.

Optionally, the configuration information is also used to indicate that a column of reference signals is inserted for every y symbols in the slot; and/or, the configuration information is also used to indicate that one reference signal is inserted for every x subcarriers in the frequency domain corresponding to the slot, wherein the reference signal is a reference signal for Multicast and/or broadcast;

Optionally, the reference signal may be one SSB or one SSB set of one cell, or one SSB or one SSB set shared by one Multicast and/or broadcast area; and/or:

Optionally, the reference signal may be a unified CSI-RS or a CSI-RS set for terminals in a Multicast and/or broadcast group, or a CSI-RS or a CSI-RS set shared in a Multicast and/or broadcast area;
Optionally, the information of the reference signal needs to be exchanged between different network nodes;
Wherein, x and y are positive integers, x is determined according to the subcarrier spacing, and y is determined according to the subcarrier spacing;
the unicast information includes a reference signal corresponding to unicast, at least one of control signaling and data;
the Multicast information includes a reference signal corresponding to the Multicast, at least one of control signaling and data;
the broadcasting information includes a reference signal corresponding to broadcast, at least one of control signaling and data;
Optionally, x and y are positive integers, x is determined according to the subcarrier spacing, and y is also determined according to the measurement accuracy.

An embodiment of the present disclosure also provides a terminal, including:

a configuration information receiving module, configured to receive the configuration information sent by a network side device,
sending the configuration information to the terminal, wherein the configuration information is used to indicate first symbol information and/or second symbol information in one slot, the first symbol is a symbol used to send unicast information, and the second symbol is a symbol used to send Multicast information and/or broadcast information;
The first symbol information includes the number of time symbols and/or the number of PRBs occupied by the first symbol;
The second symbol information includes the number of time symbols and/or the number of PRBs occupied by the second symbol.

Optionally, the configuration information is also used to indicate that a column of reference signals is inserted for every y symbols in the slot; and/or, the configuration information is also used to indicate that a reference signal is inserted for every x subcarriers in the frequency domain corresponding to the slot, wherein the reference signal is a reference signal for Multicast and/or broadcast;

Optionally, the reference signal may be an SSB or an SSB set in a cell, or an SSB or an SSB set shared by a Multicast and/or broadcast area; and/or:

Optionally, the reference signal may be a unified CSI-RS or a CSI-RS set for terminals in a Multicast and/or broadcast group, or a CSI-RS or a CSI-RS set shared by a Multicast and/or broadcast area;

Optionally, the information of the reference signal needs to be exchanged between different network nodes;

Wherein, x and y are positive integers, x is determined according to the subcarrier spacing, and y is determined according to the subcarrier spacing;

The unicast information includes a reference signal corresponding to unicast, at least one of control signaling and data;

The Multicast information includes a reference signal corresponding to the Multicast, at least one of control signaling and data;

The broadcast information includes a reference signal corresponding to the broadcast, at least one of control signaling and data;

Optionally, x and y are positive integers, x is determined according to the subcarrier spacing, and y is also determined according to the measurement accuracy.

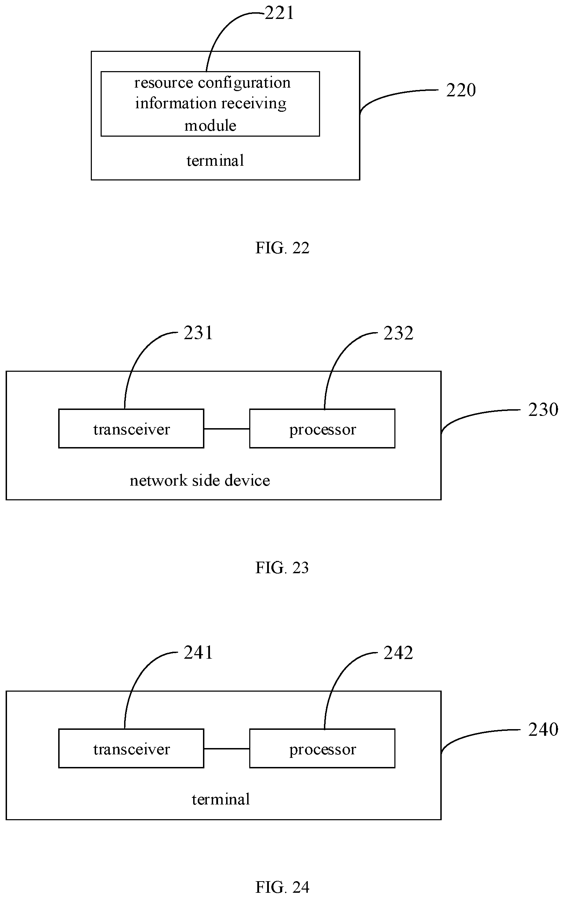

FIG. 22 is a schematic structural diagram of a terminal provided by an embodiment of the present disclosure. The terminal 220 includes:

a resource configuration information receiving module 221, configured to receive resource configuration information sent by a network side device, the resource configuration information is resource configuration information of a Multicast service and/or broadcast service of a neighboring cell;

a measuring module, configured to measure or not measure a resource corresponding to the resource configuration information.

Optionally, the measurement module is configured to,

If the terminal only has a unicast service, not measure the resource corresponding to the resource configuration information;

If the terminal only has a Multicast service and/or broadcast service, measure the resource corresponding to the resource configuration information;

If the terminal has both a unicast service and a Multicast service and/or a broadcast service, measure the resource corresponding to the resource configuration information.

FIG. 23 is a schematic structural diagram of a network side device provided by an embodiment of the present disclosure. The network side device 230 includes: a transceiver 231 and a processor 232;

The transceiver is configured to send a first downlink control information (DCI) scrambled by a first radio network temporary identifier (RNTI) to a terminal, the first DCI being used to indicate whether control information of one Multicast service and/or broadcast service is changed or related information is changed; or:

The transceiver is configured to send a second DCI scrambled by a second RNTI to the terminal, wherein the second DCI is used to indicate whether the control information of a Multicast service and/or broadcast service set is changed or related information is changed;

Wherein, the control information includes configuration information of Multicast service and/or broadcast service.

Optionally, the configuration information of the Multicast service and/or broadcast service includes at least one of the following:

a Temporary Mobile Group Identity (TMGI) list;
session ID corresponding to TMGI in the TMGI list;
group RNTI (G-RNTI) corresponding to the TMGI in the TMGI list;
bandwidth Part (BWP) corresponding to the TMGI in the TMGI list;
subcarrier spacing corresponding to the TMGI in the TMGI list;

a logical channel and/or logical channel group corresponding to the TMGI in the TMGI list;
Discontinuous Reception (DRX) configuration corresponding to the TMGI in the TMGI list;
uplink resource configuration fed back by Hybrid Automatic Repeat reQuest (HARQ) corresponding to the TMGI in the TMGI list;
uplink resource configuration reported by channel state information (CSI) corresponding to the TMGI in the TMGI list.

Optionally, the first DCI is used to indicate at least one of the following:

control information of Multicast service and/or broadcast service having been changed;
Whether the control information of the Multicast service and/or broadcast service having been changed;
Changed control information of the Multicast service and/or broadcast service;
A Type of the changed control information of the Multicast service and/or broadcast service;
resource information of acquiring the changed control information of the Multicast service and/or broadcast service.

Optionally, when the first DCI is used to indicate that the control information of the Multicast service and/or broadcast service has been changed, the first DCI is also used to indicate at least one of the following:

configuration information of the Multicast service and/or broadcast service having being changed;
a transmission mode of the Multicast service and/or broadcast service being changed from a single cell point-to-multipoint (SC-PTM) transmission mode to the multi cell point-to-multipoint (MBMS) transmission mode;
The transmission mode of the Multicast service and/or broadcast service being changed from the multi cell point-to-multipoint transmission mode to the single cell point-to-multipoint transmission mode;
The transmission mode of the Multicast service and/or broadcast service being changed from a point-to-multipoint transmission mode to a point-to-point transmission mode;
The transmission mode of the Multicast service and/or broadcast service being changed from the point-to-point transmission mode to the point-to-multipoint transmission mode;
A Multicast or broadcast service whose control information have been changed;
adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service;
Turning On or Off CSI feedback of the Multicast service and/or broadcast service.

Optionally, the first DCI is used to indicate at least one of the following:

configuration information of the Multicast service and/or broadcast service having being changed;
a transmission mode of the Multicast service and/or broadcast service being changed from a single cell point-to-multipoint transmission mode to a multi cell point-to-multipoint transmission mode;
The transmission mode of the Multicast service and/or broadcast service being changed from the multi cell point-to-multipoint transmission mode to the single cell point-to-multipoint transmission mode;
The transmission mode of the Multicast service and/or broadcast service being changed from a point-to-multipoint transmission mode to a point-to-point transmission mode;
The transmission mode of the Multicast service and/or broadcast service being changed from the point-to-point transmission mode to the point-to-multipoint transmission mode;
A Multicast or broadcast service whose control information have been changed;
adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service;
Turning On or Off CSI feedback of the Multicast service and/or broadcast service.

Optionally, the Multicast service and/or broadcast service set is a set of some or all Multicast services and/or broadcast services in a cell; and/or,
The Multicast service and/or broadcast service set is a set of some or all Multicast services and/or broadcast services in a Multicast area and/or broadcast area.

Optionally, the second DCI is used to indicate at least one of the following:

control information of the Multicast service and/or broadcast service set having been changed;

## EP 4 195 712 A1

Whether the control information of the Multicast service and/or broadcast service set having been changed;

Changed control information of the Multicast service and/or broadcast service set;

A type of the changed control information of the Multicast service and/or broadcast service set;

resource information of acquiring the changed control information of the Multicast service and/or broadcast service set.

Optionally, when the second DCI is used to indicate that the control information of the Multicast service and/or broadcast service set has been changed, the second DCI is also used to indicate at least one of the following:

configuration information of the Multicast service and/or broadcast service set having being changed;

a transmission mode of the Multicast service and/or broadcast service set being changed from a single cell point-to-multipoint transmission mode to the multi cell point-to-multipoint transmission mode;

The transmission mode of the Multicast service and/or broadcast service set being changed from the multi cell point-to-multipoint transmission mode to the single cell point-to-multipoint transmission mode;

The transmission mode of the Multicast service and/or broadcast service set being changed from a point-to-multipoint transmission mode to a point-to-point transmission mode;

The transmission mode of the Multicast service and/or broadcast service set being changed from the point-to-point transmission mode to the point-to-multipoint transmission mode;

Multicast or broadcast services where the control information of the Multicast service and/or broadcast service has been changed;

adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service set;

Turning On or Off CSI feedback of the Multicast service and/or broadcast service set.

Optionally, the second DCI is used to indicate at least one of the following:

configuration information of the Multicast service and/or broadcast service set having being changed;

a transmission mode of the Multicast service and/or broadcast service set being changed from a single cell point-to-multipoint transmission mode to a multi cell point-to-multipoint transmission mode;

The transmission mode of the Multicast service and/or broadcast service set being changed from the multi cell point-to-multipoint transmission mode to the single cell point-to-multipoint transmission mode;

The transmission mode of the Multicast service and/or broadcast service set being changed from a point-to-multipoint transmission mode to a point-to-point transmission mode;

The transmission mode of the Multicast service and/or broadcast service set being changed from the point-to-point transmission mode to the point-to-multipoint transmission mode;

Multicast or broadcast services where the control information of the Multicast service and/or broadcast service set have been changed;

adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service set;

Turning On or Off CSI feedback of the Multicast service and/or broadcast service set.

Optionally, the second DCI is used to indicate the following content:

identification information of the changed Multicast service and/or broadcast service in the Multicast service and/or broadcast service set.

Optionally, the second DCI is also used to indicate at least one of the following:

configuration information of the changed Multicast services and/or broadcast services in the Multicast service and/or broadcast service set having being changed;

a transmission mode of the changed Multicast services and/or broadcast services in the Multicast service and/or broadcast service set being changed from a single cell point-to-multipoint transmission mode to the multi cell point-to-multipoint transmission mode;

The transmission mode of the changed Multicast services and/or broadcast services in the Multicast service and/or broadcast service set being changed from the multi cell point-to-multipoint transmission mode to the single cell point-to-multipoint transmission mode;

The transmission mode of the changed Multicast services and/or broadcast services in the Multicast service and/or broadcast service set being changed from a point-to-multipoint transmission mode to a point-to-point transmission mode;

The transmission mode of the changed Multicast services and/or broadcast services in the Multicast service and/or broadcast service set being changed from the point-to-point transmission mode to the point-to-multipoint transmission mode;

Multicast or broadcast services whose control information have been changed in the changed Multicast services and/or broadcast services in the Multicast service and/or broadcast service set;

adding a new set of Multicast service and/or broadcast services;

removing a set of existing Multicast service and/or broadcast services;

modification of a set of existing Multicast service and/or broadcast services;

Turning Off or On HARQ feedback of part of Multicast services and/or broadcast services in the Multicast service and/or broadcast service set;

Turning On or Off CSI feedback of part of Multicast services and/or broadcast services in the Multicast service and/or broadcast service set.

Optionally, the transceiver is configured to include, in the first DCI, information for indicating that the control information of the Multicast service and/or the broadcast service has been changed, and/or:

In a case that a control information resource for indicating the Multicast service and/or broadcast service carries change information, send the change information of the control information of the Multicast service and/or broadcast service.

Optionally, the transceiver is configured to broadcast control information of each Multicast service and/or broadcast service among control information of a plurality of Multicast services and/or broadcast services; or,

broadcast control information of a first Multicast service and/or broadcast service among the control information of the plurality of Multicast services and/or broadcast services, and control information of other Multicast services and/or broadcast services among the control information of the plurality of Multicast services and/or broadcast services being the same as the control information of the first Multicast service and/or broadcast service;

Wherein, the control information includes at least one of a repetition period, an offset, an initial subframe or a modification period.

FIG. 24 is a schematic structural diagram of a terminal provided by an embodiment of the present disclosure. The terminal 240 includes: a transceiver 241 and a processor 242;

The transceiver is configured to receive a first DCI sent by a network side device and scrambled by a first RNTI, the first DCI being used to indicate whether the control information of one Multicast service and/or broadcast service is changed or related information is changed; or:

The transceiver is configured to receive a second DCI sent by the network side device and scrambled by a second RNTI, the second DCI is used to indicate whether the control information of a Multicast service and/or broadcast service set is changed or related information is changed;

Optionally, the configuration information of the Multicast service and/or broadcast service includes at least one of the following:

a Temporary Mobile Group Identity (TMGI) list;
session ID corresponding to TMGI in the TMGI list;
group RNTI (G-RNTI) corresponding to the TMGI in the TMGI list;
bandwidth Part (BWP) corresponding to the TMGI in the TMGI list;
subcarrier spacing corresponding to the TMGI in the TMGI list;
a logical channel and/or logical channel group corresponding to the TMGI in the TMGI list;
Discontinuous Reception (DRX) configuration corresponding to the TMGI in the TMGI list;
uplink resource configuration fed back by Hybrid Automatic Repeat reQuest (HARQ) corresponding to the TMGI in the TMGI list;
uplink resource configuration reported by channel state information (CSI) corresponding to the TMGI in the TMGI list.

Optionally, the first DCI is used to indicate at least one of the following:

control information of Multicast service and/or broadcast service having been changed;
Whether the control information of the Multicast service and/or broadcast service having been changed;

46

Changed control information of the Multicast service and/or broadcast service;

A Type of the changed control information of the Multicast service and/or broadcast service;

resource information of acquiring the changed control information of the Multicast service and/or broadcast service.

Optionally, when the first DCI is used to indicate that the control information of the Multicast service and/or broadcast service has been changed, the first DCI is also used to indicate at least one of the following:

configuration information of the Multicast service and/or broadcast service having being changed;

a transmission mode of the Multicast service and/or broadcast service being changed from a single cell point-to-multipoint (SC-PTM) transmission mode to the multi cell point-to-multipoint (MBMS) transmission mode;

The transmission mode of the Multicast service and/or broadcast service being changed from the multi cell point-to-multipoint transmission mode to the single cell point-to-multipoint transmission mode;

The transmission mode of the Multicast service and/or broadcast service being changed from a point-to-multipoint transmission mode to a point-to-point transmission mode;

The transmission mode of the Multicast service and/or broadcast service being changed from the point-to-point transmission mode to the point-to-multipoint transmission mode;

A Multicast or broadcast service whose control information have been changed;

adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service;

Turning On or Off CSI feedback of the Multicast service and/or broadcast service.

Optionally, the first DCI is used to indicate at least one of the following:

configuration information of the Multicast service and/or broadcast service having being changed;

a transmission mode of the Multicast service and/or broadcast service being changed from a single cell point-to-multipoint transmission mode to a multi cell point-to-multipoint transmission mode;

The transmission mode of the Multicast service and/or broadcast service being changed from the multi cell point-to-multipoint transmission mode to the single cell point-to-multipoint transmission mode;

The transmission mode of the Multicast service and/or broadcast service being changed from a point-to-multipoint transmission mode to a point-to-point transmission mode;

The transmission mode of the Multicast service and/or broadcast service being changed from the point-to-point transmission mode to the point-to-multipoint transmission mode;

A Multicast or broadcast service whose control information have been changed;

adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service;

Turning On or Off CSI feedback of the Multicast service and/or broadcast service.

Optionally, the Multicast service and/or broadcast service set is a set of part or all Multicast services and/or broadcast services in a cell; and/or,

The Multicast service and/or broadcast service set is a set of part or all Multicast services and/or broadcast services in one Multicast area and/or broadcast area.

Optionally, the second DCI is used to indicate at least one of the following:

control information of a Multicast service and/or broadcast service set having been changed;

Whether the control information of the Multicast service and/or broadcast service set having been changed;

Changed control information of the Multicast service and/or broadcast service set;

A Type of the changed control information of the Multicast service and/or broadcast service set;

resource information of acquiring the changed control information of the Multicast service and/or broadcast service set.

Optionally, when the second DCI is used to indicate that the control information of the Multicast service and/or broadcast service set has been changed, the second DCI is also used to indicate at least one of the following:

configuration information of the Multicast service and/or broadcast service set having being changed;

a transmission mode of the Multicast service and/or broadcast service set being changed from a single cell point-to-multipoint transmission mode to a multi cell point-to-multipoint transmission mode;

The transmission mode of the Multicast service and/or broadcast service set being changed from the multi cell point-to-multipoint transmission mode to the single cell point-to-multipoint transmission mode;

The transmission mode of the Multicast service and/or broadcast service set being changed from a point-to-multipoint transmission mode to a point-to-point transmission mode;

The transmission mode of the Multicast service and/or broadcast service set being changed from the point-to-point transmission mode to the point-to-multipoint transmission mode;

Multicast or broadcast services where the control information of the Multicast service and/or broadcast service set have been changed;

adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service set;

Turning On or Off CSI feedback of the Multicast service and/or broadcast service set.

Optionally, the second DCI is used to indicate at least one of the following:

configuration information of the Multicast service and/or broadcast service set having being changed;

a transmission mode of the Multicast service and/or broadcast service set being changed from a single cell point-to-multipoint transmission mode to a multi cell point-to-multipoint transmission mode;

The transmission mode of the Multicast service and/or broadcast service set being changed from the multi cell point-to-multipoint transmission mode to the single cell point-to-multipoint transmission mode;

The transmission mode of the Multicast service and/or broadcast service set being changed from a point-to-multipoint transmission mode to a point-to-point transmission mode;

The transmission mode of the Multicast service and/or broadcast service set being changed from the point-to-point transmission mode to the point-to-multipoint transmission mode;

Multicast or broadcast services where the control information of the Multicast service and/or broadcast service set have been changed;

adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service set;

Turning On or Off CSI feedback of the Multicast service and/or broadcast service set.

Optionally, the second DCI is also used to indicate at least one of the following:

configuration information of the changed Multicast services and/or broadcast services in the Multicast service and/or broadcast service set having being changed;

a transmission mode of the changed Multicast services and/or broadcast services in the Multicast service and/or broadcast service set being changed from a single cell point-to-multipoint transmission mode to the multi cell point-to-multipoint transmission mode;

The transmission mode of the changed Multicast services and/or broadcast services in the Multicast service and/or broadcast service set being changed from the multi cell point-to-multipoint transmission mode to the single cell point-to-multipoint transmission mode;

The transmission mode of the changed Multicast services and/or broadcast services in the Multicast service and/or broadcast service set being changed from a point-to-multipoint transmission mode to a point-to-point transmission mode;

The transmission mode of the changed Multicast services and/or broadcast services in the Multicast service and/or broadcast service set being changed from the point-to-point transmission mode to the point-to-multipoint transmission mode;

Multicast or broadcast services whose control information have been changed in the changed Multicast services and/or broadcast services in the Multicast service and/or broadcast service set;

adding a new set of Multicast service and/or broadcast services;

removing a set of existing Multicast service and/or broadcast services;

modification of a set of existing Multicast service and/or broadcast services;

Turning Off or On HARQ feedback of part of Multicast services and/or broadcast services in the Multicast service and/or broadcast service set;

Turning On or Off CSI feedback of part of Multicast services and/or broadcast services in the Multicast service and/or broadcast service set.

Optionally, the transceiver is configured to include, in the first DCI, information for indicating that the control information of the Multicast service and/or the broadcast service has been changed, and/or:

In a case that the control information resource for indicating the Multicast service and/or broadcast service carries change information, receive the change information of the control information of the Multicast service and/or broadcast service.

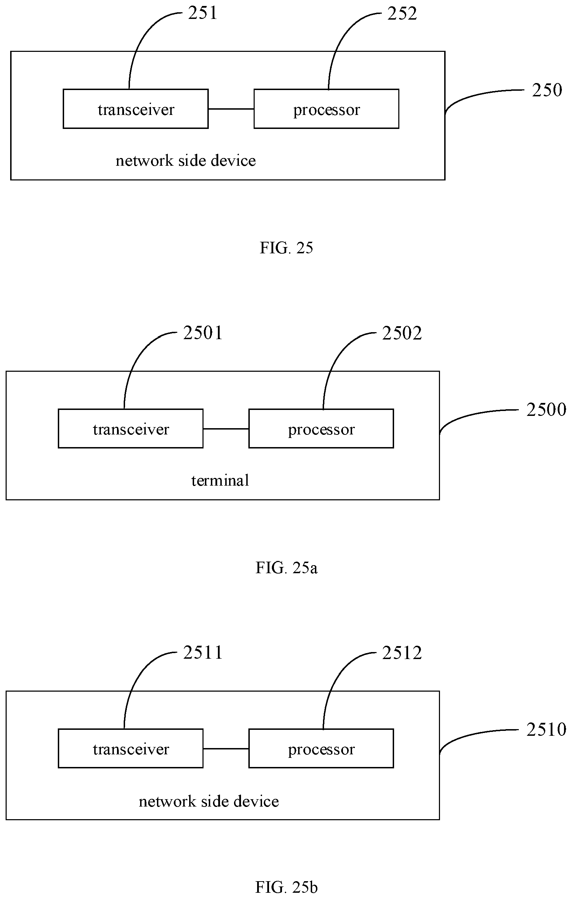

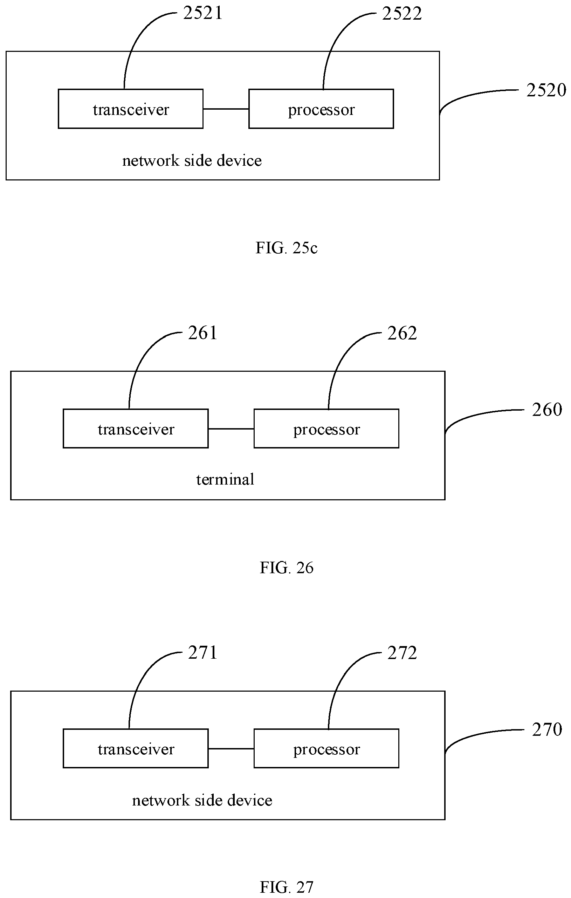

FIG. 25 is a schematic structural diagram of a network side device provided by an embodiment of the present disclosure. The network side device 250 includes: a transceiver 251 and a processor 252;

The processor is configured to configure control information of a set Multicast services and/or broadcast services for m Multicast services and/or broadcast services;

In a cell where the m Multicast services and/or broadcast services are located, and there are n Multicast services and/or broadcast services in a Multicast area and/or broadcast area;

The n Multicast services and/or broadcast services are configured with control information of k sets of Multicast services and/or broadcast services;

m, n, k are natural numbers greater than or equal to 1, m is less than or equal to n, and k is less than or equal to n.

Optionally, the processor is further configured to configure at least one of a repetition period, a modification period, and an initial offset for the sending of control information of k sets of Multicast services and/or broadcast services;

At least one of the repetition period, the modification period, and the initial offset of the control information of the k sets of Multicast services and/or broadcast services being the same or different.

Optionally, the transceiver is configured to, in the repetition period of the control information of the Multicast service and/or broadcast service, send control information of n Multicast services and/or broadcast services to the terminal at intervals of t time domain units, where n and t are positive integers.

Optionally, the transceiver is further configured to send first information to the terminal, wherein the first information is used to indicate a first sending time, the first sending time is sending time of the control information of the n Multicast services and/or broadcast services in a corresponding time domain unit.

Optionally, the first information includes at least one of the following:

information for indicating a start time of the first sending time;
information for indicating a duration of the first sending time;
Information for indicating a first offset, wherein the first offset is an offset between the first sending time and a position of RMSI of SSB.

FIG. 25a is a schematic structural diagram of a terminal provided by an embodiment of the present disclosure. The terminal 2500 includes: a transceiver 2501 and a processor 2502;

The processor is configured to determine the monitoring occasion of the physical downlink control channel PDCCH of one or more Multicast messages;

The transceiver is configured to receive monitoring occasion of the physical downlink control channel (PDCCH) of one or more Multicast messages, and receive Multicast information at the monitoring occasion of the PDCCH of the one or more Multicast messages;

Wherein, occasion of one Multicast message is the monitoring occasion of the PDCCH of a group of Multicast messages;

Wherein, the monitoring occasion of the PDCCH of one Multicast message includes at least one slot;

Wherein, each slot included in the monitoring occasion of the PDCCH of one Multicast message includes at least one time symbol;

Wherein, the Multicast information includes at least one of the following:

DCI of a network scheduling Multicast service;
DCI of configuration information of the network scheduling Multicast service;
DCI of information of a control channel of the Multicast service;
DCI of the information of the control channel of the network scheduling Multicast service;
DCI of the scheduling information of the information of the control channel of the Multicast service;
DCI of modification information of the control channel of the network scheduling Multicast service;
DCI of the modification information of the control channel of the Multicast service;
DCI of the scheduling information of the modification information of the control channel of the Multicast service.

Optionally, the processor is configured to determine the monitoring occasion of the PDCCH of the Multicast message according to a search space of the Multicast message or a search space set of the Multicast message; Determining the search space of the Multicast message by at least one of the following methods:

The UE reads the information of the common search space set of the Nth type PDCCH configured by the search space used for the Multicast message in the PDCCH common configuration configured by the network through the RRC message; wherein, the common search space is used for the DCI format scrambled by the Multicast-RNTI with Cyclic redundancy check (CRC) on the primary cell;

The UE reads a search space identified as a common type in the PDCCH dedicated configuration configured in the RRC message, and the search space is used for the DCI format scrambling by the Multicast-RNTI with CRC on the primary cell;

If the UE does not find that the RRC message is configured with the information of the common search space set of the Nth type of PDCCH used for the search space configuration of the Multicast message, the association relationship between the PDCCH monitoring occasion for the Nth type of PDCCH common search space set and the SSB block index is the same as the association relationship between the PDCCH monitoring occasion for the Nth type of PDCCH common search space set and the PDCCH monitoring occasion of the PDCCH common search space of type 0;

Find out a CCE aggregation level in the common search space set of the Nth type of PDCCH and the number of PDCCH candidates for each CCE aggregation level by a look-up table;

Wherein, the information of the common search space set of the Nth type of PDCCH, and/or the information of the search space identified as the common type, includes at least one of the following information:

A search space label;

first indication information for indicating a first time symbol in a control resource set in one slot of a PDCCH monitoring occasion for a Multicast message;

second indication information for indicating a monitoring period and a time offset at the PDCCH monitoring occasion for the Multicast message;

third indication information for indicating an initial symbol and/or duration in a monitoring period of the PDCCH monitoring occasion for the Multicast message;

fourth indication information for indicating a monitoring slot and/or monitoring time symbol of the PDCCH monitoring occasion of the Multicast message in a bitmap form;

fifth indication information for indicating a monitoring time symbol in one slot of the PDCCH monitoring occasion for the Multicast message in the bitmap form;

sixth indication information for indicating the initial symbol and/or duration of one slot at the PDCCH monitoring occasion for the Multicast message;

seventh indication information for indicating an index of a control resource set associated with the search space.

Optionally, the monitoring occasion of PDCCH of one or more Multicast messages constitutes one Multicast message occasion.

Optionally, the processor is configured to determine the Multicast scheduling radio frame (MF), wherein MF is a system frame that includes MOs or a starting point of MOs of one or more Multicast services.

Optionally, the processor is configured to select one or more beams for receiving Multicast scheduling information.

Optionally, the occasion of one Multicast message is the monitoring occasion of PDCCHs of Y Multicast messages, wherein Y is determined according to the number of SSBs actually transmitted in the cell.

Optionally, the occasion of one Multicast message being the monitoring occasion of the PDCCH of a group of Multicast messages, including:

a Z-th PDCCH monitoring occasion used in the occasions of the Multicast message corresponding to a Z-th transmitted SSB, and Z is a positive integer.

FIG. 25b is a schematic structural diagram of a network side device provided by an embodiment of the present disclosure. The network side device 2510 includes: a transceiver 2511 and a processor 2512;

The transceiver is configured to send Multicast information at the monitoring occasion of the PDCCH of the one or more Multicast messages;

Wherein, the monitoring occasion of the PDCCH of one Multicast message includes at least one slot;

Wherein, each slot included in the monitoring occasion of the PDCCH of one Multicast message includes at least one time symbol;

Wherein, the Multicast information includes at least one of the following:

DCI of a network scheduling Multicast service;
DCI of configuration information of the network scheduling Multicast service;
DCI of information of a control channel of the Multicast service;
DCI of the information of the control channel of the network scheduling Multicast service;
DCI of the scheduling information of the information of the control channel of the Multicast service;
DCI of modification information of the control channel of the network scheduling Multicast service;
DCI of the modification information of the control channel of the Multicast service;
DCI of the scheduling information of the modification information of the control channel of the Multicast service.

Optionally, the processor is configured to associate the monitoring occasion of the PDCCH of the Multicast message with a search space of a corresponding Multicast message or a search space set of the Multicast message;
Configuring the search space for Multicast messages by at least one of the following methods:

information of a common search space set of an Nth type of PDCCH configured by the search space used for the Multicast message in PDCCH common configuration configured through an RRC message; wherein the common search space is used for a DCI format scrambled by a Multicast-RNTI with Cyclic redundancy check (CRC) on a primary cell;
a search space identified as a common type in PDCCH dedicated configuration configured through the RRC message, and the search space being used for the DCI format scrambling by the Multicast-RNTI with CRC on the primary cell;
Wherein, the information of the common search space set of the Nth type of PDCCH, and/or the information of the search space identified as the common type, includes at least one of the following information:

A search space label;
first indication information for indicating a first time symbol in a control resource set in one slot of a PDCCH monitoring occasion for a Multicast message;
second indication information for indicating a monitoring period and a time offset at the PDCCH monitoring occasion for the Multicast message;
third indication information for indicating an initial symbol and/or duration in a monitoring period of the PDCCH monitoring occasion for the Multicast message;
fourth indication information for indicating a monitoring slot and/or monitoring time symbol of the PDCCH monitoring occasion of the Multicast message in a bitmap form;
fifth indication information for indicating a monitoring time symbol in one slot of the PDCCH monitoring occasion for the Multicast message in the bitmap form;
sixth indication information for indicating the initial symbol and/or duration of one slot at the PDCCH monitoring occasion for the Multicast message;
seventh indication information for indicating an index of a control resource set associated with the search space.

Optionally, the monitoring occasion of PDCCH of one or more Multicast messages constitutes one Multicast message occasion.
Optionally, the processor is configured to determine a Multicast scheduling radio frame, wherein MF is a system frame that includes MOs or a starting point of MOs of one or more Multicast services.
Optionally, the processor is configured to select one or more beams for sending Multicast scheduling information.
Optionally, the occasion of one Multicast message is the monitoring occasion of PDCCHs of Y Multicast messages, wherein Y is determined according to the number of SSBs actually transmitted in the cell.
Optionally, the occasion of one Multicast message being the monitoring occasion of the PDCCH of a group of Multicast messages, including:
a Z-th PDCCH monitoring occasion used in the occasion of the Multicast message corresponding to a Z-th transmitted SSB, and Z is a positive integer.
FIG. 25c is a schematic structural diagram of a network side device provided by an embodiment of the present disclosure. The network side device 2520 includes: a transceiver 2521 and a processor 2522;
The transceiver is configured to, in a repetition period of control information of a Multicast service and/or broadcast service, send control information of n Multicast services and/or broadcast services to a terminal at intervals of t time domain units, wherein n and t are positive integers.
Optionally, the transceiver is configured to send first information to the terminal, wherein the first information is used to indicate a first sending time, the first sending time is a sending time of the control information of the n Multicast services and/or broadcast services in the corresponding time domain unit.
Optionally, the first information includes at least one of the following:

information for indicating an initial time of the first sending time;
information for indicating a duration of the first sending time;
information for indicating a first offset, wherein the first offset is an offset between the first sending time and a position of RMSI of SSB.

FIG. 26 is a schematic structural diagram of a terminal provided by an embodiment of the present disclosure. The terminal 260 includes: a transceiver 261 and a processor 262;
The transceiver is configured to receive control information of n Multicast services and/or broadcast services sent by a network side device at intervals of t time domain units in a repetition period of control information of a Multicast service and/or broadcast service, wherein n and t are positive integers.
Optionally, the processor is configured to obtain the time domain unit corresponding to the control information of the Multicast service and/or broadcast service within the repetition period;
The transceiver is configured to monitor the control information of the corresponding Multicast service and/or broadcast service in the time domain unit.
Optionally, the time domain unit is calculated according to the following formula:

$$SFN \mod sc\text{-}mcch\text{-}RepetitionPeriod = sc\text{-}mcch\text{-}Offset + (sc\text{-}mcch\text{-}RepetitionPeriod) \text{ divided by } (M/n) * (\lceil Multicast\_ID /n \rceil - 1);$$

SFN is a serial number of the time domain unit corresponding to the control information of the first Multicast service and/or broadcast service, sc-mcch-RepetitionPeriod is a size of the repetition period, and sc-mcch-Offset is an offset of an initial time domain unit of the first repetition period, M is the total number of control information of the Multicast service and/or broadcast service sent within the repetition period, and the Multicast_ID is the serial number of the Multicast service and/or broadcast service, so the Multicast_ID is determined according to the sending sequence of the control information of the Multicast service and/or broadcast service within the repetition period.
Optionally, the transceiver is configured to receive the first information sent by the network side device, wherein the first information is used to indicate a second sending time, and the second sending time is a sending time of the control information of the n Multicast services and/or broadcast services in the corresponding time domain unit;
Receive the control information of the n Multicast services and/or broadcast services at the second sending time.
Optionally, the first information includes at least one of the following information:

information for indicating an initial time of the second sending time;
information for indicating a duration of the second sending time;
information for indicating a first offset, wherein the first offset is an offset between the second sending time and a position of RMSI of SSB.

FIG. 27 is a schematic structural diagram of a network side device provided by an embodiment of the present disclosure. The network side device 270 includes: a transceiver 271 and a processor 272;

the transceiver is configured to send configuration information to a terminal,
sending the configuration information to the terminal, where the configuration information is used to indicate a first symbol information and/or a second symbol information in one slot, the first symbol is a symbol used to send unicast information, and the second symbol is a symbol used to send Multicast information and/or broadcast information;
the first symbol information, a number of time symbols and/or a number of PRBs occupied by the first symbol;
the second symbol information, a number of time symbols and/or the number of PRBs occupied by the second symbol.

Optionally, the configuration information is also used to indicate that a column of reference signals is inserted for every y symbols in the slot; and/or, the configuration information is also used to indicate that one reference signal is inserted for every x subcarriers in the frequency domain corresponding to the slot, wherein the reference signal is a reference signal for Multicast and/or broadcast;
Optionally, the reference signal may be one SSB or one SSB set of one cell, or one SSB or one SSB set shared by one Multicast and/or broadcast area; and/or:

Optionally, the reference signal may be a unified CSI-RS or a CSI-RS set for terminals in a Multicast and/or broadcast group, or a CSI-RS or a CSI-RS set shared in a Multicast and/or broadcast area;
Optionally, the information of the reference signal needs to be exchanged between different network nodes;

Wherein, x and y are positive integers, x is determined according to the subcarrier spacing, and y is determined according to the subcarrier spacing;

the unicast information includes a reference signal corresponding to unicast, at least one of control signaling and data;

the Multicast information includes a reference signal corresponding to the Multicast, at least one of control signaling and data;

the broadcasting information includes a reference signal corresponding to broadcast, at least one of control signaling and data;

Optionally, x and y are positive integers, x is determined according to the subcarrier spacing, and y is also determined according to the measurement accuracy.

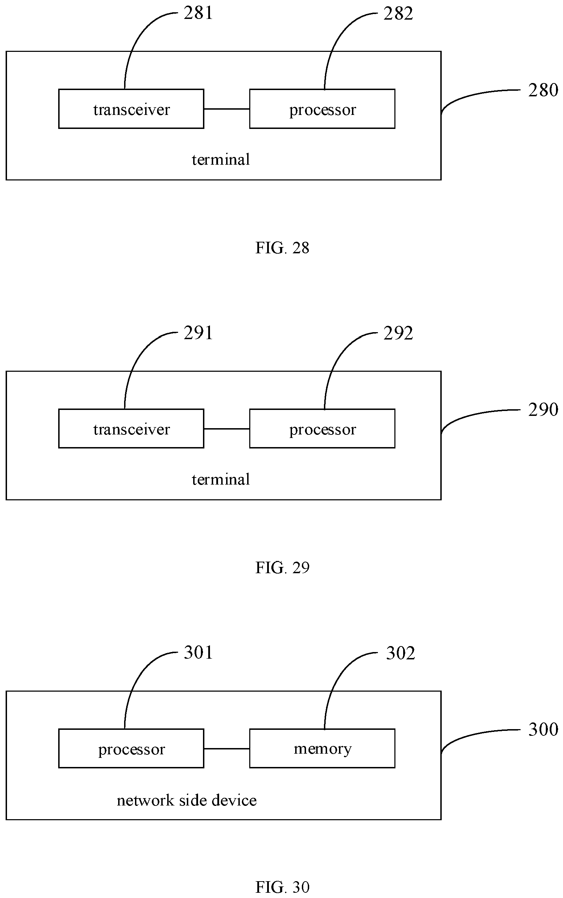

FIG. 28 is a schematic structural diagram of a terminal provided by an embodiment of the present disclosure. The terminal 280 includes: a transceiver 281 and a processor 282;

The transceiver is configured to receive the configuration information sent by a network side device,

sending the configuration information to the terminal, wherein the configuration information is used to indicate first symbol information and/or second symbol information in one slot, the first symbol is a symbol used to send unicast information, and the second symbol is a symbol used to send Multicast information and/or broadcast information;

The first symbol information includes the number of time symbols and/or the number of PRBs occupied by the first symbol;

The second symbol information includes the number of time symbols and/or the number of PRBs occupied by the second symbol.

Optionally, the configuration information is also used to indicate that a column of reference signals is inserted for every y symbols in the slot; and/or, the configuration information is also used to indicate that a reference signal is inserted for every x subcarriers in the frequency domain corresponding to the slot, wherein the reference signal is a reference signal for Multicast and/or broadcast;

Optionally, the reference signal may be an SSB or an SSB set in a cell, or an SSB or an SSB set shared by a Multicast and/or broadcast area; and/or:

Optionally, the reference signal may be a unified CSI-RS or a CSI-RS set for terminals in a Multicast and/or broadcast group, or a CSI-RS or a CSI-RS set shared by a Multicast and/or broadcast area;

Optionally, the information of the reference signal needs to be exchanged between different network nodes;

Wherein, x and y are positive integers, x is determined according to the subcarrier spacing, and y is determined according to the subcarrier spacing;

The unicast information includes a reference signal corresponding to unicast, at least one of control signaling and data;

The Multicast information includes a reference signal corresponding to the Multicast, at least one of control signaling and data;

The broadcast information includes a reference signal corresponding to the broadcast, at least one of control signaling and data;

Optionally, x and y are positive integers, x is determined according to the subcarrier spacing, and y is also determined according to the measurement accuracy.

FIG. 29 is a schematic structural diagram of a terminal provided by an embodiment of the present disclosure. The terminal 290 includes: a transceiver 291 and a processor 292;

the transceiver is configured to receive receive resource configuration information sent by a network side device, the resource configuration information is resource configuration information of a Multicast service and/or broadcast service of a neighboring cell;

measure or not measure a resource corresponding to the resource configuration information.

Optionally, the transceiver is configured to

If the terminal only has a unicast service, not measure the resource corresponding to the resource configuration information;

If the terminal only has a Multicast service and/or broadcast service, measure the resource corresponding to the resource configuration information;

If the terminal has both a unicast service and a Multicast service and/or a broadcast service, measure the resource corresponding to the resource configuration information.

FIG. 30 is a schematic structural diagram of a network side device provided by an embodiment of the present disclosure. The network side device 300 includes a processor 301, a memory 302, and a program stored on the memory 302 and executed by the processor 301; the processor 301 implements the following steps when executing the program: sending a first downlink control information (DCI) scrambled by a first radio network temporary identifier (RNTI) to a terminal, the first DCI being used to indicate whether control information of one Multicast service and/or broadcast service is changed or related information is changed; or:

sending a second DCI scrambled by a second RNTI to the terminal, wherein the second DCI is used to indicate whether the control information of a Multicast service and/or broadcast service set is changed or related information is changed;

Wherein, the control information includes configuration information of Multicast service and/or broadcast service.

Optionally, the configuration information of the Multicast service and/or broadcast service includes at least one of the following:

a Temporary Mobile Group Identity (TMGI) list;
session ID corresponding to TMGI in the TMGI list;
group RNTI (G-RNTI) corresponding to the TMGI in the TMGI list;
bandwidth Part (BWP) corresponding to the TMGI in the TMGI list;
subcarrier spacing corresponding to the TMGI in the TMGI list;
a logical channel and/or logical channel group corresponding to the TMGI in the TMGI list;
Discontinuous Reception (DRX) configuration corresponding to the TMGI in the TMGI list;
uplink resource configuration fed back by Hybrid Automatic Repeat reQuest (HARQ) corresponding to the TMGI in the TMGI list;
uplink resource configuration reported by channel state information (CSI) corresponding to the TMGI in the TMGI list.

Optionally, the first DCI is used to indicate at least one of the following:

control information of Multicast service and/or broadcast service having been changed;
Whether the control information of the Multicast service and/or broadcast service having been changed;
Changed control information of the Multicast service and/or broadcast service;
A Type of the changed control information of the Multicast service and/or broadcast service;
resource information of acquiring the changed control information of the Multicast service and/or broadcast service.

Optionally, when the first DCI is used to indicate that the control information of the Multicast service and/or broadcast service has been changed, the first DCI is also used to indicate at least one of the following:

configuration information of the Multicast service and/or broadcast service having being changed;
a transmission mode of the Multicast service and/or broadcast service being changed from a single cell point-to-multipoint (SC-PTM) transmission mode to the multi cell point-to-multipoint (MBMS) transmission mode;
The transmission mode of the Multicast service and/or broadcast service being changed from the multi cell point-to-multipoint transmission mode to the single cell point-to-multipoint transmission mode;
The transmission mode of the Multicast service and/or broadcast service being changed from a point-to-multipoint transmission mode to a point-to-point transmission mode;
The transmission mode of the Multicast service and/or broadcast service being changed from the point-to-point transmission mode to the point-to-multipoint transmission mode;
A Multicast or broadcast service whose control information have been changed;
adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service;
Turning On or Off CSI feedback of the Multicast service and/or broadcast service.

Optionally, the first DCI is used to indicate at least one of the following:

configuration information of the Multicast service and/or broadcast service having being changed;

a transmission mode of the Multicast service and/or broadcast service being changed from a single cell point-to-multipoint transmission mode to a multi cell point-to-multipoint transmission mode;

The transmission mode of the Multicast service and/or broadcast service being changed from the multi cell point-to-multipoint transmission mode to the single cell point-to-multipoint transmission mode;

The transmission mode of the Multicast service and/or broadcast service being changed from a point-to-multipoint transmission mode to a point-to-point transmission mode;

The transmission mode of the Multicast service and/or broadcast service being changed from the point-to-point transmission mode to the point-to-multipoint transmission mode;

A Multicast or broadcast service whose control information have been changed;

adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service;

Turning On or Off CSI feedback of the Multicast service and/or broadcast service.

Optionally, the Multicast service and/or broadcast service set is a set of some or all Multicast services and/or broadcast services in a cell; and/or,

The Multicast service and/or broadcast service set is a set of some or all Multicast services and/or broadcast services in a Multicast area and/or broadcast area.

Optionally, the second DCI is used to indicate at least one of the following:

control information of the Multicast service and/or broadcast service set having been changed;

Whether the control information of the Multicast service and/or broadcast service set having been changed;

Changed control information of the Multicast service and/or broadcast service set;

A type of the changed control information of the Multicast service and/or broadcast service set;

resource information of acquiring the changed control information of the Multicast service and/or broadcast service set.

Optionally, when the second DCI is used to indicate that the control information of the Multicast service and/or broadcast service set has been changed, the second DCI is also used to indicate at least one of the following:

configuration information of the Multicast service and/or broadcast service set having being changed;

a transmission mode of the Multicast service and/or broadcast service set being changed from a single cell point-to-multipoint transmission mode to the multi cell point-to-multipoint transmission mode;

The transmission mode of the Multicast service and/or broadcast service set being changed from the multi cell point-to-multipoint transmission mode to the single cell point-to-multipoint transmission mode;

The transmission mode of the Multicast service and/or broadcast service set being changed from a point-to-multipoint transmission mode to a point-to-point transmission mode;

The transmission mode of the Multicast service and/or broadcast service set being changed from the point-to-point transmission mode to the point-to-multipoint transmission mode;

Multicast or broadcast services where the control information of the Multicast service and/or broadcast service has been changed;

adding a new set of Multicast service and/or broadcast services;

removing a set of existing Multicast service and/or broadcast services;

modification of a set of existing Multicast service and/or broadcast services;

Turning Off or On HARQ feedback of the Multicast service and/or broadcast service set;

Turning On or Off CSI feedback of the Multicast service and/or broadcast service set.

Optionally, the second DCI is used to indicate at least one of the following:

configuration information of the Multicast service and/or broadcast service set having being changed;

a transmission mode of the Multicast service and/or broadcast service set being changed from a single cell point-to-multipoint transmission mode to a multi cell point-to-multipoint transmission mode;

The transmission mode of the Multicast service and/or broadcast service set being changed from the multi cell point-to-multipoint transmission mode to the single cell point-to-multipoint transmission mode;

The transmission mode of the Multicast service and/or broadcast service set being changed from a point-to-multipoint transmission mode to a point-to-point transmission mode;

The transmission mode of the Multicast service and/or broadcast service set being changed from the point-to-point transmission mode to the point-to-multipoint transmission mode;
Multicast or broadcast services where the control information of the Multicast service and/or broadcast service set have been changed;
adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service set;
Turning On or Off CSI feedback of the Multicast service and/or broadcast service set.

Optionally, the second DCI is used to indicate the following content:
identification information of the changed Multicast service and/or broadcast service in the Multicast service and/or broadcast service set.

Optionally, the second DCI is also used to indicate at least one of the following:

configuration information of the changed Multicast services and/or broadcast services in the Multicast service and/or broadcast service set having being changed;
a transmission mode of the changed Multicast services and/or broadcast services in the Multicast service and/or broadcast service set being changed from a single cell point-to-multipoint transmission mode to the multi cell point-to-multipoint transmission mode;
The transmission mode of the changed Multicast services and/or broadcast services in the Multicast service and/or broadcast service set being changed from the multi cell point-to-multipoint transmission mode to the single cell point-to-multipoint transmission mode;
The transmission mode of the changed Multicast services and/or broadcast services in the Multicast service and/or broadcast service set being changed from a point-to-multipoint transmission mode to a point-to-point transmission mode;
The transmission mode of the changed Multicast services and/or broadcast services in the Multicast service and/or broadcast service set being changed from the point-to-point transmission mode to the point-to-multipoint transmission mode;
Multicast or broadcast services whose control information have been changed in the changed Multicast services and/or broadcast services in the Multicast service and/or broadcast service set;
adding a new set of Multicast service and/or broadcast services;
removing a set of existing Multicast service and/or broadcast services;
modification of a set of existing Multicast service and/or broadcast services;
Turning Off or On HARQ feedback of part of Multicast services and/or broadcast services in the Multicast service and/or broadcast service set;
Turning On or Off CSI feedback of part of Multicast services and/or broadcast services in the Multicast service and/or broadcast service set.

Optionally, when the processor 301 executes the program, the following steps may also be implemented: after sending the first DCI scrambled by the first RNTI to the terminal, the method further include:
The first DCI includes information for indicating that the control information of the Multicast service and/or the broadcast service has been changed, and/or:
In a case that a control information resource for indicating the Multicast service and/or broadcast service carries change information, send the change information of the control information of the Multicast service and/or broadcast service.

Optionally, when the processor 301 executes the program, the following steps may also be implemented:

broadcasting control information of each Multicast service and/or broadcast service among control information of a plurality of Multicast services and/or broadcast services; or,
broadcasting control information of a first Multicast service and/or broadcast service among the control information of the plurality of Multicast services and/or broadcast services, and control information of other Multicast services and/or broadcast services among the control information of the plurality of Multicast services and/or broadcast services being the same as the control information of the first Multicast service and/or broadcast service;
Wherein, the control information includes at least one of a repetition period, an offset, an initial subframe or a modification period.

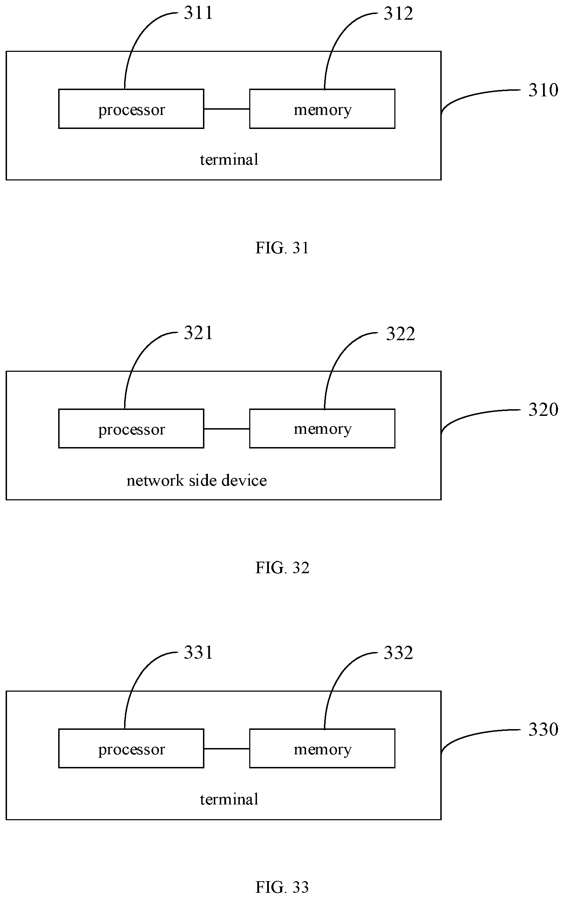

FIG. 31 is a schematic structural diagram of a terminal provided by an embodiment of the present disclosure. The terminal 310 includes a processor 311, a memory 312, and a program stored in the memory 312 and executed by the processor 311; the processor 311 implements the following steps when executing the program:

receiving a first DCI sent by a network side device and scrambled by a first RNTI, the first DCI being used to indicate whether the control information of one Multicast service and/or broadcast service is changed or related information is changed; or:

receiving a second DCI sent by the network side device and scrambled by a second RNTI, the second DCI is used to indicate whether the control information of a Multicast service and/or broadcast service set is changed or related information is changed;

Optionally, the configuration information of the Multicast service and/or broadcast service includes at least one of the following:

a Temporary Mobile Group Identity (TMGI) list;
session ID corresponding to TMGI in the TMGI list;
group RNTI (G-RNTI) corresponding to the TMGI in the TMGI list;
bandwidth Part (BWP) corresponding to the TMGI in the TMGI list;
subcarrier spacing corresponding to the TMGI in the TMGI list;
a logical channel and/or logical channel group corresponding to the TMGI in the TMGI list;
Discontinuous Reception (DRX) configuration corresponding to the TMGI in the TMGI list;
uplink resource configuration fed back by Hybrid Automatic Repeat reQuest (HARQ) corresponding to the TMGI in the TMGI list;
uplink resource configuration reported by channel state information (CSI) corresponding to the TMGI in the TMGI list.

Optionally, the first DCI is used to indicate at least one of the following:

control information of Multicast service and/or broadcast service having been changed;
Whether the control information of the Multicast service and/or broadcast service having been changed;
Changed control information of the Multicast service and/or broadcast service;
A Type of the changed control information of the Multicast service and/or broadcast service;
resource information of acquiring the changed control information of the Multicast service and/or broadcast service.

Optionally, when the first DCI is used to indicate that the control information of the Multicast service and/or broadcast service has been changed, the first DCI is also used to indicate at least one of the following:

configuration information of the Multicast service and/or broadcast service having being changed;
a transmission mode of the Multicast service and/or broadcast service being changed from a single cell point-to-multipoint (SC-PTM) transmission mode to the multi cell point-to-multipoint (MBMS) transmission mode;
The transmission mode of the Multicast service and/or broadcast service being changed from the multi cell point-to-multipoint transmission mode to the single cell point-to-multipoint transmission mode;
The transmission mode of the Multicast service and/or broadcast service being changed from a point-to-multipoint transmission mode to a point-to-point transmission mode;
The transmission mode of the Multicast service and/or broadcast service being changed from the point-to-point transmission mode to the point-to-multipoint transmission mode;
A Multicast or broadcast service whose control information have been changed;
adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service;
Turning On or Off CSI feedback of the Multicast service and/or broadcast service.

Optionally, the first DCI is used to indicate at least one of the following:

configuration information of the Multicast service and/or broadcast service having being changed;
a transmission mode of the Multicast service and/or broadcast service being changed from a single cell point-to-multipoint transmission mode to a multi cell point-to-multipoint transmission mode;
The transmission mode of the Multicast service and/or broadcast service being changed from the multi cell point-to-multipoint transmission mode to the single cell point-to-multipoint transmission mode;
The transmission mode of the Multicast service and/or broadcast service being changed from a point-to-multipoint transmission mode to a point-to-point transmission mode;

The transmission mode of the Multicast service and/or broadcast service being changed from the point-to-point transmission mode to the point-to-multipoint transmission mode;
A Multicast or broadcast service whose control information have been changed;
adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service;
Turning On or Off CSI feedback of the Multicast service and/or broadcast service.

Optionally, the Multicast service and/or broadcast service set is a set of part or all Multicast services and/or broadcast services in a cell; and/or,
The Multicast service and/or broadcast service set is a set of part or all Multicast services and/or broadcast services in one Multicast area and/or broadcast area.

Optionally, the second DCI is used to indicate at least one of the following:

control information of a Multicast service and/or broadcast service set having been changed;
Whether the control information of the Multicast service and/or broadcast service set having been changed;
Changed control information of the Multicast service and/or broadcast service set;
A Type of the changed control information of the Multicast service and/or broadcast service set;
resource information of acquiring the changed control information of the Multicast service and/or broadcast service set.

Optionally, when the second DCI is used to indicate that the control information of the Multicast service and/or broadcast service set has been changed, the second DCI is also used to indicate at least one of the following:

configuration information of the Multicast service and/or broadcast service set having being changed;
a transmission mode of the Multicast service and/or broadcast service set being changed from a single cell point-to-multipoint transmission mode to a multi cell point-to-multipoint transmission mode;
The transmission mode of the Multicast service and/or broadcast service set being changed from the multi cell point-to-multipoint transmission mode to the single cell point-to-multipoint transmission mode;
The transmission mode of the Multicast service and/or broadcast service set being changed from a point-to-multipoint transmission mode to a point-to-point transmission mode;
The transmission mode of the Multicast service and/or broadcast service set being changed from the point-to-point transmission mode to the point-to-multipoint transmission mode;
Multicast or broadcast services where the control information of the Multicast service and/or broadcast service set have been changed;
adding a new set of Multicast service and/or broadcast services;
removing a set of existing Multicast service and/or broadcast services;
modification of a set of existing Multicast service and/or broadcast services;
Turning Off or On HARQ feedback of the Multicast service and/or broadcast service set;
Turning On or Off CSI feedback of the Multicast service and/or broadcast service set.

Optionally, the second DCI is used to indicate at least one of the following:

configuration information of the Multicast service and/or broadcast service set having being changed;
a transmission mode of the Multicast service and/or broadcast service set being changed from a single cell point-to-multipoint transmission mode to a multi cell point-to-multipoint transmission mode;
The transmission mode of the Multicast service and/or broadcast service set being changed from the multi cell point-to-multipoint transmission mode to the single cell point-to-multipoint transmission mode;
The transmission mode of the Multicast service and/or broadcast service set being changed from a point-to-multipoint transmission mode to a point-to-point transmission mode;
The transmission mode of the Multicast service and/or broadcast service set being changed from the point-to-point transmission mode to the point-to-multipoint transmission mode;
Multicast or broadcast services where the control information of the Multicast service and/or broadcast service set have been changed;
adding a new set of Multicast service and/or broadcast services;
removing a set of existing Multicast service and/or broadcast services;
modification of a set of existing Multicast service and/or broadcast services;

Turning Off or On HARQ feedback of the Multicast service and/or broadcast service set;
Turning On or Off CSI feedback of the Multicast service and/or broadcast service set.

Optionally, the second DCI is also used to indicate at least one of the following:

configuration information of the changed Multicast services and/or broadcast services in the Multicast service and/or broadcast service set having being changed;
a transmission mode of the changed Multicast services and/or broadcast services in the Multicast service and/or broadcast service set being changed from a single cell point-to-multipoint transmission mode to the multi cell point-to-multipoint transmission mode;
The transmission mode of the changed Multicast services and/or broadcast services in the Multicast service and/or broadcast service set being changed from the multi cell point-to-multipoint transmission mode to the single cell point-to-multipoint transmission mode;
The transmission mode of the changed Multicast services and/or broadcast services in the Multicast service and/or broadcast service set being changed from a point-to-multipoint transmission mode to a point-to-point transmission mode;
The transmission mode of the changed Multicast services and/or broadcast services in the Multicast service and/or broadcast service set being changed from the point-to-point transmission mode to the point-to-multipoint transmission mode;
Multicast or broadcast services whose control information have been changed in the changed Multicast services and/or broadcast services in the Multicast service and/or broadcast service set;
adding a new set of Multicast service and/or broadcast services;
removing a set of existing Multicast service and/or broadcast services;
modification of a set of existing Multicast service and/or broadcast services;
Turning Off or On HARQ feedback of part of Multicast services and/or broadcast services in the Multicast service and/or broadcast service set;
Turning On or Off CSI feedback of part of Multicast services and/or broadcast services in the Multicast service and/or broadcast service set.

Optionally, the processor 311 implements the following steps when executing the program:
After receiving the first DCI scrambled by the first RNTI sent by the network side device, further include:
The first DCI includes information for indicating that the control information of the Multicast service and/or the broadcast service has been changed, and/or:
In a case that the control information resource for indicating the Multicast service and/or broadcast service carries change information, receive the change information of the control information of the Multicast service and/or broadcast service.
FIG. 32 is a schematic structural diagram of a network side device provided by an embodiment of the present disclosure. The network side device 320 includes a processor 321, a memory 322, and a program stored on the memory 322 and executed by the processor 321; the processor 321 implements the following steps when executing the program:

Configuring control information of a set of Multicast services and/or broadcast services for m Multicast services and/or broadcast services;
In a cell where the m Multicast services and/or broadcast services are located, and there are n Multicast services and/or broadcast services in a Multicast area and/or broadcast area;
The n Multicast services and/or broadcast services are configured with control information of k sets of Multicast services and/or broadcast services;
m, n, k are natural numbers greater than or equal to 1, m is less than or equal to n, and k is less than or equal to n.

Optionally, when the processor 321 executes the program, the following steps may also be implemented:

configuring at least one of a repetition period, a modification period, and an initial offset for the sending of control information of k sets of Multicast services and/or broadcast services;
At least one of the repetition period, the modification period, and the initial offset of the control information of the k sets of Multicast services and/or broadcast services being the same or different.

Optionally, when the processor 321 executes the program, the following steps may also be implemented:
in the repetition period of the control information of the Multicast service and/or broadcast service, sending control information of n Multicast services and/or broadcast service to the terminal at intervals of t time domain units, where n and t are positive integers.

Optionally, when the processor 321 executes the program, the following steps may also be implemented:
In the repeat period of the control information of the Multicast service and/or broadcast service, before sending n pieces of control information of the Multicast service and/or broadcast service to the terminal at intervals of t time domain units, the method further includes:

Sending first information to the terminal, wherein the first information is used to indicate a first sending time, the first sending time is sending time of the control information of the n Multicast services and/or broadcast services in a corresponding time domain unit.

Optionally, the first information includes at least one of the following information:

information for indicating a start time of the first sending time;
information for indicating a duration of the first sending time;
Information for indicating a first offset, wherein the first offset is an offset between the first sending time and a position of RMSI of SSB.

FIG. 33 is a schematic structural diagram of a terminal provided by an embodiment of the present disclosure. The terminal 330 includes a processor 331, a memory 332, and a program stored in the memory 332 and executed by the processor 331; the processor 331 implements the following steps when executing the program:

determining the monitoring occasion of the physical downlink control channel PDCCH of one or more Multicast messages; andreceiving Multicast information at the monitoring occasion of the PDCCH of the one or more Multicast messages;
Wherein, the monitoring occasion of the PDCCH of one Multicast message includes at least one slot;
Wherein, each slot included in the monitoring occasion of the PDCCH of one Multicast message includes at least one time symbol;
Wherein, the Multicast information includes at least one of the following:

DCI of a network scheduling Multicast service;
DCI of configuration information of the network scheduling Multicast service;
DCI of information of a control channel of the Multicast service;
DCI of the information of the control channel of the network scheduling Multicast service;
DCI of the scheduling information of the information of the control channel of the Multicast service;
DCI of modification information of the control channel of the network scheduling Multicast service;
DCI of the modification information of the control channel of the Multicast service;
DCI of the scheduling information of the modification information of the control channel of the Multicast service.

Optionally, when the processor 331 executes the program, the following steps may also be implemented:
The determining one or more Multicast messages of the PDCCH of the monitoring occasion includes:

determining the monitoring occasion of the PDCCH of the Multicast message according to a search space of the Multicast message or a search space set of the Multicast message;
Determining the search space for the Multicast message by at least one of the following methods:

The UE reads the information of the common search space set of the Nth type PDCCH configured by the search space used for the Multicast message in the PDCCH common configuration configured by the network through the RRC message; wherein, the common search space is used for the DCI format scrambled by the Multicast-RNTI with Cyclic redundancy check (CRC) on the primary cell;
The UE reads a search space identified as a common type in the PDCCH dedicated configuration configured in the RRC message, and the search space is used for the DCI format scrambling by the Multicast-RNTI with CRC on the primary cell;
If the UE does not find that the RRC message is configured with the information of the common search space set of the Nth type of PDCCH used for the search space configuration of the Multicast message, the association relationship between the PDCCH monitoring occasion for the Nth type of PDCCH common search space set and the SSB block index is the same as the association relationship between the PDCCH monitoring occasion for the Nth type of PDCCH common search space set and the PDCCH monitoring occasion of the PDCCH common search space of type 0;
Find out a CCE aggregation level in the common search space set of the Nth type of PDCCH and the number of PDCCH candidates for each CCE aggregation level by a look-up table;
Wherein, the information of the common search space set of the Nth type of PDCCH, and/or the information of the search space identified as the common type, includes at least one of the following information:

A search space label;
first indication information for indicating a first time symbol in a control resource set in one slot of a PDCCH monitoring occasion for a Multicast message;
second indication information for indicating a monitoring period and a time offset at the PDCCH monitoring occasion for the Multicast message;
third indication information for indicating an initial symbol and/or duration in a monitoring period of the PDCCH monitoring occasion for the Multicast message;
fourth indication information for indicating a monitoring slot and/or monitoring time symbol of the PDCCH monitoring occasion of the Multicast message in a bitmap form;
fifth indication information for indicating a monitoring time symbol in one slot of the PDCCH monitoring occasion for the Multicast message in the bitmap form;
sixth indication information for indicating the initial symbol and/or duration of one slot at the PDCCH monitoring occasion for the Multicast message;
seventh indication information for indicating an index of a control resource set associated with the search space.

Optionally, the monitoring occasion of PDCCH of one or more Multicast messages constitutes one Multicast message occasion.
Optionally, when the processor 331 executes the program, the following steps may also be implemented: determining a Multicast scheduling radio frame (MF), wherein MF is a system frame that includes MOs or a starting point of MOs of one or more Multicast services.
Optionally, when the processor 331 executes the program, the following steps may also be implemented: selecting one or more beams for receiving Multicast scheduling information.
Optionally, the occasion of one Multicast message is the monitoring occasion of PDCCHs of Y Multicast messages, wherein Y is determined according to the number of SSBs actually transmitted in the cell.
Optionally, the occasion of one Multicast message being the monitoring occasion of the PDCCH of a group of Multicast messages, including:
a Z-th PDCCH monitoring occasion used in the occasions of the Multicast message corresponding to a Z-th transmitted SSB, and Z is a positive integer.
FIG. 33a is a schematic structural diagram of a network side device provided by an embodiment of the present disclosure. The network side device 3300 includes a processor 3301, a memory 3302, and a program stored on the memory 3302 and executed by the processor 3301; the processor 3301 implements the following steps when executing the program:

sending Multicast information at the monitoring occasion of the PDCCH of the one or more Multicast messages;
Wherein, the monitoring occasion of the PDCCH of one Multicast message includes at least one slot;
Wherein, each slot included in the monitoring occasion of the PDCCH of one Multicast message includes at least one time symbol;
Wherein, the Multicast information includes at least one of the following:

DCI of a network scheduling Multicast service;
DCI of configuration information of the network scheduling Multicast service;
DCI of information of a control channel of the Multicast service;
DCI of the information of the control channel of the network scheduling Multicast service;
DCI of the scheduling information of the information of the control channel of the Multicast service;
DCI of modification information of the control channel of the network scheduling Multicast service;
DCI of the modification information of the control channel of the Multicast service;
DCI of the scheduling information of the modification information of the control channel of the Multicast service.

Optionally, when the processor 3301 executes the program, the following steps may also be implemented:
The sending Multicast information at the monitoring occasion of the PDCCH of the one or more Multicast messages includes:

Associating the monitoring occasion of the PDCCH of the Multicast message with a search space of a corresponding Multicast message or a search space set of the Multicast message;
Configuring the search space for Multicast messages by at least one of the following methods:

information of a common search space set of an Nth type of PDCCH configured by the search space used for the Multicast message in PDCCH common configuration configured through an RRC message; wherein the common search space is used for a DCI format scrambled by a Multicast-RNTI with Cyclic redundancy check (CRC) on a primary cell;

a search space identified as a common type in PDCCH dedicated configuration configured through the RRC message, and the search space being used for the DCI format scrambling by the Multicast-RNTI with CRC on the primary cell;

Wherein, the information of the common search space set of the Nth type of PDCCH, and/or the information of the search space identified as the common type, includes at least one of the following information:

A search space label;
first indication information for indicating a first time symbol in a control resource set in one slot of a PDCCH monitoring occasion for a Multicast message;
second indication information for indicating a monitoring period and a time offset at the PDCCH monitoring occasion for the Multicast message;
third indication information for indicating an initial symbol and/or duration in a monitoring period of the PDCCH monitoring occasion for the Multicast message;
fourth indication information for indicating a monitoring slot and/or monitoring time symbol of the PDCCH monitoring occasion of the Multicast message in a bitmap form;
fifth indication information for indicating a monitoring time symbol in one slot of the PDCCH monitoring occasion for the Multicast message in the bitmap form;
sixth indication information for indicating the initial symbol and/or duration of one slot at the PDCCH monitoring occasion for the Multicast message;
seventh indication information for indicating an index of a control resource set associated with the search space.

Optionally, the monitoring occasion of PDCCH of one or more Multicast messages constitutes one Multicast message occasion.

Optionally, when the processor 3301 executes the program, the following steps may also be implemented: determining a Multicast scheduling radio frame, wherein MF is a system frame that includes MOs or a starting point of MOs of one or more Multicast services.

Optionally, when the processor 3301 executes the program, the following steps may also be implemented: selecting one or more beams for sending Multicast scheduling information.

Optionally, the occasion of one Multicast message is the monitoring occasion of PDCCHs of Y Multicast messages, wherein Y is determined according to the number of SSBs actually transmitted in the cell.

Optionally, the occasion of one Multicast message being the monitoring occasion of the PDCCH of a group of Multicast messages, including:
a Z-th PDCCH monitoring occasion used in the occasion of the Multicast message corresponding to a Z-th transmitted SSB, and Z is a positive integer.

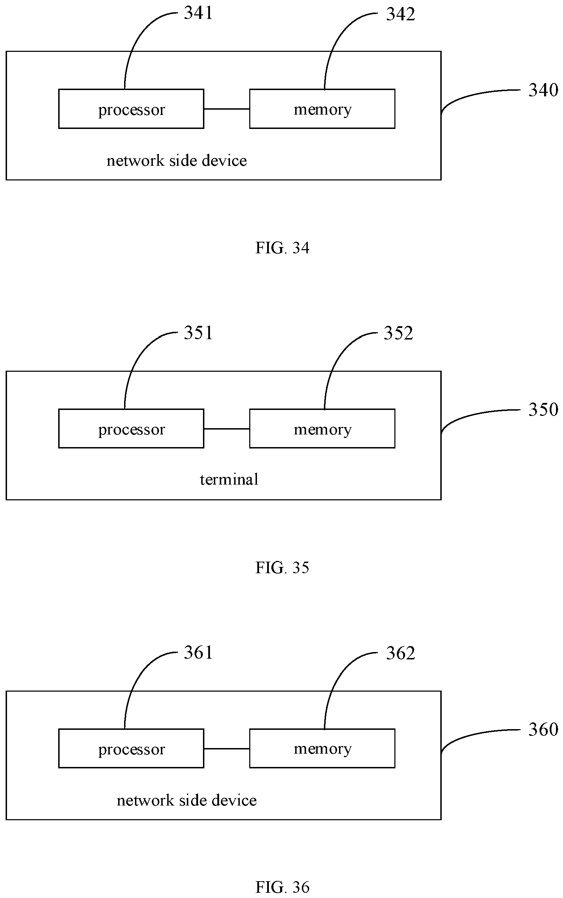

FIG. 34 is a schematic structural diagram of a network side device provided by an embodiment of the present disclosure. The network side device 340 includes a processor 341, a memory 342, and a program stored on the memory 342 and executed by the processor 341; when the processor 341 executes the program, the following steps are implemented:
in a repetition period of control information of a Multicast service and/or broadcast service, sending control information of n Multicast services and/or broadcast services to a terminal at intervals of t time domain units, wherein n and t are positive integers.

Optionally, when the processor 341 executes the program, the following steps may also be implemented: in a repetition period of control information of a Multicast service and/or broadcast service, sending control information of n Multicast services and/or broadcast services to a terminal at intervals of t time domain units, wherein n and t are positive integers, the method includes:
Sending first information to the terminal, wherein the first information is used to indicate a first sending time, the first sending time is a sending time of the control information of the n Multicast services and/or broadcast services in the corresponding time domain unit.

Optionally, the first information includes at least one of the following:

information for indicating an initial time of the first sending time;
information for indicating a duration of the first sending time;
information for indicating a first offset, wherein the first offset is an offset between the first sending time and a position of RMSI of SSB.

FIG. 35 is a schematic structural diagram of a terminal provided by an embodiment of the present disclosure. The terminal 350 includes a processor 351, a memory 352, and a program stored in the memory 352 and executed by the processor 351; the processor 351 implements the following steps when executing the program:
receiving control information of n Multicast services and/or broadcast services sent by a network side device at intervals of t time domain units in a repetition period of control information of a Multicast service and/or broadcast service, wherein n and t are positive integers.

Optionally, when the processor 351 executes the program, the following steps may also be implemented:
The receiving control information of n Multicast services and/or broadcast services sent by a network side device at intervals of t time domain units in a repetition period of control information of a Multicast service and/or broadcast service, wherein n and t are positive integers includes:

obtaining the time domain unit corresponding to the control information of the Multicast service and/or broadcast service within the repetition period;
monitoring the control information of the corresponding Multicast service and/or broadcast service in the time domain unit.

Optionally, the time domain unit is calculated according to the following formula:

$$\text{SFN mod sc-mcch-RepetitionPeriod} = \text{sc-mcch-Offset} + (\text{sc-mcch-RepetitionPeriod}) \text{ divided by } (M/n) * ([\text{Multicast\_ID}/n] - 1);$$

SFN is a serial number of the time domain unit corresponding to the control information of the first Multicast service and/or broadcast service, sc-mcch-RepetitionPeriod is a size of the repetition period, and sc-mcch-Offset is an offset of an initial time domain unit of the first repetition period, M is the total number of control information of the Multicast service and/or broadcast service sent within the repetition period, and the Multicast_ID is the serial number of the Multicast service and/or broadcast service, so the Multicast_ID is determined according to the sending sequence of the control information of the Multicast service and/or broadcast service within the repetition period.

Optionally, the processor 351 implements the following steps when executing the program:
The receiving control information of n Multicast services and/or broadcast services sent by a network side device at intervals of t time domain units in a repetition period of control information of a Multicast service and/or broadcast service, wherein n and t are positive integers includes:

receiving the first information sent by the network side device, wherein the first information is used to indicate a second sending time, and the second sending time is a sending time of the control information of the n Multicast services and/or broadcast services in the corresponding time domain unit;
receiving the control information of the n Multicast services and/or broadcast services at the second sending time.

Optionally, the first information includes at least one of the following information:

information for indicating an initial time of the second sending time;
information for indicating a duration of the second sending time;
information for indicating a first offset, wherein the first offset is an offset between the second sending time and a position of RMSI of SSB.

FIG. 36 is a schematic structural diagram of a network side device provided by an embodiment of the present disclosure. The network side device 360 includes a processor 361, a memory 362, and a program stored on the memory 362 and executed by the processor 361; the processor 361 implements the following steps when executing the program:

sending configuration information to a terminal,
sending the configuration information to the terminal, where the configuration information is used to indicate a first symbol information and/or a second symbol information in one slot, the first symbol is a symbol used to send unicast information, and the second symbol is a symbol used to send Multicast information and/or broadcast information;
the first symbol information, a number of time symbols and/or a number of PRBs occupied by the first symbol;
the second symbol information, a number of time symbols and/or the number of PRBs occupied by the second symbol.

Optionally, the configuration information is also used to indicate that a column of reference signals is inserted for every y symbols in the slot; and/or, the configuration information is also used to indicate that one reference signal is inserted for every x subcarriers in the frequency domain corresponding to the slot, wherein the reference signal is a reference signal for Multicast and/or broadcast;
Optionally, the reference signal may be one SSB or one SSB set of one cell, or one SSB or one SSB set shared by one Multicast and/or broadcast area; and/or:

Optionally, the reference signal may be a unified CSI-RS or a CSI-RS set for terminals in a Multicast and/or broadcast group, or a CSI-RS or a CSI-RS set shared in a Multicast and/or broadcast area;
Optionally, the information of the reference signal needs to be exchanged between different network nodes;
Wherein, x and y are positive integers, x is determined according to the subcarrier spacing, and y is determined according to the subcarrier spacing;
the unicast information includes a reference signal corresponding to unicast, at least one of control signaling and data;
the Multicast information includes a reference signal corresponding to the Multicast, at least one of control signaling and data;
the broadcasting information includes a reference signal corresponding to broadcast, at least one of control signaling and data;
Optionally, x and y are positive integers, x is determined according to the subcarrier spacing, and y is also determined according to the measurement accuracy.

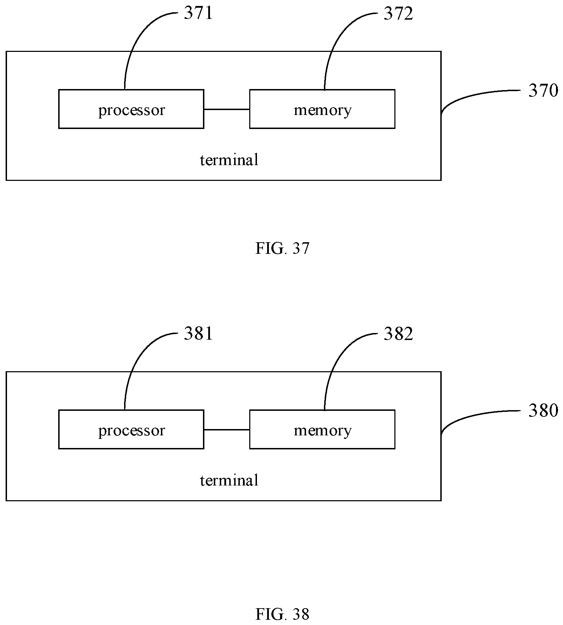

FIG. 37 is a schematic structural diagram of a terminal provided by an embodiment of the present disclosure. The terminal 370 includes a processor 371, a memory 372, and a program stored in the memory 372 and executed by the processor 371; the processor 371 implements the following steps when executing the program:

receiving the configuration information sent by a network side device,
sending the configuration information to the terminal, wherein the configuration information is used to indicate first symbol information and/or second symbol information in one slot, the first symbol is a symbol used to send unicast information, and the second symbol is a symbol used to send Multicast information and/or broadcast information;
The first symbol information includes the number of time symbols and/or the number of PRBs occupied by the first symbol;
The second symbol information includes the number of time symbols and/or the number of PRBs occupied by the second symbol.

Optionally, the configuration information is also used to indicate that a column of reference signals is inserted for every y symbols in the slot; and/or, the configuration information is also used to indicate that a reference signal is inserted for every x subcarriers in the frequency domain corresponding to the slot, wherein the reference signal is a reference signal for Multicast and/or broadcast;
Optionally, the reference signal may be an SSB or an SSB set in a cell, or an SSB or an SSB set shared by a Multicast and/or broadcast area; and/or:

Optionally, the reference signal may be a unified CSI-RS or a CSI-RS set for terminals in a Multicast and/or broadcast group, or a CSI-RS or a CSI-RS set shared by a Multicast and/or broadcast area;
Optionally, the information of the reference signal needs to be exchanged between different network nodes;
Wherein, x and y are positive integers, x is determined according to the subcarrier spacing, and y is determined according to the subcarrier spacing;
The unicast information includes a reference signal corresponding to unicast, at least one of control signaling and data;
The Multicast information includes a reference signal corresponding to the Multicast, at least one of control signaling and data;
The broadcast information includes a reference signal corresponding to the broadcast, at least one of control signaling and data;
Optionally, x and y are positive integers, x is determined according to the subcarrier spacing, and y is also determined according to the measurement accuracy.

FIG. 38 is a schematic structural diagram of a terminal provided by an embodiment of the present disclosure. The terminal 380 includes a processor 381, a memory 382, and a program stored in the memory 382 and executed by the processor 381; the processor 381 implements the following steps when executing the program:

receiving resource configuration information sent by a network side device, the resource configuration information is resource configuration information of a Multicast service and/or broadcast service of a neighboring cell; measuring or not measure a resource corresponding to the resource configuration information.

Optionally, when the processor 381 executes the program, the following steps may also be implemented: The measuring or not measure a resource corresponding to the resource configuration information includes:

If the terminal only has a unicast service, not measuring the resource corresponding to the resource configuration information;
If the terminal only has a Multicast service and/or broadcast service, measuring the resource corresponding to the resource configuration information;
If the terminal has both a unicast service and a Multicast service and/or a broadcast service, measuring the resource corresponding to the resource configuration information.

An embodiment of the present disclosure provides a readable storage medium on which a program is stored, and when the program is executed by a processor, the steps in any one of the above methods are implemented. For details, please refer to the description of the method steps in the above corresponding embodiments.
The network side device in the embodiments of the present disclosure may be a Base Transceiver Station (BTS for short) in Global System of Mobile communication (GSM for short) or Code Division Multiple Access (CDMA for short), It can also be a base station (NodeB, NB for short) in Wideband Code Division Multiple Access (WCDMA for short), or an evolved base station (Evolutional Node B, eNB or eNodeB for short) in LTE, or a relay station or an access point, or a base station in a future 5G network, etc., which are not limited here.
The terminal in the embodiment of the present disclosure may be a wireless terminal or a wired terminal, and the wireless terminal may be a device that provides voice and/or other business data connectivity to the user, a handheld device with a wireless connection function, or other processing equipment connected to the wireless modem. The wireless terminal can communicate with one or more core networks via the Radio Access Network (RAN for short), and the wireless terminal can be a mobile terminal, such as a mobile phone (or called a "cellular" phone) and a computer, for example, may be portable, pocket, handheld, built-in, or vehicle-mounted mobile devices that exchange voice and/or data with the radio access network. For example, Personal Communication Service (PCS for short) phones, cordless phones, Session Initiation Protocol (SIP for short) phones, Wireless Local Loop (WLL for short) stations, Personal digital assistants (PDA) and other equipment. Wireless terminal can also be called system, subscriber unit, subscriber station, mobile station, remote station, remote terminal, Access Terminal, User Terminal, User Agent, and User Device or User Equipment, which are not limited here.
The above-mentioned readable storage medium includes a computer-readable storage medium. Computer-readable storage media includes both volatile and non-volatile, removable and non-removable media by any method or technology for storage of information. Information may be computer readable instructions, data structures, modules of a program, or other data. Examples of storage medium include, but are not limited to, phase change memory (PRAM), static random access memory (SRAM), dynamic random access memory (DRAM), other types of random access memory (RAM), read only memory (ROM) ), Electrically Erasable Programmable Read Only Memory (EEPROM), Flash memory or other memory technology, Compact Disc Read Only Memory (CD-ROM), Digital Versatile Disc (DVD) or other optical storage, magnetic cartridges magnetic tape, tape magnetic disk storage or other magnetic storage device or any other non-transmission medium that can be used to store information that can be accessed by a computing device.
The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

**Claims**

1. An information communication method, applied to a network side device, comprising:

sending a first downlink control information (DCI) scrambled by a first radio network temporary identifier (RNTI) to a terminal, the first DCI being used to indicate whether control information of a Multicast service and/or broadcast service is changed or related information is changed; or
sending a second DCI scrambled by a second RNTI to the terminal, the second DCI being used to indicate whether the control information of a Multicast service and/or broadcast service set is changed or related information is changed;

wherein the control information includes configuration information of the Multicast service and/or broadcast service.

2. The method according to claim 1, wherein the configuration information of the Multicast service and/or broadcast service includes at least one of the following:

a Temporary Mobile Group Identity (TMGI) list;
session ID corresponding to TMGI in the TMGI list;
group RNTI corresponding to the TMGI in the TMGI list;
bandwidth Part (BWP) corresponding to the TMGI in the TMGI list;
subcarrier spacing corresponding to the TMGI in the TMGI list;
a logical channel and/or logical channel group corresponding to the TMGI in the TMGI list;
discontinuous Reception (DRX) configuration corresponding to the TMGI in the TMGI list;
uplink resource configuration fed back by Hybrid Automatic Repeat request (HARQ) corresponding to the TMGI in the TMGI list;
uplink resource configuration reported by channel state information (CSI) corresponding to the TMGI in the TMGI list.

3. The method according to claim 1, wherein the first DCI is used to indicate at least one of the following:

the control information of the Multicast service and/or broadcast service having been changed;
whether the control information of the Multicast service and/or broadcast service has been changed;
changed control information of the Multicast service and/or broadcast service;
a type of the changed control information of the Multicast service and/or broadcast service;
resource information of acquiring the changed control information of the Multicast service and/or broadcast service.

4. The method according to claim 3, wherein, when the first DCI is used to indicate that the control information of the Multicast service and/or broadcast service has been changed, the first DCI is also used to indicate at least one of the following:

the configuration information of the Multicast service and/or broadcast service having being changed;
a transmission mode of the Multicast service and/or broadcast service being changed from a single cell point-to-multipoint transmission mode to a multi cell point-to-multipoint transmission mode;
the transmission mode of the Multicast service and/or broadcast service being changed from the multi cell point-to-multipoint transmission mode to the single cell point-to-multipoint transmission mode;
the transmission mode of the Multicast service and/or broadcast service being changed from a point-to-multipoint transmission mode to a point-to-point transmission mode;
the transmission mode of the Multicast service and/or broadcast service being changed from the point-to-point transmission mode to the point-to-multipoint transmission mode;
a Multicast or broadcast service whose control information have been changed;
adding a new set of Multicast service and/or broadcast services;
removing a set of existing Multicast service and/or broadcast services;
modification of a set of existing Multicast service and/or broadcast services;
turning Off or On HARQ feedback of the Multicast service and/or broadcast service;
turning On or Off CSI feedback of the Multicast service and/or broadcast service.

5. The method according to claim 1, wherein the first DCI is used to indicate at least one of the following:

the configuration information of the Multicast service and/or broadcast service having being changed;
a transmission mode of the Multicast service and/or broadcast service being changed from a single cell point-to-multipoint transmission mode to a multi cell point-to-multipoint transmission mode;
the transmission mode of the Multicast service and/or broadcast service being changed from the multi cell point-to-multipoint transmission mode to the single cell point-to-multipoint transmission mode;
the transmission mode of the Multicast service and/or broadcast service being changed from a point-to-multipoint transmission mode to a point-to-point transmission mode;
the transmission mode of the Multicast service and/or broadcast service being changed from the point-to-point transmission mode to the point-to-multipoint transmission mode;

a Multicast or broadcast service whose control information have been changed;
adding a new set of Multicast service and/or broadcast services;
removing a set of existing Multicast service and/or broadcast services;
modification of a set of existing Multicast service and/or broadcast services;
turning Off or On HARQ feedback of the Multicast service and/or broadcast service;
turning On or Off CSI feedback of the Multicast service and/or broadcast service.

6.  The method according to claim 1, wherein the Multicast service and/or broadcast service set is a set of some or all Multicast services and/or broadcast services in a cell; and/or,
    the Multicast service and/or broadcast service set is a set of some or all Multicast services and/or broadcast services in a Multicast area and/or broadcast area.

7.  The method according to claim 1, wherein the second DCI is used to indicate at least one of the following:

    the control information of the Multicast service and/or broadcast service set having been changed;
    whether the control information of the Multicast service and/or broadcast service set has been changed;
    changed control information of the Multicast service and/or broadcast service set;
    a type of the changed control information of the Multicast service and/or broadcast service set;
    resource information of acquiring the changed control information of the Multicast service and/or broadcast service set.

8.  The method according to claim 7, wherein, when the second DCI is used to indicate that the control information of the Multicast service and/or broadcast service set has been changed, the second DCI is also used to indicate at least one of the following:

    the configuration information of the Multicast service and/or broadcast service set having being changed;
    a transmission mode of the Multicast service and/or broadcast service set being changed from a single cell point-to-multipoint transmission mode to a multi cell point-to-multipoint transmission mode;
    the transmission mode of the Multicast service and/or broadcast service set being changed from the multi cell point-to-multipoint transmission mode to the single cell point-to-multipoint transmission mode;
    the transmission mode of the Multicast service and/or broadcast service set being changed from a point-to-multipoint transmission mode to a point-to-point transmission mode;
    the transmission mode of the Multicast service and/or broadcast service set being changed from the point-to-point transmission mode to the point-to-multipoint transmission mode;
    Multicast or broadcast services where the control information of the Multicast service and/or broadcast service set has been changed;
    adding a new set of Multicast service and/or broadcast services;
    removing a set of existing Multicast service and/or broadcast services;
    modification of a set of existing Multicast service and/or broadcast services;
    turning Off or On HARQ feedback of the Multicast service and/or broadcast service set;
    turning On or Off CSI feedback of the Multicast service and/or broadcast service set.

9.  The method according to claim 1, wherein the second DCI is used to indicate at least one of the following:

    the configuration information of the Multicast service and/or broadcast service set having being changed;
    a transmission mode of the Multicast service and/or broadcast service set being changed from a single cell point-to-multipoint transmission mode to a multi cell point-to-multipoint transmission mode;
    the transmission mode of the Multicast service and/or broadcast service set being changed from the multi cell point-to-multipoint transmission mode to the single cell point-to-multipoint transmission mode;
    the transmission mode of the Multicast service and/or broadcast service set being changed from a point-to-multipoint transmission mode to a point-to-point transmission mode;
    the transmission mode of the Multicast service and/or broadcast service set being changed from the point-to-point transmission mode to the point-to-multipoint transmission mode;
    Multicast or broadcast services where the control information of the Multicast service and/or broadcast service set has been changed;
    adding a new set of Multicast service and/or broadcast services;
    removing a set of existing Multicast service and/or broadcast services;
    modification of a set of existing Multicast service and/or broadcast services;

adding a new set of Multicast service and/or broadcast services;

removing a set of existing Multicast service and/or broadcast services;

modification of a set of existing Multicast service and/or broadcast services;

turning Off or On HARQ feedback of the Multicast service and/or broadcast service set;

turning On or Off CSI feedback of the Multicast service and/or broadcast service set;

identification information of changed Multicast services and/or broadcast services in the Multicast service and/or broadcast service set.

10. The method according to claim 1, wherein, after sending a first DCI scrambled by a first RNTI to a terminal, the method further comprises:

the first DCI including information for indicating that the control information of the Multicast service and/or the broadcast service has been changed, and/or

in a case that a control information resource for indicating the Multicast service and/or broadcast service carries change information, sending the change information of the control information of the Multicast service and/or broadcast service.

11. The method according to claim 1, further comprising:

broadcasting control information of each Multicast service and/or broadcast service among control information of a plurality of Multicast services and/or broadcast services; or,

broadcasting control information of a first Multicast service and/or broadcast service among the control information of the plurality of Multicast services and/or broadcast services, and control information of other Multicast services and/or broadcast services among the control information of the plurality of Multicast services and/or broadcast services being the same as the control information of the first Multicast service and/or broadcast service;

wherein, the control information includes at least one of a repetition period, an offset, an initial subframe or a modification period.

12. An information communication method, applied to a terminal, comprising:

receiving a first DCI sent by a network side device and scrambled by a first RNTI, the first DCI being used to indicate whether the control information of one Multicast service and/or broadcast service is changed or related information is changed; or

receiving a second DCI sent by the network side device and scrambled by a second RNTI, the second DCI is used to indicate whether the control information of a Multicast service and/or broadcast service set is changed or related information is changed;

wherein the control information includes configuration information of the Multicast service and/or broadcast service.

13. The method according to claim 12, wherein, the configuration information of the Multicast service and/or broadcast service includes at least one of the following:

a TMGI list;

session ID corresponding to TMGI in the TMGI list;

group RNTI corresponding to the TMGI in the TMGI list;

bandwidth Part (BWP) corresponding to the TMGI in the TMGI list;

subcarrier spacing corresponding to the TMGI in the TMGI list;

a logical channel and/or logical channel group corresponding to the TMGI in the TMGI list;

discontinuous Reception (DRX) configuration corresponding to the TMGI in the TMGI list;

uplink resource configuration fed back by Hybrid Automatic Repeat request (HARQ) corresponding to the TMGI in the TMGI list;

uplink resource configuration reported by channel state information (CSI) corresponding to the TMGI in the TMGI list.

14. The method according to claim 12, wherein the first DCI is used to indicate at least one of the following:

the control information of the Multicast service and/or broadcast service having been changed;

whether the control information of the Multicast service and/or broadcast service has been changed;
changed control information of the Multicast service and/or broadcast service;
a type of the changed control information of the Multicast service and/or broadcast service;
resource information of acquiring the changed control information of the Multicast service and/or broadcast service.

15. The method according to claim 14, wherein, when the first DCI is used to indicate that the control information of the Multicast service and/or broadcast service has been changed, the first DCI is also used to indicate at least one of the following:the configuration information of the Multicast service and/or broadcast service having being changed;

a transmission mode of the Multicast service and/or broadcast service being changed from a single cell point-to-multipoint transmission mode to a multi cell point-to-multipoint transmission mode;
the transmission mode of the Multicast service and/or broadcast service being changed from the multi cell point-to-multipoint transmission mode to the single cell point-to-multipoint transmission mode;
the transmission mode of the Multicast service and/or broadcast service being changed from a point-to-multipoint transmission mode to a point-to-point transmission mode;
the transmission mode of the Multicast service and/or broadcast service being changed from the point-to-point transmission mode to the point-to-multipoint transmission mode;
a Multicast or broadcast service whose control information have been changed;
adding a new set of Multicast service and/or broadcast services;
removing a set of existing Multicast service and/or broadcast services;
modification of a set of existing Multicast service and/or broadcast services;
turning Off or On HARQ feedback of the Multicast service and/or broadcast service;
turning On or Off CSI feedback of the Multicast service and/or broadcast service.

16. The method according to claim 12, wherein the first DCI is used to indicate at least one of the following:

the configuration information of the Multicast service and/or broadcast service having being changed;
a transmission mode of the Multicast service and/or broadcast service being changed from a single cell point-to-multipoint transmission mode to a multi cell point-to-multipoint transmission mode;
the transmission mode of the Multicast service and/or broadcast service being changed from the multi cell point-to-multipoint transmission mode to the single cell point-to-multipoint transmission mode;
the transmission mode of the Multicast service and/or broadcast service being changed from a point-to-multipoint transmission mode to a point-to-point transmission mode;
the transmission mode of the Multicast service and/or broadcast service being changed from the point-to-point transmission mode to the point-to-multipoint transmission mode;
a Multicast or broadcast service whose control information have been changed;
adding a new set of Multicast service and/or broadcast services;
removing a set of existing Multicast service and/or broadcast services;
modification of a set of existing Multicast service and/or broadcast services;
turning Off or On HARQ feedback of the Multicast service and/or broadcast service;
turning On or Off CSI feedback of the Multicast service and/or broadcast service.

17. The method according to claim 12, wherein the Multicast service and/or broadcast service set is a set of part or all Multicast services and/or broadcast services in a cell; and/or,
the Multicast service and/or broadcast service set is a set of part or all Multicast services and/or broadcast services in one Multicast area and/or broadcast area.

18. The method according to claim 12, wherein the second DCI is used to indicate at least one of the following:

the control information of the Multicast service and/or broadcast service set having been changed;
whether the control information of the Multicast service and/or broadcast service set has been changed;
changed control information of the Multicast service and/or broadcast service set;
a type of the changed control information of the Multicast service and/or broadcast service set;
resource information of acquiring the changed control information of the Multicast service and/or broadcast service set.

19. The method according to claim 18, wherein, when the second DCI is used to indicate that the control information of the Multicast service and/or broadcast service set has been changed, the second DCI is also used to indicate at least one of the following:

the configuration information of the Multicast service and/or broadcast service set having being changed;
a transmission mode of the Multicast service and/or broadcast service set being changed from a single cell point-to-multipoint transmission mode to a multi cell point-to-multipoint transmission mode;
the transmission mode of the Multicast service and/or broadcast service set being changed from the multi cell point-to-multipoint transmission mode to the single cell point-to-multipoint transmission mode;
the transmission mode of the Multicast service and/or broadcast service set being changed from a point-to-multipoint transmission mode to a point-to-point transmission mode;
the transmission mode of the Multicast service and/or broadcast service set being changed from the point-to-point transmission mode to the point-to-multipoint transmission mode;
Multicast or broadcast services where the control information of the Multicast service and/or broadcast service set has been changed;
adding a new set of Multicast service and/or broadcast services;
removing a set of existing Multicast service and/or broadcast services;
modification of a set of existing Multicast service and/or broadcast services;
turning Off or On HARQ feedback of the Multicast service and/or broadcast service set;
turning On or Off CSI feedback of the Multicast service and/or broadcast service set.

20. The method according to claim 12, wherein the second DCI is used to indicate at least one of the following:

the configuration information of the Multicast service and/or broadcast service set having being changed;
a transmission mode of the Multicast service and/or broadcast service set being changed from a single cell point-to-multipoint transmission mode to a multi cell point-to-multipoint transmission mode;
the transmission mode of the Multicast service and/or broadcast service set being changed from the multi cell point-to-multipoint transmission mode to the single cell point-to-multipoint transmission mode;
the transmission mode of the Multicast service and/or broadcast service set being changed from a point-to-multipoint transmission mode to a point-to-point transmission mode;
the transmission mode of the Multicast service and/or broadcast service set being changed from the point-to-point transmission mode to the point-to-multipoint transmission mode;
Multicast or broadcast services where the control information of the Multicast service and/or broadcast service set has been changed;
adding a new set of Multicast service and/or broadcast services;
removing a set of existing Multicast service and/or broadcast services;
modification of a set of existing Multicast service and/or broadcast services;
turning Off or On HARQ feedback of the Multicast service and/or broadcast service set;
turning On or Off CSI feedback of the Multicast service and/or broadcast service set;
identification information of changed Multicast services and/or broadcast services in the Multicast service and/or broadcast service set.

21. The method according to claim 12, wherein, after receiving a first DCI scrambled by a first RNTI sent by a network side device, the further comprises:
the first DCI including information for indicating that the control information of the Multicast service and/or the broadcast service has been changed, and/or:
in a case that the control information resource for indicating the Multicast service and/or broadcast service carries change information, receiving the change information of the control information of the Multicast service and/or broadcast service.

22. An information configuration method, applied to a network side device, comprising:

configuring control information of a set of Multicast services and/or broadcast services for m Multicast services and/or broadcast services;
in a cell where the m Multicast services and/or broadcast services are located, n Multicast services and/or broadcast services being in a Multicast area and/or broadcast area;
the n Multicast services and/or broadcast services being configured with control information of k sets of Multicast services and/or broadcast services;
wherein m, n, k are natural numbers greater than or equal to 1, m is less than or equal to n, and k is less than or equal to n.

23. The method according to claim 22, further comprising:

configuring at least one of a repetition period, a modification period, and an initial offset for the sending of the control information of the k sets of Multicast services and/or broadcast services; at least one of the repetition period, the modification period, and the initial offset of the control information of the k sets of Multicast services and/or broadcast services being the same or different.

24. The method according to claim 23, further comprising: in the repetition period of the control information of the Multicast service and/or broadcast service, sending control information of n Multicast services and/or broadcast services to the terminal at intervals of t time domain units, wherein n and t are positive integers.

25. The method according to claim 24, wherein, in the repetition period of the control information of the Multicast service and/or broadcast service, the sending control information of n Multicast services and/or broadcast services to the terminal at intervals of t time domain units further includes: sending first information to the terminal, wherein the first information is used to indicate a first sending time, the first sending time is sending time of the control information of the n Multicast services and/or broadcast services in a corresponding time domain unit.

26. The method according to claim 25, wherein the first information includes at least one of the following:

information for indicating a start time of the first sending time; information for indicating a duration of the first sending time; information for indicating a first offset, wherein the first offset is an offset between the first sending time and a position of RMSI of SSB.

27. An information receiving method, applied to a terminal, comprising:

determining monitoring occasion of physical downlink control channel (PDCCH) of one or more Multicast messages; and receiving Multicast information at the monitoring occasion of the PDCCH of the one or more Multicast messages; wherein, the monitoring occasion of the PDCCH of one Multicast message includes at least one slot; wherein, each slot included in the monitoring occasion of the PDCCH of one Multicast message includes at least one time symbol; wherein, the Multicast information includes at least one of the following:

DCI of a network scheduling Multicast service; DCI of configuration information of the network scheduling Multicast service; DCI of information of a control channel of the Multicast service; DCI of information of a control channel of the network scheduling Multicast service; DCI of scheduling information of the information of the control channel of the Multicast service; DCI of modification information of the control channel of the network scheduling Multicast service; DCI of the modification information of the control channel of the Multicast service; DCI of scheduling information of the modification information of the control channel of the Multicast service.

28. The method according to claim 27, wherein the determining monitoring occasion of PDCCH of one or more Multicast messages comprises:

determining the monitoring occasion of the PDCCH of the Multicast message according to a search space of the Multicast message or a search space set of the Multicast message; determining the search space of the Multicast message by at least one of the following methods:

a UE reading information of a common search space set of an Nth type of PDCCH configured by the search space used for the Multicast message in PDCCH common configuration configured by a network through an RRC message; wherein, the common search space is used for a DCI format scrambled by a Multicast-RNTI with Cyclic redundancy check (CRC) on a primary cell;

the UE reading a search space identified as a common type in PDCCH dedicated configuration configured in the RRC message, and the search space being used for the DCI format scrambling by the Multicast-RNTI with CRC on the primary cell;

if the UE does not find that the RRC message is configured with the information of the common search space set of the Nth type of PDCCH used for the search space configuration of the Multicast message, an association relationship between the PDCCH monitoring occasion for the Nth type of PDCCH common search space set and an SSB block index being the same as an association relationship between the PDCCH monitoring occasion for the Nth type of PDCCH common search space set and the PDCCH monitoring occasion of the PDCCH common search space of type 0;

finding out a CCE aggregation level in the common search space set of the Nth type of PDCCH and a number of PDCCH candidates in each CCE aggregation level by a look-up table;

wherein, the information of the common search space set of the Nth type of PDCCH, and/or the information of the search space identified as the common type, includes at least one of the following information:

a search space label;

first indication information for indicating a first time symbol in a control resource set in one slot of a PDCCH monitoring occasion for the Multicast message;

second indication information for indicating a monitoring period and a time offset at the PDCCH monitoring occasion for the Multicast message;

third indication information for indicating an initial symbol and/or duration in a monitoring period of the PDCCH monitoring occasion for the Multicast message;

fourth indication information for indicating a monitoring slot and/or monitoring time symbol of the PDCCH monitoring occasion for the Multicast message in a bitmap form;

fifth indication information for indicating a monitoring time symbol in one slot of the PDCCH monitoring occasion for the Multicast message in the bitmap form;

sixth indication information for indicating the initial symbol and/or duration of one slot at the PDCCH monitoring occasion for the Multicast message;

seventh indication information for indicating an index of a control resource set associated with the search space.

29. The method according to claim 27, wherein the monitoring occasion of PDCCH of one or more Multicast messages constitutes one Multicast message occasion.

30. The method according to claim 27, further comprising:
determining a Multicast scheduling radio frame (MF), wherein MF is a system frame that includes MOs or a starting point of MOs of one or more Multicast services.

31. The method according to claim 27, comprising:
selecting one or more beams for receiving Multicast scheduling information.

32. The method according to claim 27, wherein,
the occasion of one Multicast message is monitoring occasion of PDCCH of Y Multicast messages, wherein Y is determined according to a number of SSBs actually transmitted in a cell.

33. The method according to claim 27, wherein the occasion of one Multicast message being the monitoring occasion of the PDCCH of a group of Multicast messages, including:
a Z-th PDCCH monitoring occasion used in occasions of the Multicast message corresponding to a Z-th transmitted SSB, wherein Z is a positive integer.

34. An information sending method, applied to a network side device, comprising:

sending Multicast information at monitoring occasion of PDCCH of one or more Multicast messages;
wherein the monitoring occasion of the PDCCH of one Multicast message includes at least one slot;
wherein, each slot included in the monitoring occasion of the PDCCH of one Multicast message includes at least one time symbol;
wherein, the Multicast information includes at least one of the following:

DCI of a network scheduling Multicast service;

DCI of configuration information of the network scheduling Multicast service;
DCI of information of a control channel of the Multicast service;
DCI of information of a control channel of the network scheduling Multicast service;
DCI of scheduling information of the information of the control channel of the Multicast service;
DCI of modification information of the control channel of the network scheduling Multicast service;
DCI of the modification information of the control channel of the Multicast service;
DCI of scheduling information of the modification information of the control channel of the Multicast service.

35. The method according to claim 34, wherein the sending Multicast information at monitoring occasion of PDCCH of one or more Multicast messages comprises:

associating the monitoring occasion of the PDCCH of the Multicast message with a search space of a corresponding Multicast message or a search space set of the Multicast message;
configuring the search space for Multicast messages by at least one of the following methods:

information of a common search space set of an Nth type of PDCCH configured by the search space used for the Multicast message in PDCCH common configuration configured through an RRC message; wherein the common search space is used for a DCI format scrambled by a Multicast-RNTI with Cyclic redundancy check (CRC) on a primary cell;
a search space identified as a common type in PDCCH dedicated configuration configured through the RRC message, and the search space being used for the DCI format scrambling by the Multicast-RNTI with CRC on the primary cell;
wherein, the information of the common search space set of the Nth type of PDCCH, and/or the information of the search space identified as the common type, includes at least one of the following information:

a search space label;
first indication information for indicating a first time symbol in a control resource set in one slot of a PDCCH monitoring occasion for the Multicast message;
second indication information for indicating a monitoring period and a time offset at the PDCCH monitoring occasion for the Multicast message;
third indication information for indicating an initial symbol and/or duration in a monitoring period of the PDCCH monitoring occasion for the Multicast message;
fourth indication information for indicating a monitoring slot and/or monitoring time symbol of the PDCCH monitoring occasion for the Multicast message in a bitmap form;
fifth indication information for indicating a monitoring time symbol in one slot of the PDCCH monitoring occasion for the Multicast message in the bitmap form;
sixth indication information for indicating the initial symbol and/or duration of one slot at the PDCCH monitoring occasion for the Multicast message;
seventh indication information for indicating an index of a control resource set associated with the search space.

36. The method according to claim 34, wherein the monitoring occasion of PDCCH of one or more Multicast messages constitutes one Multicast message occasion.

37. The method according to claim 34, further comprising:
determining a Multicast scheduling radio frame (MF), wherein MF is a system frame that includes MOs or a starting point of MOs of one or more Multicast services.

38. The method according to claim 34, comprising:
selecting one or more beams for sending Multicast scheduling information.

39. The method according to claim 34, wherein,
the occasion of one Multicast message is monitoring occasion of PDCCHs of Y Multicast messages, wherein Y is determined according to a number of SSBs actually transmitted in a cell.

40. The method according to claim 34, wherein the occasion of one Multicast message being the monitoring occasion of the PDCCH of a group of Multicast messages, including:
a Z-th PDCCH monitoring occasion used in occasion of the Multicast message corresponding to a Z-th transmitted SSB, wherein Z is a positive integer.

41. An information sending method, applied to a network side device, comprising:
in a repetition period of control information of a Multicast service and/or broadcast service, sending control information of n Multicast services and/or broadcast services to a terminal at intervals of t time domain units, wherein n and t are positive integers.

42. The method according to claim 41, wherein, in a repetition period of control information of a Multicast service and/or broadcast service, before sending control information of n Multicast services and/or broadcast services to a terminal at intervals of t time domain units, the method further includes:
sending first information to the terminal, wherein the first information is used to indicate a first sending time, the first sending time is a sending time of the control information of the n Multicast services and/or broadcast services in a corresponding time domain unit.

43. The method according to claim 42, wherein the first information includes at least one of the following:

information for indicating an initial time of the first sending time;
information for indicating a duration of the first sending time;
information for indicating a first offset, wherein the first offset is an offset between the first sending time and a position of RMSI of SSB.

44. An information receiving method, applied to a terminal, comprising:
receiving control information of n Multicast services and/or broadcast services sent by a network side device at intervals of t time domain units in a repetition period of control information of a Multicast service and/or broadcast service, wherein n and t are positive integers.

45. The method according to claim 44, wherein, the receiving control information of n Multicast services and/or broadcast services sent by a network side device at intervals of t time domain units in a repetition period of control information of a Multicast service and/or broadcast service includes:

obtaining a time domain unit corresponding to the control information of the Multicast service and/or broadcast service within the repetition period;
monitoring control information of a corresponding Multicast service and/or broadcast service in the time domain unit.

46. The method according to claim 45, wherein the time domain unit is calculated according to the following formula:

$$\text{SFN mod sc-mcch-RepetitionPeriod} = \text{sc-mcch-Offset} + (\text{sc-mcch-RepetitionPeriod}) \text{ divided by } (M/n) * (\lceil \text{Multicast\_ID} /n \rceil - 1);$$

wherein SFN is a serial number of the time domain unit corresponding to the control information of the first Multicast service and/or broadcast service, sc-mcch-RepetitionPeriod is a size of the repetition period, and sc-mcch-Offset is an offset of an initial time domain unit of the first repetition period, M is a total number of the control information of the Multicast service and/or broadcast service sent within the repetition period, and the Multicast\_ID is a serial number of the Multicast service and/or broadcast service, the Multicast\_ID is determined according to a sending sequence of the control information of the Multicast service and/or broadcast service within the repetition period.

47. The method according to claim 44, wherein the receiving control information of n Multicast services and/or broadcast services sent by a network side device at intervals of t time domain units in a repetition period of control information of a Multicast service and/or broadcast service includes:

receiving first information sent by the network side device, wherein the first information is used to indicate a second sending time, and the second sending time is a sending time of the control information of the n Multicast services and/or broadcast services in a corresponding time domain unit;
receiving the control information of the n Multicast services and/or broadcast services at the second sending time.

48. The method according to claim 47, wherein the first information includes at least one of the following information:

information for indicating a start time of the second sending time;
information for indicating a duration of the second sending time;
information for indicating a first offset, wherein the first offset is an offset between the second sending time and a position of RMSI of SSB.

49. A resource configuration method, applied to a network side device, comprising:

sending configuration information to a terminal, wherein the configuration information is used to indicate first symbol information and/or second symbol information in one slot, a first symbol is a symbol used to send unicast information, and a second symbol is a symbol used to send Multicast information and/or broadcast information;
the first symbol information includes a number of time symbols and/or a number of PRBs occupied by the first symbol;
the second symbol information includes a number of time symbols and/or the number of PRBs occupied by the second symbol.

50. The method according to claim 49, wherein the configuration information is also used to indicate that a column of reference signals are inserted for every y symbols in the slot; and/or, the configuration information is also used to indicate that one reference signal is inserted for every x subcarriers in a frequency domain corresponding to the slot,

wherein, x and y are positive integers, x is determined according to subcarrier spacing, and y is determined according to the subcarrier spacing;
wherein the reference signal is a reference signal for Multicast and/or broadcast.

51. A resource allocation method, applied to a terminal, comprising:

receiving configuration information sent by a network side device, wherein the configuration information is used to indicate first symbol information and/or second symbol information in one slot, a first symbol is a symbol used to send unicast information, and a second symbol is a symbol used to send Multicast information and/or broadcast information;
the first symbol information includes a number of time symbols and/or a number of PRBs occupied by the first symbol;
the second symbol information includes a number of time symbols and/or a number of PRBs occupied by the second symbol.

52. The method according to claim 51, wherein the configuration information is also used to indicate that a column of reference signals are inserted for every y symbols in the slot; and/or, the configuration information is also used to indicate that a reference signal is inserted for every x subcarriers in a frequency domain corresponding to the slot, x and y are positive integers, x is determined according to subcarrier spacing, and y is determined according to the subcarrier spacing.

53. An information measurement method, applied to a terminal, comprising:

receiving resource configuration information sent by a network side device, wherein the resource configuration information is resource configuration information of a Multicast service and/or broadcast service of a neighboringcell;
measuring or not measure a resource corresponding to the resource configuration information.

54. The method according to claim 53, wherein the measuring or not measuring a resource corresponding to the resource configuration information comprises:

if the terminal only has a unicast service, not measuring the resource corresponding to the resource configuration information;
if the terminal only has a Multicast service and/or broadcast service, measuring the resource corresponding to the resource configuration information;
if the terminal has a unicast service and a Multicast service and/or a broadcast service, measuring the resource corresponding to the resource configuration information.

**55.** A network side device, comprising:

a first DCI sending module, configured to send a first downlink control information (DCI) scrambled by a first radio network temporary identifier (RNTI) to a terminal, the first DCI being used to indicate whether control information of a Multicast service and/or broadcast service is changed or related information is changed; or a second DCI sending module, configured to send a second DCI scrambled by a second RNTI to the terminal, the second DCI being used to indicate whether the control information of a Multicast service and/or broadcast service set is changed or related information is changed; wherein the control information includes configuration information of the Multicast service and/or broadcast service.

**56.** A terminal, comprising:
a first DCI receiving module, configured to receive a first DCI sent by a network side device and scrambled by a first RNTI, the first DCI being used to indicate whether the control information of one Multicast service and/or broadcast service is changed or related information is changed; or:

a second DCI receiving module, configured to receive a second DCI sent by the network side device and scrambled by a second RNTI, the second DCI is used to indicate whether the control information of a Multicast service and/or broadcast service set is changed or related information is changed; wherein the control information includes configuration information of the Multicast service and/or broadcast service.

**57.** A network side device, comprising:

a control information configuration module, configured to configure control information of a set of Multicast services and/or broadcast services for m Multicast services and/or broadcast services; in a cell where the m Multicast services and/or broadcast services are located, n Multicast services and/or broadcast services being in a Multicast area and/or broadcast area; the n Multicast services and/or broadcast services being configured with control information of k sets of Multicast services and/or broadcast services; wherein m, n, k are natural numbers greater than or equal to 1, m is less than or equal to n, and k is less than or equal to n.

**58.** A terminal, comprising:

a receiving occasion determination module, configured to determine monitoring occasion of physical downlink control channel (PDCCH) of one or more Multicast messages; an information receiving module, configured to receive Multicast information at the monitoring occasion of the PDCCH of the one or more Multicast messages; wherein, the monitoring occasion of the PDCCH of one Multicast message includes at least one slot; wherein, each slot included in the monitoring occasion of the PDCCH of one Multicast message includes at least one time symbol; wherein, the Multicast information includes at least one of the following:

DCI of a network scheduling Multicast service; DCI of configuration information of the network scheduling Multicast service; DCI of information of a control channel of the Multicast service; DCI of information of a control channel of the network scheduling Multicast service; DCI of scheduling information of the information of the control channel of the Multicast service; DCI of modification information of the control channel of the network scheduling Multicast service; DCI of the modification information of the control channel of the Multicast service; DCI of scheduling information of the modification information of the control channel of the Multicast service.

**59.** A network side device, comprising:

a Multicast information sending module, configured to send Multicast information at monitoring occasion of PDCCH of one or more Multicast messages;

wherein the monitoring occasion of the PDCCH of one Multicast message includes at least one slot;

wherein, each slot included in the monitoring occasion of the PDCCH of one Multicast message includes at least one time symbol;

wherein, the Multicast information includes at least one of the following:

DCI of a network scheduling Multicast service;
DCI of configuration information of the network scheduling Multicast service;
DCI of information of a control channel of the Multicast service;
DCI of information of a control channel of the network scheduling Multicast service;
DCI of scheduling information of the information of the control channel of the Multicast service;
DCI of modification information of the control channel of the network scheduling Multicast service;
DCI of the modification information of the control channel of the Multicast service;
DCI of scheduling information of the modification information of the control channel of the Multicast service.

60. A network side device, comprising:
a control information sending module, configured to, in a repetition period of control information of a Multicast service and/or broadcast service, send control information of n Multicast services and/or broadcast services to a terminal at intervals of t time domain units, wherein n and t are positive integers.

61. A terminal, comprising:
a control information receiving module, configured to receive control information of n Multicast services and/or broadcast services sent by a network side device at intervals of t time domain units in a repetition period of control information of a Multicast service and/or broadcast service, wherein n and t are positive integers.

62. A network side device, comprising:

a configuration information sending module, configured to send configuration information to a terminal, wherein the configuration information is used to indicate first symbol information and/or second symbol information in one slot, a first symbol is a symbol used to send unicast information, and a second symbol is a symbol used to send Multicast information and/or broadcast information;
the first symbol information includes a number of time symbols and/or a number of PRBs occupied by the first symbol;
the second symbol information includes a number of time symbols and/or the number of PRBs occupied by the second symbol.

63. A terminal, comprising:

a configuration information receiving module, configured to receive configuration information sent by a network side device, wherein the configuration information is used to indicate first symbol information and/or second symbol information in one slot, a first symbol is a symbol used to send unicast information, and a second symbol is a symbol used to send Multicast information and/or broadcast information;
the first symbol information includes a number of time symbols and/or a number of PRBs occupied by the first symbol;
the second symbol information includes a number of time symbols and/or a number of PRBs occupied by the second symbol.

64. A terminal, comprising:

a resource configuration information receiving module, configured to receive resource configuration information sent by a network side device, wherein the resource configuration information is resource configuration information of a Multicast service and/or broadcast service of a neighboring cell;
a measuring module, configured to measure or not measure a resource corresponding to the resource configuration information.

65. A network side device, comprising: a transceiver and a processor;
the transceiver is configured to send a first downlink control information (DCI) scrambled by a first radio network temporary identifier (RNTI) to a terminal, the first DCI being used to indicate whether control information of a Multicast service and/or broadcast service is changed or related information is changed; or:

the transceiver is configured to send a second DCI scrambled by a second RNTI to the terminal, the second DCI being used to indicate whether the control information of a Multicast service and/or broadcast service set is changed or related information is changed;

wherein the control information includes configuration information of the Multicast service and/or broadcast service.

66. A terminal, comprising: a transceiver and a processor;

the transceiver is configured to receive a first DCI sent by a network side device and scrambled by a first RNTI, the first DCI being used to indicate whether the control information of one Multicast service and/or broadcast service is changed or related information is changed;or:

the transceiver is configured to receive a second DCI sent by the network side device and scrambled by a second RNTI, the second DCI is used to indicate whether the control information of a Multicast service and/or broadcast service set is changed or related information is changed;

wherein the control information includes configuration information of the Multicast service and/or broadcast service.

67. A network side device, comprising: a transceiver and a processor;

the processor is configured to configure control information of a set of Multicast services and/or broadcast services for m Multicast services and/or broadcast services;

in a cell where the m Multicast services and/or broadcast services are located, n Multicast services and/or broadcast services being in a Multicast area and/or broadcast area;

the n Multicast services and/or broadcast services being configured with control information of k sets of Multicast services and/or broadcast services;

wherein m, n, k are natural numbers greater than or equal to 1, m is less than or equal to n, and k is less than or equal to n.

68. A terminal, comprising: a transceiver and a processor;

the processor is configured to determine monitoring occasion of physical downlink control channel (PDCCH) of one or more Multicast messages;

the transceiver is configured to receive Multicast information at the monitoring occasion of the PDCCH of the one or more Multicast messages;

wherein, the monitoring occasion of the PDCCH of one Multicast message includes at least one slot;

wherein, each slot included in the monitoring occasion of the PDCCH of one Multicast message includes at least one time symbol;

wherein, the Multicast information includes at least one of the following:

DCI of a network scheduling Multicast service;

DCI of configuration information of the network scheduling Multicast service;

DCI of information of a control channel of the Multicast service;

DCI of information of a control channel of the network scheduling Multicast service;

DCI of scheduling information of the information of the control channel of the Multicast service;

DCI of modification information of the control channel of the network scheduling Multicast service;

DCI of the modification information of the control channel of the Multicast service;

DCI of scheduling information of the modification information of the control channel of the Multicast service.

69. A network side device, comprising: a transceiver and a processor;

the transceiver is configured to send Multicast information at monitoring occasion of PDCCH of one or more Multicast messages;

wherein the monitoring occasion of the PDCCH of one Multicast message includes at least one slot;

wherein, each slot included in the monitoring occasion of the PDCCH of one Multicast message includes at least one time symbol;

wherein, the Multicast information includes at least one of the following:

DCI of a network scheduling Multicast service;

DCI of configuration information of the network scheduling Multicast service;

DCI of information of a control channel of the Multicast service;

DCI of information of a control channel of the network scheduling Multicast service;

DCI of scheduling information of the information of the control channel of the Multicast service;

DCI of modification information of the control channel of the network scheduling Multicast service;

DCI of the modification information of the control channel of the Multicast service;

DCI of scheduling information of the modification information of the control channel of the Multicast service.

70. A network side device, comprising: a transceiver and a processor;

the transceiver is configured to, in a repetition period of control information of a Multicast service and/or broadcast service, send control information of n Multicast services and/or broadcast services to a terminal at intervals of t time domain units, wherein n and t are positive integers.

71. A terminal, comprising: a transceiver and a processor;

the transceiver is configured to receive control information of n Multicast services and/or broadcast services sent by a network side device at intervals of t time domain units in a repetition period of control information of a Multicast service and/or broadcast service, wherein n and t are positive integers.

72. A network side device, comprising: a transceiver and a processor;

the transceiver is configured to send configuration information to a terminal, wherein the configuration information is used to indicate first symbol information and/or second symbol information in one slot, a first symbol is a symbol used to send unicast information, and a second symbol is a symbol used to send Multicast information and/or broadcast information;

the first symbol information includes a number of time symbols and/or a number of PRBs occupied by the first symbol;

the second symbol information includes a number of time symbols and/or the number of PRBs occupied by the second symbol.

73. A terminal, comprising: a transceiver and a processor;

the transceiver is configured to receive configuration information sent by a network side device,

wherein the configuration information is used to indicate first symbol information and/or second symbol information in one slot, a first symbol is a symbol used to send unicast information, and a second symbol is a symbol used to send Multicast information and/or broadcast information;

the first symbol information includes a number of time symbols and/or a number of PRBs occupied by the first symbol;

the second symbol information includes a number of time symbols and/or a number of PRBs occupied by the second symbol.

74. A terminal, comprising: a transceiver and a processor;

the transceiver is configured to receive resource configuration information sent by a network side device, wherein the resource configuration information is resource configuration information of a Multicast service and/or broadcast service of a neighboring cell;

the transceiver is configured to measure or not measure a resource corresponding to the resource configuration information.

75. A network side device, comprising a memory, a processor, and a program stored in the memory and executed by the processor; the processor executes the program to implement the steps of the information communication method according to any one of claims 1 to 11, or the steps of the information configuration method according to any one of claims 22 to 26, or the steps of the information sending method according to any one of claims 34 to 43 or the steps of the information configuration method according to any one of claims 49 to 50.

76. A terminal, comprising a memory, a processor, and a program stored on the memory and executed by the processor; the processor executes the program to implement the steps of the information communication method according to any one of claims 12 to 21 or the steps of the information receiving method according to any one of claims 27 to 33 or the steps of the information receiving method according to any one of claims 44 to 48 or the steps of the information measurement method according to any one of claims 51 to 54.

77. A readable storage medium, on which a program is stored, and the program is executed by a processor to implement the steps in the method according to any one of claims 1 to 54.

| updated instruction | Updated information |
|---|---|

SC-MCCH modification period(n) | SC-MCCH modification period(n+1)

SC-MCCH repetition period

FIG. 1

Sending a first DCI scrambled by a first RNTI to a terminal, the first DCI being used to indicate whether control information of a Multicast service and/or broadcast service is changed or related information is changed — 21

FIG. 2

Sending a second DCI scrambled by a second RNTI to a terminal, the second DCI being used to indicate whether control information of a Multicast service and/or broadcast service set is changed or related information is changed — 31

FIG. 3

Receiving a first DCI sent by a network side device and scrambled by a first RNTI, the first DCI being used to indicate whether control information of a Multicast service and/or broadcast service is changed or related information is changed — 41

FIG. 4

Receiving a second DCI sent by a network side device and scrambled by a second RNTI, the second DCI being used to indicate whether control information of a Multicast service and/or broadcast service set is changed or related information is changed

— 51

FIG. 5

Configuring control information of a set of groupcast services and/or broadcast services for m Multicast services and/or broadcast services

— 61

FIG. 6

Determining monitoring occasion of PDCCH of one or more Multicast messages, and receiving Multicast information at the monitoring occasion of the PDCCH of the one or more Multicastcast messages

— 71

FIG. 7

Sending Multicast information at the monitoring occasion of the PDCCH of the one or more Multicast messages

— 701

FIG. 7a

Determining monitoring occasion of PDCCH of one or more Multicast messages, and receiving Multicast information at occasion of the Multicast message — 711

FIG. 7b

In a repetition period of control information of a Multicast service and/or broadcast service, sending control information of n Multicast services and/or broadcast services to a terminal at intervals of t time domain units — 81

FIG. 8

Receiving control information of n Multicast services and/or broadcast services sent by a network side device at intervals of t time domain units in a repetition period of control information of a Multicast service and/or broadcast service — 91

FIG. 9

sending configuration information to a terminal, wherein the configuration information is used to indicate a first symbol and/or a second symbol in a slot, the first symbol is used to send unicast information, and the second symbol is used to send Multicast information and/or broadcast information — 101

FIG. 10

receiving configuration information sent by a network side device, the configuration information is used to indicate first symbol and/or second symbol in a slot, the first symbol is used to send unicast information, and the second symbol is used to send Multicast information and/or broadcast information — 111

FIG. 11

Receiving resource configuration information sent by a network side device, the resource configuration information is resource configuration information of a Multicast service and/or broadcast service of a neighboring cell — 121

Measuring or not measuring a resource corresponding to the resource configuration information — 122

FIG. 12

131

first DCI sending module

network side device

130

FIG. 13

141

second DCI sending
module

140

network side device

FIG. 14

151

first DCI receiving module

150

terminal

FIG. 15

161

second DCI receiving module

160

terminal

FIG. 16

FIG. 17

FIG. 18

FIG. 18a

191

control information
sending module

network side device

190

FIG. 19

201

control information
receiving module

terminal

200

FIG. 20

211

configuration information
sending module

network side device

210

FIG. 21

221

resource configuration
information receiving
module

220

terminal

FIG. 22

231                    232

transceiver            processor

230

network side device

FIG. 23

241                    242

transceiver            processor

240

terminal

FIG. 24

FIG. 25

FIG. 25a

FIG. 25b

2521           2522

2520

| transceiver | processor |
|---|---|

network side device

FIG. 25c

261           262

260

| transceiver | processor |
|---|---|

terminal

FIG. 26

271           272

270

| transceiver | processor |
|---|---|

network side device

FIG. 27

281  282

| transceiver | | processor |

280

terminal

FIG. 28

291  292

| transceiver | | processor |

290

terminal

FIG. 29

301  302

| processor | | memory |

300

network side device

FIG. 30

311          312

processor          memory

terminal

310

FIG. 31

321          322

processor          memory

network side device

320

FIG. 32

331          332

processor          memory

terminal

330

FIG. 33

341    342

processor    memory

340

network side device

FIG. 34

351    352

processor    memory

350

terminal

FIG. 35

361    362

processor    memory

360

network side device

FIG. 36

371 372

processor | memory

370

terminal

FIG. 37

381 382

processor | memory

380

terminal

FIG. 38

## INTERNATIONAL SEARCH REPORT

| | International application No. |
|---|---|
| | **PCT/CN2021/110546** |

**A. CLASSIFICATION OF SUBJECT MATTER**

H04W 4/06(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPI, EPODOC, CNPAT, CNKI, 3GPP: MCCH, SC-MCCH, 更新, 改变, 变化, 通知, 组, 集, 监听, 检测, 重复周期, 单播, 符号, 相邻, 小区, 配置, 测量, PDCCH, DCI, change, update, notification, group, set, MBMS, monitor, repetition, period, MBSFN, unicast, symbol, neighbor, cell, measurement, configuration

**C. DOCUMENTS CONSIDERED TO BE RELEVANT**

| Category* | Citation of document, with indication, where appropriate, of the relevant passages | Relevant to claim No. |
|---|---|---|
| X | CN 102035807 A (ZTE CORPORATION) 27 April 2011 (2011-04-27) description, paragraphs 55-98 | 1-22, 27-40, 55-59, 65-69, 75-77 |
| Y | CN 102035807 A (ZTE CORPORATION) 27 April 2011 (2011-04-27) description, paragraphs 55-98 | 23-26 |
| X | CN 106470400 A (ZTE CORPORATION) 01 March 2017 (2017-03-01) description, paragraphs 53-64 | 41-48, 60-61, 70-71, 75-77 |
| Y | CN 106470400 A (ZTE CORPORATION) 01 March 2017 (2017-03-01) description, paragraphs 53-64 | 23-26 |
| X | CN 107295640 A (ZTE CORPORATION) 24 October 2017 (2017-10-24) description paragraphs 160-165 | 49-52, 62-63, 72-73, 75-77 |
| X | CN 101772222 A (ZTE CORPORATION) 07 July 2010 (2010-07-07) description paragraphs 83-84 | 53-54, 64, 74, 76-77 |
| A | CN 107889063 A (ZTE CORPORATION) 06 April 2018 (2018-04-06) entire document | 1-77 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 October 2021** | **03 November 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/110546**

## C. DOCUMENTS CONSIDERED TO BE RELEVANT

| Category* | Citation of document, with indication, where appropriate, of the relevant passages | Relevant to claim No. |
|---|---|---|
| A | QUALCOMM INC. "Power Efficient SC-MCCH Monitoring" *3GPP TSG-RAN WG2 Meeting #92 R3-156589*, 20 November 2015 (2015-11-20), entire document | 1-77 |
| A | WO 2018059149 A1 (SHARP KABUSHIKI KAISHA) 05 April 2018 (2018-04-05) entire document | 1-77 |

Form PCT/ISA/210 (second sheet) (January 2015)

96

<div align="center">

**INTERNATIONAL SEARCH REPORT**
**Information on patent family members**

</div>

| International application No. |
| --- |
| **PCT/CN2021/110546** |

| Patent document cited in search report | | | Publication date (day/month/year) | Patent family member(s) | | | Publication date (day/month/year) |
| --- | --- | --- | --- | --- | --- | --- | --- |
| CN | 102035807 | A | 27 April 2011 | WO | 2010145177 | A1 | 23 December 2010 |
| CN | 106470400 | A | 01 March 2017 | WO | 2017028580 | A1 | 23 February 2017 |
| | | | | US | 2018249442 | A1 | 30 August 2018 |
| | | | | EP | 3337199 | A1 | 20 June 2018 |
| CN | 107295640 | A | 24 October 2017 | WO | 2017167245 | A1 | 05 October 2017 |
| CN | 101772222 | A | 07 July 2010 | | None | | |
| CN | 107889063 | A | 06 April 2018 | US | 2020137528 | A1 | 30 April 2020 |
| | | | | WO | 2018059562 | A1 | 05 April 2018 |
| WO | 2018059149 | A1 | 05 April 2018 | CO | 2019004130 | A2 | 10 July 2019 |
| | | | | MX | 2019003536 | A | 09 September 2019 |
| | | | | CN | 107872898 | A | 03 April 2018 |
| | | | | US | 2020037287 | A1 | 30 January 2020 |
| | | | | EP | 3522652 | A1 | 07 August 2019 |

Form PCT/ISA/210 (patent family annex) (January 2015)

**EP 4 195 712 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010785850